(19) Europäisches Patentamt
European Patent Office
Office européen des brevets

(11) **EP 3 688 928 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(21) Anmeldenummer: **18783371.0**

(22) Anmeldetag: **20.09.2018**

(51) Int Cl.:
**H04L 9/32** *(2006.01)*

(86) Internationale Anmeldenummer:
**PCT/EP2018/075503**

(87) Internationale Veröffentlichungsnummer:
**WO 2019/057832 (28.03.2019 Gazette 2019/13)**

(54) **DATACULESTRUKTUR UND VERFAHREN ZUM MANIPULATIONSSICHEREN SPEICHERN VON DATEN**

DATACULE STRUCTURE AND METHOD FOR THE MANIPULATION-PROOF SAVING OF DATA

STRUCTURE DE BLOCS DE DONNÉES ET PROCÉDÉ DE STOCKAGE DE DONNÉES PROTÉGÉ CONTRE DES MANIPULATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2017 DE 102017216974**

(43) Veröffentlichungstag der Anmeldung:
**05.08.2020 Patentblatt 2020/32**

(73) Patentinhaber: **Bundesdruckerei GmbH**
**10969 Berlin (DE)**

(72) Erfinder:
• **WILKE, Andreas**
**13509 Berlin (DE)**
• **PAESCHKE, Manfred**
**16348 Wandlitz (DE)**
• **KOMAROV, Ilya**
**13507 Berlin (DE)**

(74) Vertreter: **Richardt Patentanwälte PartG mbB**
**Wilhelmstraße 7**
**65185 Wiesbaden (DE)**

(56) Entgegenhaltungen:
DE-A1-102016 224 533

• **Satoshi Nakamoto: "Bitcoin: A Peer-to-Peer Electronic Cash System", , 31. Oktober 2008 (2008-10-31), Seiten 1-9, XP055387899, Gefunden im Internet: URL:http://nakamotoinstitute.org/static/docs/bitcoin.pdf [gefunden am 2017-07-04] in der Anmeldung erwähnt**
• **Bundesdruckerei Gmbh: "Blockchain - Verbesserungspotential der Technologie", Berlin Innovations, 12. April 2018 (2018-04-12), XP055530893, Gefunden im Internet: URL:https://www.bafin.de/SharedDocs/Downloads/DE/Veranstaltung/dl_180410_BaFinTech_2018_WS3_2.pdf?__blob=publicationFile&v=3 [gefunden am 2018-12-06]**
• **David Schwartz ET AL: "Ripple Labs Inc, 2014 The Ripple Protocol Consensus Algorithm", , 1. Januar 2014 (2014-01-01), XP055468556, Gefunden im Internet: URL:https://ripple.com/files/ripple_consensus_whitepaper.pdf [gefunden am 2018-04-19]**

**Beschreibung**

Die Erfindung betrifft ein Verfahren und ein elektronisches Datenspeichersystem zum Speichern von Daten. Insbesondere betrifft die Erfindung ein Verfahren und ein elektronisches Datenspeichersystem zum manipulationssicheren Speichern von Daten in einer Datenblockstruktur.

Ein sicheres Speichern digital codierten Daten, wobei die digital codierten Daten effektiv gegen mögliche Veränderungen oder gar gezielten Manipulationen geschützt werden stellt eine technische Herausforderung dar.

Aus dem Stand der Technik sind beispielsweise Blockchains, auch Blockketten, zur Sicherung von Daten bekannt. Beispielsweise werden solche Blockchains verwendet, um Transaktionen von Kryptowährungen, etwa in dem Bitcoin-Zahlungssystem, zu protokollieren.

Eine Blockchain stellt dabei eine erweiterbare Liste von Datensätzen bereit, welche in Blöcken bzw. Datenblöcken angeordnet sind. Die Integrität der einzelnen Datenblöcke wird im Stand der Technik durch eine unidirektionale Verkettung unter Verwendung kryptographischer Prüfwerte der einzelnen Datenblöcke in Form von Hashwerten gesichert. Dadurch, dass jeder Datenblock eine kryptographische Prüfwert des vorangehenden Datenblocks inklusive des in dem vorangehenden Datenblock gespeicherten kryptographischen Prüfwerts umfasst, ergibt sich eine Verkettung der Blöcke. Dabei umfasst jeder Datenblock einen Prüfwert, welcher auf den Inhalten aller vorangehenden Datenblöcke beruht. Somit ist es schwer, eine solche Blockchain nachträglich zu manipulieren, da hierzu nicht nur ein einzelner Datenblock manipuliert werden müsste, sondern alle nachfolgenden Blöcke, da der Prüfwert jedes nachfolgenden Datenblocks unter anderem auf dem Prüfwert des zu manipulierenden Datenblocks beruht. Wird ein Datenblock tatsächlich manipuliert, so ändert sich sein Prüfwert. Dieser geänderte Prüfwert passt nicht mehr zu den Prüfwerten der nachfolgenden Datenblöcke, wodurch die Manipulation erkennbar wird und bei einer Prüfung mittels der Prüfwerte auffällt.

Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde beispielsweise im Jahre 2008 in einem White Paper unter dem Pseudonym Satoshi Nakamoto im Kontext der Kryptowährung Bitcoin beschrieben ("Bitcoin: Peer-to-Peer Electronic Cash System" (https://bitcoin.org/bitcoin.pdf)). In diesem Ausführungsbeispiel enthält jeder Block der Blockchain in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke nicht möglich ist, ohne auch alle nachfolgenden Blöcke ebenfalls zu modifizieren.

Der Erfindung liegt die Aufgabe zugrunde, ein verbessertes Verfahren zum manipulationssicheren Speichern von Daten zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Im Falle bekannter Blockchains werden Datenblöcke in Form einer linearen Kettenstruktur miteinander verkettet bzw. verknüpft. Eine Verkettung erfolgt dabei jeweils unidirektional zwischen der Reihenfolge nach direkt aufeinanderfolgenden Datenblöcken. Unidirektional ist die Verkettung, da jeweils in den nachfolgenden Datenblock ein Hashwert der Daten des der Reihenfolge nach direkt vorangehenden Datenblocks gespeichert wird. Werden die Daten des entsprechenden vorangehenden Datenblocks verändert, so passt der in dem nachfolgenden Datenblock gespeicherte Hashwert nicht mehr zu den Daten des entsprechenden vorangehenden Datenblocks. Somit kann anhand des Hashwerts des nachfolgenden Datenblocks die Datenintegrität des vorangehenden Datenblocks geprüft werden, aber nicht anderes herum. Mit anderen Worten kann der nachfolgende Datenblock beliebig verändert werden, ohne dass dies Einfluss auf die Verkettung mit dem direkt vorangehenden Datenblock hat, solange der gespeicherte Hashwert unverändert bleibt.

Im Falle bekannter Blockchains wird der Hashwert eines ersten vorangehenden Datenblocks jeweils in dem der Reihenfolge nach direkt nachfolgenden Datenblock gespeichert. Somit ist der Hashwert direkt nachfolgenden Datenblock sowie aller weiteren der Reihenfolge nach nachfolgenden Datenblöcke von dem Hashwert des ersten vorangehenden Datenblocks abhängig. Um die Daten des ersten vorangehenden Datenblocks erfolgreich zu manipulieren, müssten daher auch die Hashwerte aller nachfolgenden Datenblöcke ebenfalls manipuliert werden. Somit steigt die Sicherheit eines Datenblocks, je größer die Anzahl der nachfolgenden Datenblöcke ist, da mit der Anzahl der nachfolgenden Datenblöcke der notwendige Manipulationsaufwand steigt. Dies führt jedoch dazu, dass das Sicherheitsniveau der Datenblöcke positionsabhängig ist und daher sehr unterschiedlich sein kann. Beispielsweise kann der letzte Block einer Blockchain manipuliert werden, ohne dass dieser durch andere Datenblöcke dagegen geschützt ist.

Schließlich ist bei bekannten Blockchains keine Möglichkeit vorgesehen Daten zu ändern. Insbesondere ist keine Möglichkeit vorgesehen Datenblöcke zu löschen. Ist ein Datenblock einmal zu einer Blockchain hinzugefügt, so vertrauen alle Nutzer darauf, dass dieser nicht wieder geändert wird. Hierzu werden neue Datenblöcke für Blockchains, etwa im Fall der Kryptowährung Bitcoin, in einem rechenintensiven Prozess erzeugt, dem sog. Mining.

Praktisch die gesamte Rechenleistung des Bitcoin-Netzwerks entfällt beim Mining auf das Lösen einer kryptographischen Aufgabe, den Proof-of-Work. Damit soll sichergestellt werden, dass das Erzeugen gültiger Blöcke mit einem gewissen Aufwand verbunden ist, so dass eine nachträgliche Modifikation der Blockkette, wie bspw. beim Szenario eines 51-%-Angriffs, praktisch ausgeschlossen werden kann. Der Proof-of-Work besteht bei Bitcoin darin, einen Hashwert zu finden, der unterhalb eines bestimmten Schwellwerts liegt. Der Schwellwert ist umgekehrt proportional zur Mining-Schwierigkeit. Durch den Schwellwert kann der Aufwand zum Lösen des Proof-of-Work geregelt werden, denn je niedriger dieser Wert ist, umso unwahrscheinlicher ist es, einen passenden Hash zu finden.

Gemäß bekannten Blockchains haben einzelne Datenblöcke der Blockchain aufgrund der eindimensionalen, linearen Kettenstruktur entweder keinen (letzter Datenblock der Blockchain), einen (erster Datenblock der Blockchain) oder zwei benachbarte Datenblöcke (mittlerer Datenblock der Blockchain). Es ist strukturell aber ausgeschlossen, dass einer der Datenblöcke mehr als zwei benachbarte Datenblöcke haben kann.

Die vorliegende Erfindung stellt demgegenüber ein Verfahren zum manipulationssicheren Speichern von Daten bereit, welches es ermöglicht Datenblockstrukturen mit mehrdimensionalen Verkettungen bzw. Verknüpfungen zu erstellen und zu prüfen. Eine solche mehrdimensionale Datenblockstruktur wird im Folgenden auch als Datacule bzw. Dataculestruktur bezeichnet in Anlehnung an Moleküle (engl. "molecules") bzw. Molekülstrukturen. Als Analogie können Atome aus dem Periodensystem verwendet, deren Valenzen der Anzahl der Valenzelektronen entspricht. Um eine mehrfach verknüpfte Datenblockstruktur zu realisieren, werden Datenblöcke mit unterschiedlichen Valenzen definiert. Im vorliegenden bedeutet dies Datenblöcke mit Kontrollgruppen unterschiedlicher Größe, d.h. Anzahl von Datenblöcken. Eine solche Datenblockstruktur erlaubt eine höhere Flexibilität bei der Verknüpfung von Datenblöcke: Durch eine Definition von Datenblöcken mit unterschiedlichen Valenzen können somit hochgradig vernetzte Datacules realisiert werden. Diese können vorteilhafter Weise zur identitätssicheren Datenverteilung in verteilten IT-Systemen verwendet werden.

Unter einer Dataculestruktur wird hier und im Folgenden eine Datenblockstruktur verstanden, welche zumindest eine Gruppe von Datenblöcken umfasst, wobei alle Datenblöcke der entsprechenden Gruppe gegenseitig miteinander verknüpft sind durch gemeinsame kombinierte Funktion, welche eine Kombination von Einzelfunktionen aller Datenblöcke der entsprechenden Gruppe umfasst. Die Einzelfunktionen sind jeweils einem der Datenblöcke zugeordnet und von den in dem entsprechenden Datenblock gespeicherten Daten abhängig. Zur Sicherung gegen Manipulationen sind in der Dataculestruktur für jede der Einzelfunktionen der gemeinsamen kombinierten Funktion eindeutige kombinationsabhängige Koeffizienten gespeichert, wobei die gemeinsame kombinierte Funktion mit den eindeutigen kombinationsabhängigen Koeffizienten eine vordefinierte Bedingung, insbesondere eine Extremwertbedingung, erfüllt.

Das hier vorgeschlagene Verfahren ermöglicht es, dass einen Datenblock mit mehr als zwei benachbarten Datenblöcken zu verknüpfen. Zudem können die mehrdimensionalen Verknüpfungsmöglichkeiten die potentielle Sicherheit der miteinander verbundenen Datenblöcke erhöhen.

Ausführungsformen betreffen ein Verfahren zum manipulationssicheren Speichern von Daten in einem elektronischen Speicher unter Verwendung einer Datenblockstruktur, welche eine Mehrzahl von Datenblöcken umfasst, wobei jedem der Datenblöcke eine Funktion zugeordnet ist, welche von den in dem entsprechenden Datenblock gespeicherten Daten abhängige ist, wobei das Verfahren zum gegenseitigen Verknüpfen aller Datenblöcke einer ersten Gruppe von Datenblöcken, sodass jeder Datenblock der ersten Gruppe von allen anderen Datenblöcken der ersten Gruppe abhängig ist, umfasst:

- für die erste Gruppe von Datenblöcken:

  ◦ Bestimmen der Funktionen, welche den Datenblöcken der ersten Gruppe zugeordnet sind,
  ◦ Erstellen einer ersten Kombination aller Funktionen, welche den Datenblöcken der ersten Gruppe zugeordnet sind,
  ◦ Bestimmen eines kombinationsabhängigen Koeffizienten für jede Funktion der ersten Kombination, sodass die erste Kombination eine erste vordefinierte Bedingung erfüllt,

- für jeden Datenblock der ersten Gruppe:

  ◦ Bestimmen einer dem entsprechenden Datenblock zugeordneten Kontrollgruppe von Datenblöcken der ersten Gruppe,
  ◦ Speichern des Koeffizienten, welcher für die Funktion des entsprechenden Datenblocks bestimmt wurde, in allen Datenblöcken der Kontrollgruppe.

Unter einer Datenblockstruktur wird eine Datenstruktur verstanden, welche eine Mehrzahl von Datenblöcken umfasst. Insbesondere wird unter einer Datenblockstruktur eine Datenbank verstanden, deren Integrität, d.h. Sicherung gegen Manipulation, durch Speicherung von Koeffizienten einer Kombination von datenabhängigen Funktionen, welche den einzelnen Datenblöcken zugeordnet sind, kryptographisch gesichert ist. Die Funktionen sind dabei jeweils den in einem der Datenblöcke gespeicherten Daten zugeordnet und charakterisiert diese eindeutig. Beispielsweise umfassen die Funktionen jeweils einen Prüfwert der Daten, wie etwa einen Hashwert, als Parameter. Bei dem Hashwert kann es sich beispielsweise um einen mittels eines MD5, Sha-1 oder Sha-2 Hashalgorithmus berechneten Hashwert handeln.

Die Datenblockstruktur kann eine oder mehrere Gruppen von Datenblöcken umfassen. Die Datenblöcke einer ersten Gruppe der ein oder mehreren Gruppen von Datenblöcken können unter Verwendung des zuvor beschriebenen Verfahrens derart gegenseitig verknüpft werden, dass die von den Datenblöcken umfassten Daten manipulationssicher gespeichert werden. Bei einer Verknüpfung zwischen Datenblöcken handelt es sich um eine kryptographische Verknüpfung. Bei dieser kryptographischen Verknüpfung wird eine kryptographische Operation auf den jeweiligen Dateninhalt der miteinander zu verknüpfenden Datenblöcke angewandt. Bei einer gegenseitigen Verknüpfung wird die entsprechende kryptographische Operation auf alle miteinander zu verknüpfenden Datenblöcke angewandt.

In einem Datenblock können Daten gespeichert sein sowie ein oder mehrere Koeffizienten, welche die Integrität der gespeicherten Daten und/oder die Integrität von Daten weiterer Datenblöcke kryptographisch absichern.

Ein Prüfwert für Daten ist ein den entsprechenden Daten zugeordneter Wert, welcher die Daten derart eindeutig charakterisiert, dass die Integrität der Daten anhand des Prüfmerkwerts überprüft werden kann. Ein Prüfwert in Form einer Prüfsumme stellt beispielsweise einen Wert bereit, welcher aus den Ausgangsdaten berechnet wurde und dazu konfiguriert ist, zumindest einen Bitfehler in den Daten zu erkennen. Je nachdem wie komplex die Berechnungsvorschrift für die Prüfsumme ist, können mehr als ein Fehler erkannt oder auch korrigiert werden. Bekannte Prüfwerte bzw. Prüfsummen können beispielsweise auf einem Aussummieren von datenwerten, einer Berechnung einer Quersumme, eines Paritätsbit, eines gewichteten Mittelwerts der Daten oder auf komplexeren Berechnungsverfahren beruhen, wie etwa einer zyklischen Redundanzprüfung oder der Verwendung einer Hashfunktion. Die Funktionen, welche den Datenblöcken zugeordnet sind, umfassen beispielsweise Polynome und/oder Exponentialfunktionen. Beispielsweise werden die Funktionen in Form einer Funktionenschar bereitgestellt, aus welcher eine datenblockabhängige Funktion durch Verwendung eines datenblockabhängigen bzw. datenabhängigen Prüfwerts als Funktionsparameter erzeugt wird.

Eine Funktionenschar bezeichnet eine Mehrzahl von Funktionen, welche sich in mindestens einem Parameter unterscheiden. Bei den Funktionen kann es sich um ein- oder mehrdimensionale Funktionen handeln, d.h. die Funktionen können ein oder mehr Variablen umfassen. Beispielsweise unterscheiden sich die Funktionen in einem Parameter. Beispielsweise unterscheiden sich die Funktionen in n Parametern, wobei die n-Parameter ein n-Tupel bilden. Funktionen der Funktionenschar sind anhand der Parameter in denen sie sich unterscheiden eindeutig identifizierbar. Die Funktionen der Funktionenschar sind beispielsweise Elemente eines Funktionenraums und können durch ein Funktional, d.h. eine Funktion auf Funktionen, beschrieben werden.

Ein Parameter bezeichnet eine funktionsindividuelle Konstante, d.h. einen Wert der von Funktion zu Funktion der Funktionenschar variieren kann, für eine bestimmte Funktion aber stets festgelegt bzw. konstant ist. Bei einem Parameter kann es sich beispielsweise um einen Summanden, Minuenden, Subtrahenden, Faktor, Dividenden, Divisor oder Exponenten handeln.

Aus dem Stand der Technik ist bekannt, wie man mit Hilfe spezieller Funktionen, wie etwa Hashfunktionen, aus beliebigen Daten bzw. Informationen eine Zahl, d.h. einen Prüfwert, generiert. Nach Ausführungsformen können den Vorteil haben, aus den Daten der Datenblöcke nicht nur Zahlen, sondern analytische Funktionen generiert werden. Hierzu dienen die Zahlen beispielsweise als Zwischenergebnis, am Ende steht jedoch eine Kombination von datenblockabhängigen Funktionen zur kryptographischen Sicherung der gespeicherten Daten der Datenblockstruktur. Beispielsweise dienen die Funktionen als Verkettungsfunktionen beziehungsweise die für diese berechneten Koeffizienten als Identifikatoren für Verkettungsfunktionen von Datenblöcken, welche dazu verwendet werden können, die Integrität der entsprechenden Datenblöcke zu prüfen und zu belegen.

Die Kombination der Funktionen kann eine lineare Kombination, d.h. Linearkombination, der entsprechenden Funktionen umfassen. Eine entsprechende Linearkombination stellt eine Verbindung aller Datenblöcke der ersten Gruppe von Datenblöcke dar. Diese Verbindung kann als Zustandsfunktion einen Zustand der ersten Gruppe unter Berücksichtigung beschreiben. Diese Verbindung kann mit einer Verbindungsfunktion kombiniert werden, wobei der Zustand der Gruppe von der Verbindungsfunktion abhängig ist. An den Zustand der ersten Gruppe kann eine vordefinierte Bedingung gestellt werden. Bei dieser Bedingung handelt es sich beispielsweise um eine Extremwertbedingung, d.h. die erste Ableitung der ersten Kombination aller Funktionen, welche den Zustand der ersten Gruppe von Datenblöcken beschreibt, soll gleich null sein. Das daraus resultierende Gleichungssystem kann nach den Koeffizienten der einzelnen Funktionen der Datenblöcke der ersten Gruppe gelöst und die entsprechenden Koeffizienten können bestimmt werden. Bei den entsprechenden Koeffizienten handelt es sich beispielsweise um die Koeffizienten einer linearen Kombination der Funktionen, welche die Verbindung der Datenblöcke der ersten Gruppe bilden. Jedem Datenblock der ersten Gruppe ist eine Kontrollgruppe zugeordnet. Die so bestimmten Koeffizienten jedes Datenblocks werden in den Datenblöcken der Kontrollgruppe des entsprechenden Datenblocks gespeichert. Anhand der gespeicherten Koeffizienten kann die Integrität der Daten der Datenblöcke geprüft werden. Zu diesem Zweck kann beispielsweise geprüft werden, ob eine für die Datenblöcke der ersten Gruppe erstellte Kombination von Funktionen mit den gespeicherten Koeffizienten der Kontrollgruppen tatsächlich die erste vordefinierte Bedingung erfüllt. Sind die Daten in den Datenblöcken der ersten Gruppe unverändert, so erfüllt die Kombination die vordefinierte Bedingung mit den gespeicherten Koeffizienten.

Ausführungsformen können den Vorteil haben, dass die Daten aller Datenblöcke über die jeweiligen Funktionen in die Kombination der Koeffizienten, welche als Prüfkoeffizienten für die Integrität der entsprechenden Daten dienen können, mit eingehen. Wird der Dateninhalt auch nur eines der Datenblöcke geändert, so ändert sich die in dem entsprechenden Datenblock zugeordnete Funktion und mithin die Kombination aller Funktionen. Für eine geänderte Kombination ergeben sich geänderte Koeffizienten, für welche die Kombination die vordefinierte Bedingung erfüllt. Im Gegensatz zu bekannten Blockchains, umfasst die entsprechend erste Gruppe von Datenblöcken keinen einzigen Datenblock, welcher geändert werden könnte, ohne dass sich zugleich die Koeffizienten aller Funktionen, welche die erste vordefinierte Bedingung erfüllen, ändern würden.

Im Gegensatz zu bekannten Blockchains ermöglicht das vorliegende Verfahren für jeden Datenblock der ersten Gruppe jeweils eine Kontrollgruppe von Datenträgern mit einer frei wählbaren Anzahl festzulegen. In den Datenblöcken der jeweiligen Kontrollgruppe wird der Koeffizient der Funktion des Datenblocks gespeichert, welchem die Kontrollgruppe zugeordnet ist. Im Gegensatz zu bekannten Blockchains erfolgt das Speichern der Koeffizienten dabei nach der Berechnung der entsprechenden Koeffizienten, welche die kryptographische Verknüpfungen für die Gruppe implementieren. In bekannten Blockchains erfolgt dagegen die kryptographische Verknüpfung der Blöcke sukzessive der Reihe nach. Mit anderen Worten wird ein Hashwert für einen Block berechnet und in dem nachfolgenden Block gespeichert. Anschließend wird für den nachfolgenden Block ein Hashwert berechnet und in dem auf diesen folgenden Block gespeichert und so fort. Durch das Festlegen der Anzahl an Datenblöcken in der Kontrollgruppe eines bestimmten Datenblocks, wird die Anzahl der Verkettungen des entsprechenden Datenblocks festgelegt. Hierbei ist zu beachten, dass die berechneten Koeffizienten von den Dateninhalten aller Datenblöcke abhängig sind. Als eine Verkettung wird hier das Speichern eines kryptographischen Prüfwerts zum Prüfen der Datenidentität eines ersten Datenblocks in einem zweiten Datenblock verstanden. Unter einer Verknüpfung zwischen zwei Datenblöcken wird hier verstanden, dass eine Kombination von datenblockabhängigen Funktionen sowohl eine von den in dem ersten der beiden Datenblöcke gespeicherten Daten abhängige Funktion als auch eine von den in dem zweiten der beiden Datenblöcke gespeicherten Daten abhängige Funktion umfasst und kombinationsabhängige Koeffizienten für die Funktionen der entsprechenden Kombination in der Datenblockstruktur gespeichert sind. Eine Änderung der in dem ersten der beiden Datenblöcke gespeicherten Daten führt somit dazu, dass sich zumindest ein kombinationsabhängiger Koeffizient der von den in dem zweiten der beiden Datenblöcke gespeicherten Daten abhängige Funktion ändert.

Durch die Speicherung des Prüfwerts wird eine unidirektionale Verkettung zwischen dem ersten Datenblock und dem zweiten Datenblock implementiert. Durch einen zusätzlichen zweiten Prüfwert zum Prüfen der Datenintegrität des zweiten Datenblocks im ersten Datenblock wird eine bidirektionale Verkettung implementiert. Somit erlaubt es das vorliegende Verfahren durch das Festlegen der Anzahl an Datenblöcken, welche die Kontrollgruppen jeweils umfassen, die Anzahl von Verkettungen festzulegen. Je höher die Anzahl an Verkettungen eines Datenblocks ist, desto höher ist dessen Sicherheit, da im Falle einer versuchten Manipulation entsprechend viele Datenblöcke der Kontrollgruppe manipuliert werden müssten, welche den Koeffizienten als Prüfwert umfassen. Nach Ausführungsbeispielen können die Anzahlen der Datenblöcke in den Kontrollgruppen an das Sicherheitsniveau der Datenblöcke angepasst werden, welchen die Kontrollgruppen jeweils zugeordnet sind. Umfasst ein Datenblock Daten, welche einem niedrigen Sicherheitsniveau zugeordnet sind, so genügt eine geringe Anzahl an Datenblöcken in der Kontrollgruppe, z. B. ein oder zwei Datenblöcke. Im Fall von hochsensiblen Daten, für welche ein entsprechend hohes Sicherheitsniveau festgelegt ist, kann die Anzahl der Datenblöcke in der entsprechenden Kontrollgruppe deutlich höher gewählt werden, z. B. 10, 20, 50, 100, 1000.

Ferner erlaubt es das vorliegende Verfahren, Daten in Datenblöcken zu ändern, d.h. zu ergänzen, zu ersetzen und/oder zu löschen. Selbst ganze Datenblöcke können nach Ausführungsformen gelöscht werden. Im Falle einer Änderung von Daten in einem oder mehreren der Datenblöcke werden die Funktionen der entsprechenden Datenblöcke unter Berücksichtigung der Änderungen neu bestimmt bzw. geändert und aktualisierte Koeffizienten für alle Datenblöcke unter Berücksichtigung der geänderten Funktionen bestimmt, welche durch eine Kombination von Funktionen miteinander verbunden sind, die die geänderten Funktionen umfasst. Die gespeicherten Koeffizienten werden durch die aktualisierten Koeffizienten ersetzt oder im Fall eines Löschens von Datenblöcken werden die Koeffizienten der Funktionen der gelöschten Datenblöcke ebenfalls gelöscht. Die Sicherheit dieses Vorgehens kann dadurch gewährleistet werden, dass nur bestimmte Institutionen, z. B. die Eigentümer der Datenblöcke, schreibberechtigt für die Datenblöcke sind bzw. einem Speichern, Ersetzen und/oder Löschen von Koeffizienten in den Datenblöcken die Eigentümer der entsprechenden Datenblöcke jeweils zustimmen müssen. In letzterem Fall können Änderungen der Datenblockstruktur, sei es durch ein Hinzufügen neuer Datenblöcke, ein Löschen bestehender Datenblöcke und/oder ein Ändern bestehender Datenblöcke, nur bei Vorliegen einer entsprechenden Zustimmung erfolgen.

Aus den Daten $D_1$ eines ersten Blocks der Datenblockstruktur wird ein erster Prüfwert $n_1$, beispielsweise ein Hashwert berechnet. Dieser Prüfwert wird in eine Funktion einer Funktionenschar $\xi_k(x)$ mit $k \in \mathbb{N}$ als Parameter eingesetzt, wodurch eine datenblockabhängige Funktion $\xi_1(x)$ bestimmt wird, welche von den in dem entsprechenden Datenblock gespeicherten Daten $D_1$ abhängig und somit datenblockindividuell ist:

$$D_1 \rightarrow n_1 \rightarrow \xi_1(x)$$

In analoger Form werden datenblockabhängige Funktionen $\xi_2(x)$, ..., $\xi_N(x)$ für alle weiteren Datenblöcke einer Gruppe von N Datenblöcken bestimmt:

$$D_2 \rightarrow n_2 \rightarrow \xi_2(x)$$

$$\vdots$$

$$D_N \rightarrow n_N \rightarrow \xi_N(x)$$

Aus den datenblockabhängige Funktionen $\xi_1(x)$, ..., $\xi_N(x)$ wird eine Kombination $\Psi$ erstellt, beispielsweise eine Linearkombination:

$$\Psi = \sum_{i=1}^{N} \psi_i = \sum_{i=1}^{N} c_i\, \xi_i$$

Jeder der datenblockabhängigen Funktionen $\xi_i(x)$ ist ein kombinationsabhängiger Koeffizient $c_i$ zugeordnet.
Im Folgenden wird exemplarisch eine Linearkombination $\Psi$ von zwei datenblockabhängige Funktionen $\xi_1(x)$, $\xi_2(x)$ zweier Datenblöcke mit den Daten $D_1$ und $D_2$ betrachtet:

$$\Psi = \sum_{i=1}^{2} \psi_i = \sum_{i=1}^{2} c_i\, \xi_i = c_1\, \xi_1 + c_2\, \xi_2$$

Die Linearkombination $\Psi$ stellt eine Zustandsfunktion dar, welche den Zustand der beiden Datenblöcke beschreibt. In Analogie zu einem Hamiltonoperator eines Moleküls kann für ein Datacule aus der Linearkombination $\Psi$ unter Verwendung der Verbindungsfunktion $\hat{H}$, welche auf die Linearkombination $\Psi$ angewendet wird, die Kombination E bestimmt werden:

$$E = \frac{\langle\Psi|\hat{H}|\Psi\rangle}{\langle\Psi|\Psi\rangle} = \frac{\langle\sum_{i=1}^{2} c_i\, \xi_i\,|\hat{H}|\,\sum_{i=1}^{2} c_i\, \xi_i\rangle}{\langle\sum_{i=1}^{2} c_i\, \xi_i\,|\,\sum_{i=1}^{2} c_i\, \xi_i\rangle} = \frac{\sum_{i=1}^{N}\sum_{j=1}^{N} c_i\, c_j\, H_{ij}}{\sum_{i=1}^{N}\sum_{j=1}^{N} c_i\, c_j\, S_{ij}}$$

Bei der Verbindungsfunktion $\hat{H}$ kann es sich beispielsweise um eine Konstante (z.B. $V_0$), eine Ableitungsfunktion nach einer der Variablen der datenblockabhängige Funktionen (z.B. $\frac{\partial}{\partial x}$), eine lineare Funktion in einer der Variablen der datenblockabhängigen Funktionen (z.B. $x$), eine nichtlineare Funktion, wie etwa eine Polynomfunktion vom Grad $n > 1$ (z.B. $\frac{1}{2}kx^2$), oder eine Kombination aus den vorgenannten Varianten (z.B. $x\frac{\partial}{\partial x}$) handeln:

$$\hat{H} = V_0\,,$$

$$\hat{H} = x\,,$$

$$\hat{H} = \frac{\partial}{\partial x}\,,$$

$$\hat{H} = x\frac{\partial}{\partial x},$$

$$\hat{H} = \frac{1}{2}kx^2.$$

Ferner umfasst die vorgenannte exemplarische Definition der Kombination E die folgenden Abkürzungen $H_{ij}$, $S_{ij}$:

$$H_{ij} = \left\langle \xi_i \middle| \hat{H} \middle| \xi_j \right\rangle = \int dV\, \xi_i^*(x)\, \hat{H}\, \xi_j(x)$$

$$S_{ij} = \left\langle \xi_i \middle| \xi_j \right\rangle = \int dV\, \xi_i^*(x)\, \xi_j(x)$$

Im exemplarisch Falle einer Linearkombination $\Psi$ von zwei datenblockabhängige Funktionen ergibt sich für E in Abhängigkeit von den Koeffizienten $c_1$, $c_2$ der Linearkombination $\Psi$:

$$E(c_1,c_2) = \frac{c_1^* c_1 H_{11} + c_1^* c_2 H_{12} + c_2^* c_1 H_{21} + c_2^* c_2 H_{22}}{c_1^* c_1 S_{11} + c_1^* c_2 S_{12} + c_2^* c_1 S_{21} + c_2^* c_2 S_{22}}$$

Als vordefinierte Bedingung kann beispielsweise eine Extremwertbedingung festgelegt werden, aus welcher sich die Koeffizienten $c_1$, $c_2$ ergeben:

$$\frac{\partial E(c_1,c_2)}{\partial c_1} = \frac{\partial E(c_1,c_2)}{\partial c_2} \overset{!}{=} 0$$

$$\frac{\partial E(c_1,c_2)}{\partial c_1^*} = \frac{\partial E(c_1,c_2)}{\partial c_2^*} \overset{!}{=} 0$$

Daraus ergibt sich das folgende homogene Gleichungssystem:

$$\begin{pmatrix} H_{11} - E\,S_{11} & H_{12} - E\,S_{12} \\ H_{21} - E\,S_{21} & H_{22} - E\,S_{22} \end{pmatrix} \begin{pmatrix} c_1 \\ c_2 \end{pmatrix} \overset{!}{=} \begin{pmatrix} 0 \\ 0 \end{pmatrix}$$

Eine nichttriviale Lösung, d.h. $c_1 \neq 0$ und $c_2 \neq 0$, ergibt sich falls die Determinante verschwindet:

$$\begin{vmatrix} H_{11} - E\,S_{11} & H_{12} - E\,S_{12} \\ H_{21} - E\,S_{21} & H_{22} - E\,S_{22} \end{vmatrix} \overset{!}{=} 0,$$

mit anderen Worten, falls

$$(H_{11} - E\,S_{11})(H_{22} - E\,S_{22}) - (H_{21} - E\,S_{21})(H_{12} - E\,S_{12}) \overset{!}{=} 0.$$

Damit die Koeffizienten $c_1$, $c_2$ in diesem Fall eindeutig bestimmt sind, muss eine weitere Bedingung, wie etwa eine Normierung:

$$\sum_{i=1}^{N} c_i^2 \overset{!}{=} 1,$$

d.h.

$$c_1^2 + c_2^2 = 1$$

vorgegeben sein.

Im Folgenden wird beispielsweise eine Gruppe mit N Datenblöcke betrachtet, welchen jeweils eine datenabhängige, d.h. datenblockabhängige Funktion $\xi_i$ zugeordnet ist. Die Funktionen $\xi_i$ sind beispielsweise zwei- oder dreidimensionale Funktionen, welche über einen datenabhängigen Parameter von den Daten des jeweiligen Datenblocks abhängen. Die Funktionen $\xi_i$ bilden Basisfunktionen für die Zustandsfunktion $\Psi$ der Gruppe. Bei der Kombination der Funktionen $\xi_i$, der Zustandsfunktion $\Psi$, handelt es sich beispielsweise um eine Linearkombination von Basisfunktionen:

$$\Psi(x,y; c_i, \ldots, c_N) = \sum_{i=1}^{N} \psi_i(x,y),$$

$$\Psi(x,y,z; c_i, \ldots, c_N) = \sum_{i=1}^{N} \psi_i(x,y,z).$$

Den Basisfunktionen $\xi_i$ ist in der Kombination $\Psi$ jeweils ein Koeffizient $c_i$ zugeordnet:

$$\psi_i(x,y) = c_i \, \xi_i(x,y),$$

$$\psi_i(x,y,z) = c_i \, \xi_i(x,y,z).$$

Beispielsweise handelt es sich bei den Basisfunktionen $\xi_i$ um Gauß-Funktionen, d.h. Wahrscheinlichkeitsdichten von Normal- bzw. Gauß-Verteilungen. Im zweidimensionalen Fall sind die Basisfunktionen $\xi_i$ beispielsweise gegeben durch:

$$\xi_i(x,y) = e^{-\frac{1}{2}n_i \left[ \left(x - \frac{a_i}{2}\right)^2 + \left(y - \frac{b_i}{2}\right)^2 \right]},$$

wobei $n_i$ beispielsweise ein Parameter ist, welcher von den Daten $D_i$ des i-ten Datenblocks abhängt, während die Parameter $a_i$ und $b_i$ beispielsweise unabhängig von den Daten $D_i$ sind.

Im dreidimensionalen Fall sehen die Basisfunktion $\xi_i$ beispielsweise wie folgt aus:

$$\xi_i(x,y,z) = e^{-\frac{1}{2}n_i \left[ \left(x - \frac{a_i}{2}\right)^2 + \left(y - \frac{b_i}{2}\right)^2 + \left(z - \frac{d_i}{2}\right)^2 \right]}$$

mit dem datenabhängigen Parameter $n_i$ und den datenunabhängigen Parametern $a_i$, $b_i$ und $d_i$.

Als Verbindungsfunktion wird beispielsweise in 2D:

$$\widehat{H}(x,y) = x^2 + y^2$$

und in 3D:

$$\hat{H}(x,y,z) = x^2 + y^2 + z^2$$

gewählt.

Für N Datenblöcke ergibt sich

$$E(c_1, \ldots, c_N) = \frac{\langle \sum_{i=1}^{N} c_i\,\xi_i \,|\hat{H}|\, \sum_{i=1}^{N} c_i\,\xi_i \rangle}{\langle \sum_{i=1}^{N} c_i\,\xi_i \,|\, \sum_{i=1}^{N} c_i\,\xi_i \rangle} = \frac{\sum_{i=1}^{N}\sum_{j=1}^{N} c_i\,c_j\,H_{ij}}{\sum_{i=1}^{N}\sum_{j=1}^{N} c_i\,c_j\,S_{ij}},$$

wobei gelten muss

$$\begin{pmatrix} H_{11} - E\,S_{11} & \cdots & H_{1N} - E\,S_{1N} \\ \vdots & \ddots & \vdots \\ H_{N1} - E\,S_{N1} & \cdots & H_{NN} - E\,S_{NN} \end{pmatrix} \begin{pmatrix} c_1 \\ \vdots \\ c_N \end{pmatrix} \overset{!}{=} \begin{pmatrix} 0 \\ \vdots \\ 0 \end{pmatrix},$$

d.h. für eine nichttriviale Lösung:

$$\begin{vmatrix} H_{11} - E\,S_{11} & \cdots & H_{1N} - E\,S_{1N} \\ \vdots & \ddots & \vdots \\ H_{N1} - E\,S_{N1} & \cdots & H_{NN} - E\,S_{NN} \end{vmatrix} \overset{!}{=} 0.$$

Unter Verwendung folgender Abkürzungen:

$$\eta_{ij}^{a} = \frac{n_i\,a_i + n_j\,a_j}{2\,(n_i + n_j)}$$

$$Y_{ij}^{a} = \frac{n_i\,a_i^2 + n_j\,a_j^2}{4\,(n_i + n_j)} - \frac{(n_i\,a_i + n_j\,a_j)^2}{4\,(n_i + n_j)^2}$$

$$\omega_{ij} = n_i + n_j$$

ergibt sich für die Elemente $H_{ij}$, $S_{ij}$:

$$H_{ii} = \iint_{-\infty}^{\infty} dxdy\,\xi_i^2\,(x^2 + y^2) = \frac{\pi}{n_i^2} + \frac{\pi}{4n_i}\,(a_i^2 + b_i^2)$$

$$H_{ii} = \iiint_{-\infty}^{\infty} dxdydz\,\xi_i^2\,(x^2 + y^2 + z^2) = \frac{3}{2}\,\frac{\pi^{\frac{3}{2}}}{n_i^{\frac{5}{2}}} + \frac{1}{4}\,\left(\frac{\pi}{n_i}\right)^{\frac{3}{2}}\,(a_i^2 + b_i^2 + d_i^2)$$

$$S_{ii} = \iint_{-\infty}^{\infty} dxdy\,\xi_i^2 = \frac{\pi}{n_i}$$

$$S_{ii} = \iiint_{-\infty}^{\infty} dxdydz \; \xi_i^2 = \left(\frac{\pi}{n_i}\right)^{\frac{3}{2}}$$

$$H_{ij} = \iint_{-\infty}^{\infty} dxdy \; \xi_i \left(x^2+y^2+z^2\right) \xi_j = \left[\frac{4\pi}{\omega_{ij}^2} + \frac{2\pi}{\omega_{ij}} \left(\left(\eta_{ij}^a\right)^2 + \left(\eta_{ij}^b\right)^2\right)\right] e^{-\frac{1}{2}\omega_{ij}\left(\gamma_{ij}^a + \gamma_{ij}^b\right)}$$

$$H_{ij} = \iiint_{-\infty}^{\infty} dxdydz \; \xi_i \left(x^2+y^2+z^2\right) \xi_j = \left[\frac{3}{2} \, 2^{\frac{5}{2}} \, \frac{\pi^{\frac{3}{2}}}{\omega_{ij}^{\frac{5}{2}}} + 2^{\frac{3}{2}} \left(\frac{\pi}{\omega_{ij}}\right)^{\frac{3}{2}} \left(\left(\eta_{ij}^a\right)^2 + \left(\eta_{ij}^b\right)^2 + \left(\eta_{ij}^d\right)^2\right)\right]$$

$$e^{-\frac{1}{2}\omega_{ij}\left(\gamma_{ij}^a + \gamma_{ij}^b + \gamma_{ij}^d\right)}$$

$$S_{ij} = \iint_{-\infty}^{\infty} dxdy \; \xi_i \xi_j = \frac{2\pi}{\omega_{ij}} \, e^{-\frac{1}{2}\omega_{ij}\left(\gamma_{ij}^a + \gamma_{ij}^b\right)}$$

$$S_{ij} = \iiint_{-\infty}^{\infty} dxdydz \; \xi_i \xi_j = 2^{\frac{3}{2}} \left(\frac{\pi}{\omega_{ij}}\right) e^{-\frac{1}{2}\omega_{ij}\left(\gamma_{ij}^a + \gamma_{ij}^b + \gamma_{ij}^d\right)}$$

Mit diesen Lösungen kann die Gleichung für die Determinante und damit das homogene Gleichungssystem für die Koeffizienten $c_1$, ..., $c_N$ gelöst werden. Dabei können eindeutige Ergebnisse für die Koeffizienten erzielt werden unter Festlegung einer weiteren Bedingung an die Koeffizienten $c_1$, ..., $c_N$, wie beispielsweise eine Normierung:

$$\sum_{i=1}^{N} c_i^2 \overset{!}{=} 1.$$

Nach Ausführungsformen können den Koeffizienten $c_1$, ..., $c_N$, auch andere Werte zugeordnet sein, wie etwa $f\left(c_i^2\right) \overset{!}{=} w_i$ oder $\sum_{i=1}^{N} c_i^2 \overset{!}{=} w$ , wobei $w$, $w_i \in \mathbb{R}$ .

Nach Ausführungsformen umfassen die Kontrollgruppen jeweils alle Datenblöcke der ersten Gruppe bis auf den Datenblock, welchem sie zugeordnet sind.

Nach Ausführungsformen umfassen die Kontrollgruppen, welche den Datenblöcken einer ersten der Kontrollgruppen zugeordnet sind, jeweils den Datenblock, welchem die erste Kontrollgruppe zugeordnet ist. Ausführungsformen können den Vorteil haben, dass hierdurch bidirektionale Verkettungen zwischen dem Datenblock, dem die Kontrollgruppe zugeordnet ist, und jeweils jedem Datenblock, welchen die erste Kontrollgruppe umfasst, implementiert werden können.

Nach Ausführungsformen wird im Falle jeder Kontrollgruppe jeweils eine bidirektionale Verknüpfung zwischen dem Datenblock, welchem die entsprechende Kontrollgruppe zugeordnet ist, und jedem von der Kontrollgruppe umfassten Datenblock implementiert.

Nach Ausführungsformen umfasst die erste Gruppe drei oder mehr Datenblöcke. Ausführungsformen können den Vorteil haben, dass für eine beliebig große Anzahl an Datenblöcken über die in den entsprechenden Datenblöcken gespeicherten Daten ein kryptographisches Abhängigkeitsverhältnis durch die Kombination aller Funktionen, welche den Datenblöcken der ersten Gruppe zugeordnet sind, implementiert werden kann.

Nach Ausführungsformen umfasst zumindest eine der Kontrollgruppen drei oder mehr Datenblöcke. Ausführungsformen können den Vorteil haben, dass eine beliebige Anzahl an Verkettungen für die Datenblöcke der ersten Gruppe implementiert werden kann. Somit kann zum einen die Sicherheit der jeweiligen Datenblöcke individuell eingestellt werden, zum anderen können die Verkettungen auf inhaltlichen Beziehungen der Daten der miteinander verketteten Datenblöcke beruhen, und somit komplexe Datenstrukturen abbilden. Unter der Annahme, dass wichtige Daten eine hohen Grad an Abhängigkeit von anderen Daten bzw. einen großen Grad an Wechselbeziehungen mit anderen Daten aufweisen, kann durch das vorliegende

Verfahren in generischer Form mittels des Abbildens der Wechselbeziehungen der Daten durch die Verkettungen direkt ein an die entsprechenden Daten angepasstes Sicherheitsniveau implementiert werden. Mit je mehr Datenblöcken ein bestimmter Datenblock verkettet ist, desto höher ist das Sicherheitsniveau der Daten des entsprechenden Datenblocks.

Nach Ausführungsformen wird die Kombination unter Verwendung einer Verbindungsfunktion zum Verbinden aller den Datenblöcken der ersten Gruppe zugeordneten Funktionen erstellt. Ausführungsformen können den Vorteil haben, dass durch Verwendung der Verbindungsfunktion das kryptographische Sicherheitsniveau erhöht werden kann.

Nach Ausführungsformen umfasst die erste vordefinierten Bedingung eine Extremwertbedingung. Ausführungsformen können den Vorteil haben, dass durch eine Extremwertbedingung ein effektives und effizientes Verfahren zum Bestimmen von Koeffizienten für beliebige Dateninhalte bereitgestellt wird.

Nach Ausführungsformen ist die Anzahl der Datenblöcke, welche die erste Gruppe umfasst, abhängig von einem Sicherheitsniveau zumindest eines Datenblocks der ersten Gruppe. Ausführungsformen können den Vorteil haben, dass durch die Wahl der Anzahl von Datenblöcken der ersten Gruppe die kryptographische Sicherheit, mit welcher die Datenblöcke der ersten Gruppe gesichert werden, an das Sicherheitsniveau des zumindest einen Datenblocks angepasst werden kann. Nach Ausführungsformen ist die Anzahl der Datenblöcke vom Sicherheitsniveau aller Datenblöcke der ersten Gruppe abhängig. Beispielsweise kann für einen vorgegebenen Datenblock sichergestellt werden, dass die Anzahl der Datenblöcke in der Gruppe, welcher der entsprechende Datenblock zugeordnet wird, einem für den entsprechenden Datenblock festgelegen Sicherheitsniveau entspricht, z. B. proportional zu diesem ist.

Nach Ausführungsformen erfolgt eine Zuordnung der Datenblöcke zu der ersten Gruppe unter Verwendung eines ersten Zuordnungskriteriums. Nach Ausführungsformen umfasst das erste Zuordnungskriterium eine Zuordnung der Inhalte der entsprechenden Datenblöcke zu einer gemeinsamen Inhaltskategorie, eine Zuordnung der Inhalte der entsprechenden Datenblöcke zu einem gemeinsamen Sicherheitsniveau, eine Zuordnung der Eigentümer der entsprechenden Datenblöcke zu einem gemeinsamen Eigentümergruppe, eine Zuordnung der Inhalte der entsprechenden Datenblöcke zu einem Abhängigkeitsverhältnis und/oder eine Zuordnung der Eigentümer der entsprechenden Datenblöcke zu einem Abhängigkeitsverhältnis.

Ausführungsformen können den Vorteil haben, dass die Zuordnung der Datenblöcke der Datenblockstruktur zu einer oder mehreren Gruppen beispielsweise auf Gemeinsamkeiten oder Abhängigkeiten der Dateninhalte der entsprechenden Datenblöcke beruhen kann. Somit kann die Gruppeneinteilung eine logische Struktur der Daten wiedergeben. Dies kann vorteilhaft sein, da somit für inhaltlich zusammenhängende Datenblöcke auch eine kryptographische Abhängigkeit bzw. Sicherung implementiert werden kann. Ferner kann eine Gruppenzuordnung der Datenblöcke vorteilhaft sein im Hinblick auf die Koeffizientenspeicherung in den Kontrollgruppen. Erfordert eine Speicherung der Koeffizienten in den Datenblöcken der Kontrollgruppen jeweils eine Zustimmung des Eigentümers des entsprechenden Datenblocks zu der Speicherung, kann es vorteilhaft sein, dass die Gruppe bestimmten Eigentümern zugeordnet ist. Beispielsweise können die Eigentümer verantwortlich für die entsprechenden Daten sein und/oder einem gleichen oder höheren Sicherheitsniveau zugeordnet sein. Letzteres kann beispielsweise vorteilhaft sein, wenn kryptographisch verschlüsselte Daten in den Datenblöcken gespeichert werden, auf welche nur Personen oder Institutionen mit einer Freigabe für ein bestimmtes Sicherheitsniveau Zugriff haben. In diesem Fall können nur ausgewählte Eigentümer Zugriff auf die entschlüsselten Daten haben und somit zu einer Überprüfung der Datenintegrität in die Lage versetzt sein.

Im Hinblick auf die Zustimmung zum Speichern können inhaltliche Übereinstimmungen bzw. Abhängigkeiten der Datenblöcke ebenfalls von Vorteil sein, da somit für die Zustimmung Eigentümer von Datenblöcken zuständig sind, welche inhaltlich verwandte Daten umfassen und somit für die Eingabe der Koeffizientenspeicherung geeignet sind. Die Koeffizientenspeicherung entspricht dabei einer Freigabe bzw. Zustimmung zu der von der ersten Gruppe umfassten und implementierten Datenstruktur.

Nach Ausführungsformen ist die Anzahl der Datenblöcke, welche die Kontrollgruppen jeweils umfassen, abhängig ist von einem Sicherheitsniveau des Datenblocks, welchem die entspreche Kontrollgruppe zugeordnet.

Nach Ausführungsformen erfolgt die Bestimmung der Datenblöcke, welche die Kontrollgruppen jeweils umfassen, unter Verwendung eines zweiten Zuordnungskriteriums. Nach Ausführungsformen umfasst das zweite Zuordnungskriterium eine Zuordnung der Inhalte der entsprechenden Datenblöcke zu einer gemeinsamen Inhaltskategorie, eine Zuordnung der Inhalte der entsprechenden Datenblöcke zu einem gemeinsamen Sicherheitsniveau, eine Zuordnung der Eigentümer der entsprechenden Datenblöcke zu einem gemeinsamen Eigentümergruppe, eine Zuordnung der Inhalte der entsprechenden Datenblöcke zu einem Abhängigkeitsverhältnis und/oder eine Zuordnung der Eigentümer der entsprechenden Datenblöcke zu einem Abhängigkeitsverhältnis.

Nach Ausführungsformen ist jedem Datenblock zumindest ein Eigentümer zugeordnet und das Speichern der Koeffizienten in den Datenblöcken setzt jeweils eine Zustimmung des zumindest einen Eigentümers des entsprechenden Datenblocks voraus. Ausführungsformen können den Vorteil haben, dass eine Zustimmung des Eigentümers des Datenblocks zum Speichern eines Koeffizienten in dem entsprechenden Datenblock einer Zustimmung des Eigentümers zu der von der ersten Gruppe von Datenblöcken umfassten Datenstruktur entspricht. Insbesondere stellt die Zustimmung des Eigentümers eine Zustimmung zu dem Koeffizienten und damit zu den Daten, welche der Funktion zugrunde liegen für welche der Koeffizient berechnet wurde. Mit anderen Worten bestätigt der Eigentümer mit seiner Zustimmung zum Speichern des Koeffizienten zum einen die Korrektheit des Koeffizienten und damit des angewendeten kryptographischen Sicherungsverfahrens zum Sichern der Datenblöcke der ersten Gruppe. Zum anderen zeigt der Eigentümer mit seiner Zustimmung zur Speicherung des Koeffizienten sein Einverständnis mit den Daten des Datenblocks an, für dessen Funktion der entsprechende Koeffizient bestimmt wurde.

Beispielsweise umfasst ein Datenblock als Daten die Anschrift eines Nutzers. Ändert sich die Anaschrift, so ändert sich die dem Datenblock mit der Anschrift zugeordnete Funktion. Falls der Nutzer seine Anschrift nach einem Umzug ändern möchte, muss der aus der geänderten Funktion resultierende geänderte Koeffizient beispielsweise in einem Datenblock einer Kontrollgruppe gespeichert werde, dessen Eigentümer eine für die neue Anschrift zuständige Meldebehörde oder die Post ist. Die Meldebehörde oder Post stimmen der Speicherung nur zu, wenn ein offizieller Antrag für eine Adressänderung vorliegt. Weitere Dienstleister, wie etwa ein Versanddienstleiter, die Bahn, eine Fluggesellschaft, etc. können zukünftig die geänderte Anschrift verwenden, um für den Nutzer ihre Dienstleistungen zu erbringen. Dabei können sie auf die Korrektheit der geänderten Adresse vertrauen, da diese Änderung beispielsweise unter Zustimmung der Meldebehörde bzw. Post erfolgt ist.

Nach Ausführungsformen umfasst die Zustimmungen jeweils eine Signatur des entsprechenden Koeffizienten mit einem privaten Signaturschlüssel des Eigentümers des Datenblocks, zu welchem der Koeffizient hinzugefügt werden soll. Ausführungsformen können den Vorteil haben, dass durch die Signatur die Zustimmung des entsprechenden Eigentümers zu dem entsprechenden Koeffizienten in kryptographisch gesicherter und nachprüfbarer Weise erfolgen kann.

Nach Ausführungsformen handelt es sich bei dem Signaturschlüssel um einen privaten kryptographischen Schlüssel eines asymmetrischen Schlüsselpaars. Das asymmetrische Schlüsselpaar umfasst beispielsweise ferner einen Signaturprüfschlüssel in Form eines dem privaten kryptographischen Schlüssel zugeordneten öffentlichen kryptographischen Schlüssels zum Prüfen der mit dem Signaturschlüssel erstellten Signaturen. Beispielsweise wird der Signaturschlüssel in einem geschützten Speicherbereich eines Speichers eines dem Eigentümer des Datenblocks zugeordneten Computersystems gespeichert.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Eigentümer bzw. Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, wird beispielsweise auf eine Public-Key-Infrastruktur zurückgegriffen, die die Gültigkeit der verwendeten Schlüssel durch Zertifikate bestätigt.

Das Erstellen einer digitalen Signatur, im Folgenden auch lediglich als "Signatur" bezeichnet, ist ein kryptographisches Verfahren, bei dem zu beliebigen Daten, zum Beispiel einem Koeffizienten, ein weiterer Datenwert, welcher als "Signatur" bezeichnet wird, berechnet wird. Die Signatur kann zum Beispiel ein verschlüsselter Hashwert des Koeffizienten sein, insbesondere ein Hashwert, welcher mit einem privaten Schlüssel eines kryptographischen Schlüsselpaares verschlüsselt ist, das einem Zertifikat zugeordnet ist. Die Besonderheit einer solchen Signatur besteht darin, dass deren Urheberschaft und Zugehörigkeit zu einer bestimmten Person oder Instanz durch jeden Dritten geprüft werden kann.

Nach Ausführungsformen besitzen die Eigentümer der Datenblöcke jeweils ein ausschließliches Schreibrecht zum Hinzufügen von Daten zu den jeweiligen Datenblöcken. Ausführungsformen können den Vorteil haben, dass sichergestellt werden kann, dass tatsächlich eine Zustimmung der Eigentümer zu dem Speichern der Koeffizienten vorliegt. Wenn durch die zuvor beschriebenen Sicherungsmechanismen zur Sicherstellung, dass nur Koeffizienten in die Datenblöcke gespeichert werden, für welche eine Zustimmung des zuständigen Eigentümers bzw. der zuständigen Instanzen vorliegt, kann die Sicherheit des Verfahrens erhöht werden.

Nach Ausführungsformen umfasst das Verfahren zum Prüfen der Datenintegrität eines der Datenblocks der ersten Gruppe von Datenblöcken ferner:

 o Bestimmen der Funktionen, welche den Datenblöcken der ersten Gruppe zugeordnet sind,
 o Erstellen der ersten Kombination aller Funktionen, welche den Datenblöcken der ersten Gruppe zugeordnet sind,

o Bestimmen des kombinationsabhängigen Koeffizienten für die Funktion des zu prüfenden Datenblocks als Prüfkoeffizient, sodass die erste Kombination die erste vordefinierte Bedingung erfüllt,
o Vergleichen des Prüfkoeffizienten mit den in den Datenblöcken der Kontrollgruppe des zu prüfenden Datenblocks für die Funktion des entsprechenden Datenblocks gespeicherten Koeffizienten,
o falls ein vordefiniertes Übereinstimmungskriterium zwischen dem Prüfkoeffizienten und den gespeicherten Koeffizienten erfüllt ist, Bestätigen der Datenintegrität des zu prüfenden Datenblocks.

Ausführungsformen können den Vorteil haben, dass sie eine effiziente und effektive Überprüfung der Datenintegrität eines oder mehrerer Datenblöcke der ersten Gruppe erlauben. Insbesondere erlaubt das Verfahren eine gleichzeitige Überprüfung der Datenintegrität aller Datenblöcke der ersten Gruppe.

Nach Ausführungsformen ist das vordefinierte Übereinstimmungskriterium erfüllt, falls eine Identität zwischen dem Prüfkoeffizienten und zumindest einem der gespeicherten Koeffizienten besteht. Ausführungsformen können den Vorteil haben, dass das Übereinstimmungskriterium beispielsweise eine Identität zwischen dem Prüfkoeffizienten und einer bestimmten Mindestanzahl an gespeicherten Koeffizienten erfordert. Somit kann die Datenintegrität selbst dann bestätigt werden, wenn einzelne Eigentümer ihre Zustimmung zu dem Speichern der Koeffizienten nicht erteilt haben, beispielsweise aufgrund von technischen Schwierigkeiten bzw. erlaubt dies eine zeitliche sukzessive Zustimmung zu den Koeffizienten, ohne dass dadurch die Arbeitsfähigkeit des Systems blockiert wird. Dies kann beispielsweise vorteilhaft sein, wenn Eigentümer einzelner Datenblöcke und/oder einzelne Datenblöcke nicht erreichbar sind, beispielsweise im Falle einer verteilten Speicherung der Datenblöcke auf verschiedenen Speichersystemen und/oder im Falle einer teilweisen Beschädigung der gespeicherten Datenblöcke.

Nach Ausführungsformen ist das vordefinierte Übereinstimmungskriterium erfüllt, falls die Identität zwischen dem Prüfkoeffizienten und allen gespeicherten Koeffizienten besteht. Ausführungsformen können den Vorteil haben, dass ein maximales Maß an Sicherheit bei der Überprüfung der Datenblöcke gewährleistet werden kann. Je größer die Anzahl der gespeicherten Koeffizienten, desto größer kann das resultierende Maß an Sicherheit sein.

Nach Ausführungsformen wird die Datenintegrität aller Datenblöcke der ersten Gruppe geprüft.

Nach Ausführungsformen umfasst das Verfahren zum Prüfen der Datenintegrität der Datenblöcke der ersten Gruppe von Datenblöcken ferner:

o Bestimmen der Funktionen, welche den Datenblöcken der ersten Gruppe zugeordnet sind,
o Erstellen der ersten Kombination aller Funktionen, welche den Datenblöcken der ersten Gruppe zugeordnet sind,
o Prüfen, ob die erstellte erste Kombination mit den in den Datenblöcken der Kontrollgruppen der ersten Gruppe gespeicherten Koeffizienten die erste vordefinierte Bedingung erfüllt,
o falls die erste vordefinierte Bedingung erfüllt ist, Bestätigen der Datenintegrität der Datenblöcke der ersten Gruppe.

Ausführungsformen können vorteilhaft sein, da sie ein effizientes und effektives Verfahren zum Überprüfen der Datenintegrität bereitstellen.

Nach Ausführungsformen wird die Prüfung der Datenintegrität vor einem Auslesen von Daten aus ein oder mehreren Datenblöcken der ersten Gruppe zumindest für die Datenblöcke ausgeführt, aus welchen Daten ausgelesen werden. Ausführungsformen können den Vorteil haben, dass durch eine automatisierte Überprüfung der Datenintegrität vor einem Auslesen von Daten aus einem der Datenblöcke der ersten Gruppe sichergestellt werden kann, dass die ausgelesenen Daten nicht manipuliert sind.

Nach Ausführungsformen umfasst das Verfahren ferner:

o Ändern der Daten eines Datenblocks der ersten Gruppe,
o Bestimmen einer aktualisierten Funktion, welche dem geänderten Datenblock zugeordnet und von den geänderten Daten des geänderten Datenblocks abhängig ist,
o Erstellen einer aktualisierten Kombination aller Funktionen, welche den Datenblöcken der ersten Gruppe zugeordnet sind, wobei die aktualisierte Kombination für den geänderten Datenblock die aktualisierte Funktion umfasst,
o Bestimmen eines aktualisierten kombinationsabhängigen Koeffizienten für jede Funktion der aktualisierten Kombination, sodass die aktualisierte Kombination die erste vordefinierte Bedingung erfüllt,
o Ersetzen der in den Datenblöcken der Kontrollgruppen der ersten Gruppe gespeicherten Koeffizienten, welche für die erste Kombination bestimmt wurden, jeweils durch einen aktualisierten Koeffizienten, welcher für die aktualisierte Kombination bestimmt wurde.

Ausführungsformen können den Vorteil haben, dass das vorliegende Verfahren ein Ändern von Daten in den Datenblöcken ermöglicht. Zugleich bleibt die kryptographisch gesicherte Integrität der Daten weiterhin gewährleistet. Insbesondere kann durch das Erfordernis einer Zustimmung zum Speichern von Koeffizienten sichergestellt werden, dass nur zulässige Änderungen an den Daten vorgenommen werden und entsprechende Datenänderungen keine unrechtmäßigen Manipulationen der Daten darstellen.

Nach Ausführungsformen umfasst das Verfahren ferner:

- o Bestimmen eines zu löschenden Datenblocks der ersten Gruppe,
- o Löschen der Koeffizienten der Funktion des zu löschenden Datenblocks in den Datenblöcken der Kontrollgruppen des zu löschenden Datenblocks,
- o Löschen des zu löschenden Datenblocks,
- o Erstellen einer aktualisierten Kombination aller Funktionen, welche den verbleibenden Datenblöcken der ersten Gruppe zugeordnet sind,
- o Bestimmen eines aktualisierten kombinationsabhängigen Koeffizienten für jede Funktion der aktualisierten Kombination, sodass die aktualisierte Kombination die erste vordefinierte Bedingung erfüllt,
- o Ersetzen der in den verbleibenden Datenblöcken der Kontrollgruppen der ersten Gruppe gespeicherten Koeffizienten, welche für die erste Kombination bestimmt wurden, jeweils durch einen aktualisierten Koeffizienten, welcher für die aktualisierte Kombination bestimmt wurde.

Ausführungsformen können den Vorteil haben, dass nicht nur geänderte, d.h. Daten in Datenblöcken ergänzt, ersetzt und/oder gelöscht werden können, sondern dass vielmehr ganze Datenblöcke gelöscht werden können, ohne die kryptographische Sicherung der Datenblockstruktur infrage zu stellen.

Nach Ausführungsformen umfasst das Verfahren ferner:

- o Hinzufügen eines zusätzlichen Datenblocks zu der ersten Gruppe von Datenblöcken,
- o Bestimmen einer zusätzlichen Funktion, welche dem zusätzlichen Datenblock zugeordnet und von den Daten des zusätzlichen Datenblocks abhängig ist,
- o Erstellen einer erweiterten Kombination aller Funktionen, welche den Datenblöcken der ersten Gruppe zugeordnet sind, aus der ersten Kombination und der zusätzlichen Funktion,
- o Bestimmen eines erweiterten kombinationsabhängigen Koeffizienten für jede Funktion der erweiterten Kombination, sodass die erweiterte Kombination die erste vordefinierte Bedingung erfüllt,
- o Ersetzen der in den Datenblöcken der Kontrollgruppen der ersten Gruppe gespeicherten Koeffizienten, welche für die erste Kombination bestimmt wurden, jeweils durch einen erweiterten Koeffizienten, welcher für die erweiterte Kombination bestimmt wurde,
- o Bestimmen einer zusätzlichen Kontrollgruppe von Datenblöcken der ersten Gruppe für den zusätzlichen Datenblock,
- o Speichern des für die zusätzliche Funktion des zusätzlichen Datenblocks bestimmten erweiterten Koeffizienten in allen Datenblöcken der zusätzlichen Kontrollgruppe.

Ausführungsformen können den Vorteil haben, dass die Datenblockstruktur um zusätzliche Blöcke erweitert werden kann, ohne die kryptographische Sicherheit infrage zu stellen.

Nach Ausführungsformen umfasst das Verfahren zum gegenseitigen Verknüpfen aller Datenblöcke einer zweiten Gruppe von Datenblöcken, sodass jeder Datenblock der zweiten Gruppe von allen anderen Datenblöcken der zweiten Gruppe abhängig ist, ferner:

- für die zweite Gruppe von Datenblöcken:

  ◦ Bestimmen der Funktionen, welche den Datenblöcken der zweiten Gruppe zugeordnet sind,
  ◦ Erstellen einer zweiten Kombination aller Funktionen, welche den Datenblöcken der zweiten Gruppe zugeordnet sind,
  ◦ Bestimmen eines kombinationsabhängigen Koeffizienten für jede Funktion der zweiten Kombination, sodass die zweite Kombination eine erste vordefinierte Bedingung erfüllt,

- für jeden Datenblock der zweiten Gruppe:

  ◦ Bestimmen einer dem entsprechenden Datenblock zugeordneten Kontrollgruppe von Datenblöcken der zweiten Gruppe,
  ◦ Speichern des Koeffizienten, welcher für die Funktion des entsprechenden Datenblocks bestimmt wurde, in allen Datenblöcken der Kontrollgruppe.

Ausführungsformen können den Vorteil haben, dass die Datenblockstruktur eine Mehrzahl von Gruppen von Datenblöcken umfassen kann. Diese Gruppen können sich teilweise überlappen, d.h. gemeinsame Datenblöcke umfassen. Wird einer dieser gemeinsamen Datenblöcke geändert, so muss die kryptographische Sicherung beider Gruppen, d.h. die gespeicherten Koeffizienten beider Gruppen, an die Änderung angepasst werden. Wird ein Datenblock, der nur einer einzigen dieser Gruppen von Datenblöcken zugeordnet ist, geändert, so ist nur die kryptographische Sicherung dieser einen Gruppe an die Änderung anzupassen. Mit anderen Worten sind nur die Koeffizienten dieser einen Gruppe zu ändern. Weitere, mit der entsprechenden Gruppe überlappende Gruppen werden dabei hinsichtlich ihrer eigenen kryptographischen Sicherung von der Änderung nicht tangiert.

Nach Ausführungsformen umfasst die zweite Gruppe von Datenblöcken einen Teil der Datenblöcke der ersten Gruppe von Datenblöcken. Nach Ausführungsformen umfasst die zweite Gruppe von Datenblöcken alle Datenblöcke der ersten Gruppe von Datenblöcken.

Nach Ausführungsformen werden für drei oder mehr Gruppen von Datenblöcken die Datenblöcke der jeweiligen Gruppe so gegenseitig verknüpft, dass jeder Datenblock der entsprechenden Gruppe von allen anderen Datenblöcken der entsprechenden Gruppe abhängig ist, wobei die einzelnen Gruppen der Reihe nach jeweils zumindest einen Datenblock der Vorgängergruppe in der Reihe umfasst und die letzte Gruppe der Reihe die Vorgängergruppe der ersten Gruppe der Reihe ist, sodass die Datenblöcke jeder der drei oder mehr Gruppen von den Datenblöcken aller anderen Gruppen abhängig sind. Zwei Datenblöcke sind voneinander abhängig, wenn eine Änderung der Daten eines ersten der beiden Datenblöcke eine Änderung eines Koeffizienten einer Funktion verursacht bzw. verursachen kann, welche von den in dem zweiten der beiden Datenblöcke gespeicherten Daten abhängig ist.

Nach Ausführungsformen werden für vier oder mehr Gruppen von Datenblöcken die Datenblöcke der jeweiligen Gruppe so gegenseitig verknüpft, dass jeder Datenblock der entsprechenden Gruppe von allen anderen Datenblöcken der entsprechenden Gruppe abhängig ist, wobei eine der vier oder mehr Gruppen zumindest einen Datenblock aller weiteren der vier oder mehr Gruppen umfasst, sodass die Datenblöcke jeder der vier oder mehr Gruppen von den Datenblöcken aller anderen Gruppen abhängig sind.

Ausführungsformen können den Vorteil haben, dass eine Vielzahl unterschiedlicher Verkettungsstrukturen implementiert werden kann, beispielsweise ringförmige Verkettungen oder sternförmige Verkettungen.

Nach Ausführungsformen umfassen die in einem Datenblock zu speichernden Daten und/oder die in einem Datenblock zu ändernden Daten Daten, welche kennzeichnend für den Inhalt eines digital codierten Dokuments sind, wobei die Daten unter Verwendung einer Kommunikationsschnittstelle über ein Netzwerk von einem das digital codierte Dokument erstellenden Computersystem empfangen werden. Nach Ausführungsformen umfasst das Verfahren ferner:

- Empfangen einer Anfrage nach einer aktuellen Version eines oder mehrerer Datenblöcke der Datenblockstruktur, einer aktualisierten Gruppe von Datenblöcke der Datenblockstruktur oder der gesamten aktualisierten Datenblockstruktur unter Verwendung der Kommunikationsschnittstelle über das Netzwerk von einem anfragenden Computersystem,

- Versenden der aktualisierten ein oder mehreren Datenblöcke der Datenblockstruktur, der aktualisierten Gruppe von Datenblöcke der Datenblockstruktur oder der gesamten aktualisierten Datenblockstruktur unter Verwendung der Kommunikationsschnittstelle über das Netzwerk an das anfragende Computersystem in Antwort auf die empfangene Anfrage.

Ausführungsformen können den Vorteil haben, dass anhand der in der Datenblockstruktur gespeicherten Daten die Integrität eines digital codierten Dokuments geprüft werden kann. Für ein vorliegendes digital codiertes Dokument können Daten, welche kennzeichnend für den Inhalt dieses Dokuments sind, berechnet werden. Beispielsweise kann ein Hashwert des Inhalts des digital codierten Dokuments berechnet werden. Diese Daten können mit der Datenblockstruktur verglichen werden: Umfasst die Datenblockstruktur die entsprechenden Daten, wird die Integrität des digitalen codierten Dokuments bestätigt und dieses als authentisch anerkannt. Umfasst die Datenblockstruktur die entsprechenden Daten nicht, wird die Integrität des digital codierten Dokuments verneint. Die Datenblockstruktur kann hierbei den Vorteil bieten, dass deren Größe kompakt gehalten werden kann, wenn diese nur Hashwerte der digital codierten Dokumente umfasst. Ferner können anhand der Hashwerte der digital codierten Dokumente keine Rückschlüsse auf die Inhalte der entsprechenden Dokumente gezogen werden, wodurch die Sicherheit erhöht wird. Schließlich kann eine aktuelle Version der Datenblockstruktur beispielsweise auf ein tragbares mobiles Telekommunikationsgerät über das Netzwerk heruntergeladen und zur Prüfung von digital codierten Dokumenten selbst dann genutzt werden, wenn keine Netzwerkverbindung zur Verfügung steht, d.h. sich das tragbare mobile Telekommunikationsgerät in einem Offline-Modus befindet.

Unter einem "Dokument" wird insbesondere eine Nachrichtenmeldung, ein Text, eine Urkunde, ein Zeugnis, oder ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln. Eine Urkunde ist eine Erklärung in Text- oder Schriftform, welche einen bestimmten Tatbestand bzw. Sachverhalt fixiert. Zudem kann die Urkunde den Austeller der Urkunde identifizieren.

Unter einem digital codierten Dokument wird ein Datenkonstrukt zur elektronischen Datenverarbeitung verstanden, welches digital codierte Daten umfasst. Hierbei kann es sich insbesondere um eine elektronische Datei eines beliebigen Dateiformats handeln, wie etwa eine Text-, Tabellen-, Ton- Bild- und/oder Videodatei. Nach Ausführungsformen kann die elektronische Datei ausführbar oder nicht ausführbar sein. Bei einem digital codierten Dokument kann es sich um beispielsweise um ein Dokument handeln, welche durch Digitalisieren eines Dokuments mit physischen Dokumentenkörper, d.h. eine Umwandlung der von dem physischen Dokumentenkörper umfassten Daten in einen Binärcode, in Dateiform angelegt oder überführt wurden. Insbesondere ist die Gültigkeit eines solchen Dokuments unabhängig von dem Vorhandensein eines fest zugeordneten Dokumentenkörpers.

Nach Ausführungsformen wird kann ein digital codiertes Dokument beispielsweise erstellt werden, indem eine Datei mit den Daten des entsprechenden Dokuments an einem Computer erzeugt wird. Ferner kann ein digital codiertes Dokument beispielsweise auch durch Einscannen oder Ablichten eines physischen Dokumentenkörpers, wie etwa einem Dokument auf Papier, erstellt werden.

Nach Ausführungsformen umfassen die in einem Datenblock zu speichernden Daten und/oder die in einem Datenblock zu ändernden Daten Daten einer Transaktion, wobei die Daten unter Verwendung einer Kommunikationsschnittstelle über ein Netzwerk von einem an der Ausführung der Transaktion beteiligten Computersystem empfangen werden. Nach Ausführungsformen umfasst das Verfahren ferner:

- Empfangen einer Anfrage nach einer aktuellen Version eines oder mehrerer Datenblöcke der Datenblockstruktur, einer aktualisierten Gruppe von Datenblöcke der Datenblockstruktur oder der gesamten aktualisierten Datenblockstruktur unter Verwendung der Kommunikationsschnittstelle über das Netzwerk von einem anfragenden Computersystem,
- Versenden der aktualisierten ein oder mehreren Datenblöcke der Datenblockstruktur, der aktualisierten Gruppe von Datenblöcke der Datenblockstruktur oder der gesamten aktualisierten Datenblockstruktur unter Verwendung der Kommunikationsschnittstelle über das Netzwerk an das anfragende Computersystem in Antwort auf die empfangene Anfrage.

Ausführungsformen können den Vorteil haben, dass anhand der in der Datenblockstruktur eingetragenen Daten Transaktionen protokolliert werden können. Bei den Transaktionen kann es sich beispielsweise um Transaktionen einer Kryptowährung oder einer klassischen Währung, einen Verkauf, einen Versand, eine Eigentumsübertragung oder eine Übergabe eines Gegenstands und/oder eines digital codierten Dokuments handeln.

Nach Ausführungsformen die in einem Datenblock zu speichernden Daten und/oder die in einem Datenblock zu ändernden Daten Zustandsdaten einer Vorrichtung, wobei die Daten unter Verwendung einer Kommunikationsschnittstelle über ein Netzwerk von einem die Zustandsdaten mittels eines Sensors erfassenden Computersystem empfangen werden. Nach Ausführungsformen umfasst das Verfahren ferner:

- Empfangen einer Anfrage nach einer aktuellen Version eines oder mehrerer Datenblöcke der Datenblockstruktur, einer aktualisierten Gruppe von Datenblöcke der Datenblockstruktur oder der gesamten aktualisierten Datenblockstruktur unter Verwendung der Kommunikationsschnittstelle über das Netzwerk von einem anfragenden Computersystem,
- Versenden der aktualisierten ein oder mehreren Datenblöcke der Datenblockstruktur, der aktualisierten Gruppe von Datenblöcke der Datenblockstruktur oder der gesamten aktualisierten Datenblockstruktur unter Verwendung der Kommunikationsschnittstelle über das Netzwerk an das anfragende Computersystem in Antwort auf die empfangene Anfrage.

Ausführungsformen können den Vorteil haben, dass anhand der in der Datenblockstruktur gespeicherten Zustandsdaten der Zustand und/oder die Zustandshistorie einer Vorrichtung protokolliert werden kann. Bei einer solchen Vorrichtung kann es sich beispielsweise um eine Produktionsvorrichtung, eine Komponente eines Computersystems, eine Schließanlage, eine Zugangskontrollvorrichtung oder ein Fahrzeug handeln. Unter einem "Fahrzeug" wird hier ein mobiles Verkehrsmittel verstanden. Ein solches Verkehrsmittel kann beispielsweise dem Transport von Gütern (Güterverkehr), von Werkzeugen (Maschinen oder Hilfsmittel) oder Personen (Personenverkehr) dienen. Fahrzeuge umfassen insbesondere auch motorisierte Verkehrsmittel. Bei einem Fahrzeug kann es sich beispielsweise um ein Landfahrzeug, ein Wasserfahrzeug und/oder ein Luftfahrzeug handeln. Ein Landfahrzeug kann beispielsweise sein: ein Automobil, wie etwa ein Personenkraftwagen, Omnibus oder ein Lastkraftwagen, ein motorbetriebenes Zweirad, wie etwa ein Motorrad, Kleinkraftrad, Motorroller oder Motorfahrrad, ein landwirtschaftlicher Traktor, Gabelstapler, Golfmobil, Autokran. Darüber hinaus kann es sich bei einem Landfahrzeug auch um ein Schienen gebundenes Fahrzeug handeln. Wasserfahrzeug kann beispielsweise sein: ein Schiff oder Boot. Ferner kann ein Luftfahrzeug beispielsweise sein: ein Flugzeug oder Hubschrauber. Unter einem Fahrzeug wird insbesondere auch ein Kraftfahrzeug verstanden.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, elektromagnetische Feldstärke, Helligkeit, Beschleunigung, Lageänderung, pH-Wert, Ionenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Ferner können Messdaten, Zustände und/oder Zustandsänderung von elektronischen Geräten, etwa in Folge einer Benutzung durch einen Nutzer, wiedergeben.

Die Zustandsdaten können nach Ausführungsformen auch Daten über Funktionen umfassen, welche von der Vorrichtung ausgeführt werden. Beispielsweise können so von einer Produktionsvorrichtung ausgeführte Fertigungs- und/oder Bearbeitungsvorgänge protokolliert werden. Ferner können beispielsweise Aktionen einer Zugangskontrollvorrichtung protokolliert werde, wobei die protokollierten Daten Informationen darüber umfassen können, wann wer über die Zugangskontrollvorrichtung Zugang zu einem gesicherten Bereich erhalten hat.

Ausführungsformen betreffen ein elektronisches Datenspeichersystem zum manipulationssicheren Speichern von Daten in einem elektronischen Speicher des Datenspeichersystem unter Verwendung einer Datenblockstruktur, welche eine Mehrzahl von Datenblöcken umfasst, wobei jedem der Datenblöcke eine Funktion zugeordnet ist, welche von den in dem entsprechenden Datenblock gespeicherten Daten abhängige ist, wobei das Datenspeichersystem einen Prozessor umfasst und in dem elektronischen Speicher maschinenlesbaren Instruktionen gespeichert sind, wobei ein Ausführen der maschinenlesbaren Instruktionen durch den Prozessor das Datenspeichersystem dazu veranlasst, ein Verfahren zum gegenseitigen Verknüpfen aller Datenblöcke einer Gruppe von Datenblöcken auszuführen, sodass jeder Datenblock der Gruppe von allen anderen Datenblöcken der Gruppe abhängig ist, welches umfasst:

- für die Gruppe von Datenblöcken:

  ◦ Bestimmen der Funktionen, welche den Datenblöcken der Gruppe zugeordnet sind,
  ◦ Erstellen einer Kombination aller Funktionen, welche den Datenblöcken der Gruppe zugeordnet sind,
  ◦ Bestimmen eines kombinationsabhängigen Koeffizienten für jede Funktion der Kombination, sodass die Kombination eine vordefinierte Bedingung erfüllt,

- für jeden Datenblock der Gruppe:

  ◦ Bestimmen einer dem entsprechenden Datenblock zugeordneten Kontrollgruppe von Datenblöcken der Gruppe,
  ◦ Speichern des Koeffizienten, welcher für die Funktion des entsprechenden Datenblocks bestimmt wurde, in allen Datenblöcken der Kontrollgruppe.

Nach Ausführungsformen ist das elektronisches Datenspeichersystem dazu konfiguriert eine oder mehrere der zuvor genannten Ausführungsformen des Verfahrens zum manipulationssicheren Speichern von Daten auszuführen.

Nach Ausführungsformen umfasst das elektronisches Datenspeichersystem ein Dateisystem. Das Dateisystem stellt eine Ablageorganisation auf dem Datenspeicher bereit. Daten wie etwa digital codierte Dokumente können als Dateien auf dem Datenspeicher gespeichert werden. Ferner können die Dateien gelesen, verändert oder gelöscht werden.

Nach Ausführungsformen umfasst das elektronische Datenspeichersystem eine Datenbank. Eine Datenbank bzw. ein Datenbanksystem bezeichnet ein System zur elektronischen Datenverwaltung. Ein Datenbanksystem erlaubt es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Das Datenbanksystem umfasst beispielsweise ein Datenbankmanagementsystem und eine Datenbank im engeren Sinn bzw. Datenbasis. Das Datenbankmanagementsystem stellt eine Verwaltungssoftware zum Verwalten von Daten der Datenbasis bereit. Die Verwaltungssoftware organisiert intern die strukturierte Speicherung der Daten und kontrolliert alle lesenden und schreibenden Zugriffe auf die Datenbank. Die Datenbasis umfasst die Menge der zu verwaltenden Daten. Daten wie etwa digital codierte Dokumente werden in diesem Fall beispielsweise als Teil der Datenbasis gespeichert.

Der Speicher kann beispielsweise einen Wechselspeicher umfassen handeln, d.h. einen nicht fest eingebauter, austauschbarer und/oder tragbarer Datenträger für ein Computersystem handeln. Wechselspeicher umfassen beispielsweise Blu-ray Discs, CDs, Disketten, DVDs, HD-DVDs, Magnetbänder, MO/MODs, Solid-State-Drives (SSD), Speicherkarten, USB-Sticks oder Wechselfestplatten.

Ausführungsformen betreffen ein Telekommunikationssystem, welches ein elektronisches Datenspeichersystem nach einer der zuvor genannten Ausführungsformen und eine Kommunikationsschnittstelle zum Kommunizieren über ein Netzwerk umfasst, wobei zumindest einer der Datenblöcke der ersten Gruppe ein zusätzlich zu der ersten Gruppe hinzugefügter Datenblock mit in der Datenblockstruktur zu speichernden Daten ist, wobei das Datenspeichersystem dazu konfiguriert ist, das Verfahrens zum gegenseitigen Verknüpfen der Datenblöcken auf ein Empfangen der zu speichernden Daten mittels der Kommunikationsschnittstelle über das Netzwerk auszuführen.

Bei dem Telekommunikationssystem handelt es sich beispielsweise um ein Computersystem, welches zur Kommunikation über ein Netzwerk konfiguriert ist.

Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln. Ferner kann es sich bei dem beispielsweise um ein digitales zellulares Mobilfunknetzwerk handeln. Das Telekommunikationssystem kann mithin ein Mobilfunkgerät, wie etwa ein Smartphone umfassen, und/oder zu einer Kommunikation mit einem Mobilfunkgerät über ein digitales zellulares Mobilfunknetzwerk konfiguriert sein.

Unter einem "Computersystem" wird hier ein Gerät verstanden, welches mittels programmierbarer Rechenvorschriften unter Verwendung elektronischer Schaltkreise Daten verarbeitet. Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Ein Computersystem kann eine Schnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden.

Bei einem Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um beispielsweise um eine Smartwatch oder Smartglasses handeln. Zudem kann es sich um ein stationäres Computersystem, wie beispielsweise einen Personal Computer oder einen in einer Client-Server-Umgebung eingebundenen Server handeln. Insbesondere kann es sich um einen Server mit einem Datenbankmanagementsystem, welcher eine Datenbank mit einer Datenblockstruktur verwaltet.

Unter einem "Speicher" bzw. "Datenspeicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Schnittstelle kann beispielsweise als Funkschnittstelle konfiguriert sein, welche eine Kommunikation über ein digitales zellulares Mobilfunknetzwerk ermöglicht, das nach einem Mobilfunkstandard wie zum Beispiel GSM, UMTS, LTE, CDMA oder einem anderen Standard aufgebaut sein kann

Eine Kommunikation kann im Allgemeinen beispielsweise über ein Netzwerk erfolgen. Unter einem "Netzwerk" wird hier jedes Übertragungsmedium mit einer Anbindung zur Kommunikation verstanden, welche eine Kommunikation zwischen zumindest zwei Computersystemen ermöglicht. Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network — VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln.

Nach Ausführungsformen sind in dem elektronischen Speicher des Telekommunikationssystems ferner maschinenlesbaren Instruktionen gespeichert, deren Ausführung durch den Prozessor das Datenspeichersystem dazu veranlasst, ein Verfahren auszuführen, welches umfasst:

- Empfangen einer Anfrage nach zumindest einem Teil eines Datenblocks der Gruppe von Datenblöcken mittels der Kommunikationsschnittstelle über das Netzwerk von einem anfragenden Telekommunikationssystem,
- Prüfen der Datenintegrität des angefragten Datenblocks, wobei die Integritätsprüfung umfasst:

  ◦ Bestimmen der Funktionen, welche den Datenblöcken der Gruppe zugeordnet sind,
  ◦ Erstellen der ersten Kombination aller Funktionen, welche den Datenblöcken der Gruppe zugeordnet sind
  ◦ Bestimmen des kombinationsabhängigen Koeffizienten für die Funktion des zu prüfenden Datenblocks als Prüfkoeffizient, sodass die Kombination die vordefinierte Bedingung erfüllt,
  ◦ Vergleichen des Prüfkoeffizienten mit den in den Datenblöcken der Kontrollgruppe des zu prüfenden Datenblocks für die Funktion des entsprechenden Datenblocks gespeicherten Koeffizienten,
  ◦ falls ein vordefiniertes Übereinstimmungskriterium zwischen dem Prüfkoeffizienten und den gespeicherten Koeffizienten erfüllt ist, Bestätigen der Datenintegrität des zu prüfenden Datenblocks

- auf die Bestätigung der Datenintegrität hin, Versenden des angefragten Teils der Datenblocks sowie einer Bestätigungsnachricht zum Bestätigen der Datenintegrität des angefragten Datenblocks mittels der Kommunikationsschnittstelle über das Netzwerk an das anfragende Telekommunikationssystem in Antwort auf die empfangene Anfrage.

Im Weiteren werden Ausführungsformen der Erfindung mit Bezugnahme auf die Zeichnungen näher erläutert. Es zeigen:

Figuren 1    schematische Blockdiagramme exemplarischer Datenblockstrukturen,
Figur 2      ein schematisches Blockdiagramm einer weiteren exemplarischen Datenblockstruktur,
Figur 3      ein schematisches Flussdiagramm eines exemplarischen Verfahrens zum Erstellen einer Datenblockstruktur,
Figur 4      ein schematisches Flussdiagramm eines exemplarischen Verfahrens zum Prüfen einer Datenblockstruktur,
Figur 5      ein schematisches Flussdiagramm eines exemplarischen Verfahrens zum Prüfen einer Datenblockstruktur,
Figur 6      ein schematisches Flussdiagramm eines exemplarischen Verfahrens zum Löschen eines Datenblocks,
Figur 7      ein schematisches Flussdiagramm eines exemplarischen Verfahrens zum Ändern eines Datenblocks,
Figur 8      ein schematisches Flussdiagramm eines exemplarischen Verfahrens zum Hinzufügen eines Datenblocks,
Figur 9      ein schematisches Flussdiagramm eines exemplarischen Verfahrens zum Zustimmen zum Ändern von Koeffizienten,
Figur 10     ein schematisches Flussdiagramm eines exemplarischen Verfahrens zum Zustimmen zum Ändern von Koeffizienten,
Figur 11     ein schematisches Blockdiagramm einer Ausführungsform eines exemplarischen Datenspeichersystems und
Figur 12     ein schematisches Blockdiagramm einer Ausführungsform eines exemplarischen Telekommunikationssystems.

Elemente der nachfolgenden Ausführungsformen, die einander entsprechen, werden mit denselben Bezugszeichen gekennzeichnet.

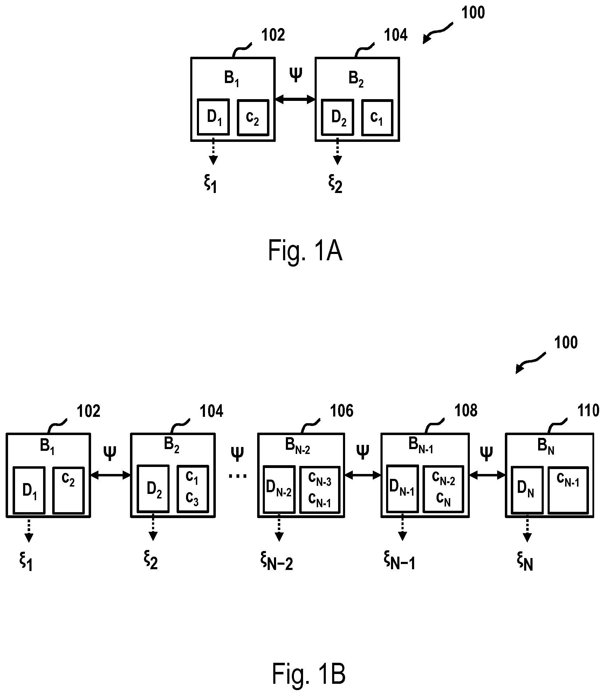

Figuren 1A — 1D zeigen exemplarische Datenblockstrukturen 100. Die in Figur 1A gezeigte Datenblockstruktur 100 umfasst zwei Datenblöcke 102, 104. Der Datenblock 102 umfasst Daten $D_1$, der Datenblock 104 umfasst Daten $D_2$. Datenblock 102 ist eine Funktion $\xi_1$ zugeordnet, welche von den Daten $D_1$ abhängig ist, Datenblock 104 ist eine Funktion $\xi_2$ zugeordnet, welche von den Daten $D_2$ abhängig ist. Die Datenblöcke 102, 104 der Datenstruktur 100 bilden eine Gruppe. Die Datenblöcke 102, 104 der Gruppe werden durch Erstellen einer Kombination $\Psi$ der Funktionen $\xi_1$, $\xi_2$ kryptographisch gesichert, wobei die Kombination eine Verbindung aller Datenblöcke 102, 104 der Gruppe darstellt. Beispielsweise handelt es sich bei der Verbindung um eine Linearkombination der Funktionen $\xi_1$, $\xi_2$. Für die Kombination

bzw. Verbindung sind Koeffizienten $c_1$, $c_2$ bestimmt, z.B. $\Psi = \sum_{i=1}^{2} c_i \xi_i$. Im vorliegenden Fall bestehen die Kontrollgruppen beispielsweise jeweils aus einem Datenblock. Die Kontrollgruppe des Datenblocks 102 wird von dem Datenblock 104 gestellt, die Kontrollgruppe des Datenblocks 104 von dem Datenblock 102. Daher ist der Koeffizient $c_1$ der Funktion $\xi_1$ in dem Datenblock 104 gespeichert, der Koeffizient $c_2$ in dem Datenblock 102. Die Datenintegrität der Datenblöcke 102, 104 kann anhand der Kombination der Funktionen $\xi_1$, $\xi_2$ geprüft werden. Wenn die Kombination unter Verwendung der Koeffizienten $c_1$, $c_2$ eine für die Kombination vordefinierte Bedingung, beispielsweise eine Extremwertbedingung, erfüllt, ist die Integrität der Daten $D_1$, $D_2$ bestätigt.

Figur 1B zeigt eine weitere exemplarische Ausführungsform einer Datenblockstruktur 100. Bei der gezeigten Datenblockstruktur 100 handelt es sich um eine lineare Datenblockstruktur, welcher eine Mehrzahl von N-Datenblöcken 102 — 110 umfasst. In den N Datenblöcken 102 — 110 der Datenblockstruktur 100 sind Daten $D_1$ — $D_N$ gespeichert. Beispielsweise sind alle Datenblöcke in der Datenstruktur 100 einer Gruppe zugeordnet. Ferner ist jedem der Datenblöcke 102 — 110 jeweils eine Funktion $\xi_1$ — $\xi_N$ zugeordnet, welche von den Daten des entsprechenden Datenblocks abhängig ist. Aus den Funktionen $\xi_1$ — $\xi_N$ der Datenblöcke 102 — 110 kann eine Kombination $\Psi$, beispielsweise eine lineare Kombination $\Psi = \sum_{i=1}^{N} c_i \xi_i$, erstellt werden, welche eine vordefinierte Bedingung, beispielsweise eine Extremwertbedingung, erfüllen soll. Für jede der Funktionen $\xi_1$ — $\xi_N$ der Datenblöcke 102 — 110 werden Koeffizienten $c_1$ - $c_N$ bestimmt, für welche die Kombination $\Psi$ der Funktionen die vordefinierte Bedingung erfüllt. Beispielsweise werden die Kontrollgruppen für die einzelnen Blöcke 102 — 110 der Datenblockstruktur 100 jeweils von den beiden benachbarten Datenblöcken gebildet. Beispielsweise wird die Kontrollgruppe für den Datenblock 108 von den Datenblöcken 106, 110 gebildet. Die Kontrollgruppe für den Datenblock 102 wird beispielsweise von dem Datenblock 104 gebildet. Die Koeffizienten $c_1$ - $c_N$ werden jeweils in den Datenblöcken der zugehörigen Kontrollgruppe gespeichert und somit für eine spätere Kontrolle bzw. Prüfung der Datenintegrität bereitgestellt. Anhand der gezeigten wechselseitigen Speicherung der Koeffizienten $c_1$ - $c_N$ benachbarter Datenblöcke wird der bidirektionale Charakter der Verkettung ersichtlich.

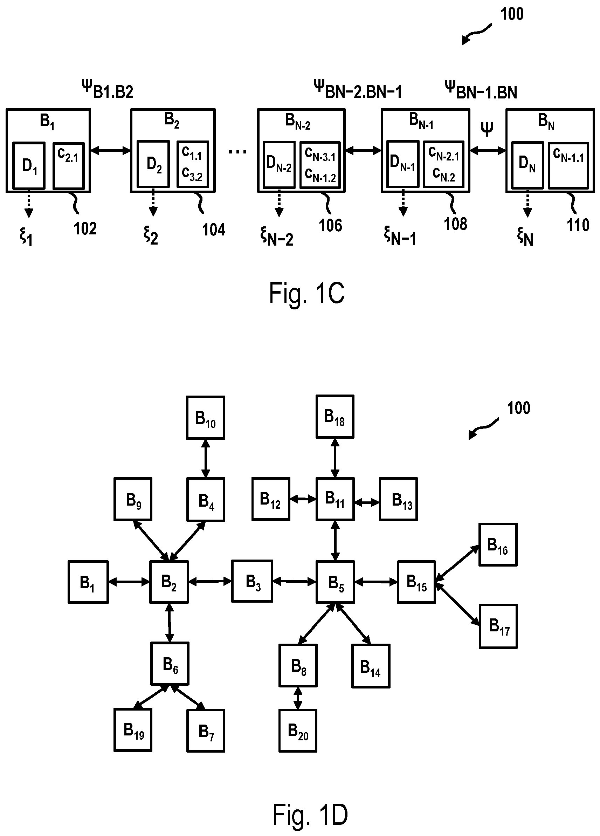

Figur 1C zeigt eine alternative Ausführungsform der Figur 1B. Die Datenblockstruktur 100 der Figur 1C ist identisch mit der Datenblockstruktur der Figur 1B. Jedoch sind im Falle der Figur 1C nicht alle Datenblöcke einer Gruppe zugeordnet. Vielmehr sind die Datenblöcke jeweils paarweise individuellen Gruppen zugeordnet, wobei jeder der inneren Datenblöcke 104 — 108 jeweils zwei Gruppen zugeordnet ist, während die äußeren Datenblöcke 102, 110 jeweils nur einer Gruppe zugeordnet sind. Jeder Gruppe ist eine Kombination $\Psi_{B1.B2}$ — $\Psi_{BN-1.BN}$ von Funktionen $\xi_1$ — $\xi_N$ zugeordnet. Ferner überschneiden sich alle Gruppen der Datenblockstruktur 100 jeweils in einem Datenblock mit einer anderen Gruppe. Der Unterschied zwischen der kryptographischen Sicherung gemäß Figur 1B und der kryptographischen Sicherung gemäß Figur 1C ist, dass im Falle der Figur 1B eine Änderung der Daten $D_1$ des Blocks 102 dazu führt, dass die kryptographische Sicherung der zugehörigen Gruppe, d.h. aller Datenblöcke der Datenstruktur 100, entsprechend angepasst werden muss. Mit anderen Worten müssen alle Koeffizienten $c_1$ — $c_N$ neu berechnet und aktualisiert werden. Im Fall der Figur 1C umfasst die zu Block 102 gehörige Gruppe nur die Datenblöcke 102, 104, welche durch eine gruppenindividuelle Kombination $\Psi_{B1.B2}$ der Funktionen $\xi_1$, $\xi_2$ gesichert ist. Mithin muss bei einer Änderung der Daten $D_1$ des Datenblocks 102 nur die kryptographische Sicherung der Gruppe der Datenblöcke 102, 104, d.h. die Koeffizienten $c_{1.1}$, $c_{2.1}$ geändert werden. Im Falle der letzten Gruppe mit der Kombination $\Psi_{BN-1.BN}$ müssten die Koeffizienten $c_{N-1.1}$, $c_{N.2}$ geändert werden. Im Falle aller weiteren Gruppen mit den Kombinationen $\Psi_{BN-i-1.BN-i}$ mit i $\in$ [1;N-3] müssten die Koeffizienten $c_{N-i-1.1}$, $c_{N-1.2}$ geändert werden.

Figur 1D zeigt schließlich eine weitere Ausführungsform einer exemplarischen Datenblockstruktur 100, welche eine Vielzahl von Datenblöcken $B_1$ — $B_{20}$ umfasst. Die Datenblöcke $B_1$ — $B_{20}$ sind in der Reihenfolge nummeriert, in der sie zu der Datenblockstruktur 100 hinzugefügt wurden. Insbesondere weisen einzelne Datenblöcke eine Mehrzahl von mehr als zwei benachbarten Datenblöcken auf, welche zu der Kontrollgruppe des entsprechenden Datenblocks gehören. In der gezeigten Darstellung ist jeder der Datenblöcken $B_1$ — $B_{20}$ über Pfeile mit den Datenblöcken der ihm zugeordneten Kontrollgruppe verbunden. Zum Beispiels umfasst die Kontrollgruppe des Datenblocks $B_2$ die Datenblöcke $B_1$, $B_3$, $B_4$, $B_6$ und $B_9$. Die Kontrollgruppe des Datenblocks $B_3$ umfasst die Datenblöcke $B_2$ und $B_5$. Die Kontrollgruppe des Datenblocks $B_9$ den Datenblock $B_2$. Zum einen können mit solchen komplexen Verkettungsstrukturen inhaltliche Abhängigkeiten der Daten abgebildet werden. Datenblöcke wie beispielsweise $B_5$, welche stärker vernetzte Daten umfassen, weisen in diesem Fall mehr Verkettungen bzw. Verbindungen zu benachbarten Datenblöcken auf bzw. haben mehr Nachbarblöcke, als weniger verkettete Datenblöcke, wie etwa $B_{16}$ oder $B_{19}$. Dies kann ferner den Vorteil haben, dass durch die größere Anzahl an Verkettungen die Sicherheit der entsprechenden Daten erhöht wird, da die Koeffizienten der Funktion des entsprechenden Datenblocks in einer höheren Anzahl an Nachbarblöcken gespeichert sind, es somit mehr Sicherungskopien der entsprechenden Koeffizienten gibt.

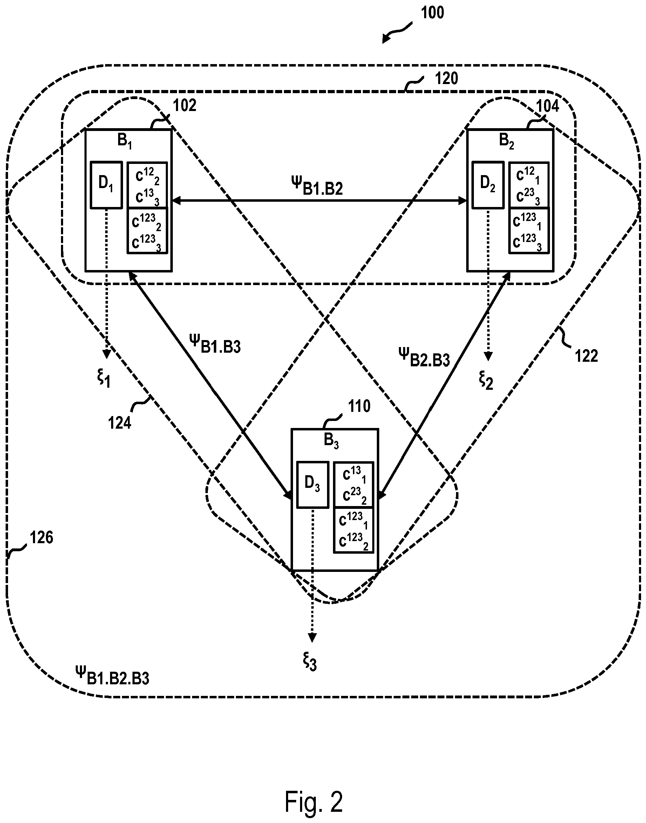

Figur 2 zeigt eine weitere exemplarische Ausführungsform einer Datenblockstruktur 100 mit drei Datenblöcken 102, 104, 106. Die gezeigte Datenblockstruktur 100 umfasst beispielsweise drei Gruppen 120, 122, 124. Die Gruppe 120 umfasst die Datenblöcke 102, 104. Die Gruppe 122 umfasst die Datenblöcke 104, 106. Die Gruppe 124 umfasst die Datenblöcke 102, 106. Jeder der Datenblöcke 102 - 106 umfasst Daten $D_1 — D_3$. Für jede der Gruppen 120 — 124, welche jeweils ein Paar von Datenblöcken umfassen, wird aus den Funktionen $\xi_1, \xi_2, \xi_3$ der entsprechenden Datenblöcke jeweils eine Verbindung $\Psi_{B1.B2}$, $\Psi_{B1.B3}$, $\Psi_{B2.B3}$, beispielsweise als Linearkombination $\Psi_{Bk.Bl} = \sum_{m=k,l} c_m^{kl} \xi_m$, aller dieser Datenblöcke bestimmt. Die Koeffizienten $c_m^{kl}$ mit m=k,l der entsprechenden Verbindungen, z.B. Linearkombination, zwischen den Datenblöcken $B_k$ und $B_l$ werden in den Datenblöcken der zugehörigen Kontrollgruppen gespeichert. Dabei bilden die Datenblöcke einer Gruppe jeweils gegenseitig ihre Kontrollgruppen. Werden nun beispielsweise die Daten $D_1$ des Datenblocks 102 geändert, so müssen die Koeffizienten $c_1^{12}$, $c_2^{12}$ und $c_1^{13}$, $c_3^{13}$ geändert werden. Alternativer Weise oder zusätzlich kann die Datenblockstruktur 100 eine Gruppe 126 umfassen, welche alle Datenblöcke 102 — 106 umfasst. Die Verbindung $\Psi_{B1.B2.B3}$ dieser Gruppe verbindet alle Datenblöcke 102 — 106 kryptographisch miteinander. Beispielsweise wird die Kontrollgruppe für Datenblock 102 in Bezug auf die Gruppe 126 von den Datenblöcken 104, 106 gebildet, die Kontrollgruppe für Datenblock 104 von den Datenblöcken 102, 106 und die Kontrollgruppe für den Datenblock 106 von den Datenblöcken 102, 104. Werden nun die Daten eines einzigen Datenblocks der Gruppe 106, d.h. eines einzigen der Datenblöcke 102 - 106 geändert, so ist die kryptographische Sicherung der gesamten Datenblockstruktur 100 an die Änderung anzupassen, wodurch die entsprechende Änderung bestätigt und kryptographisch abgesichert wird. Mit anderen Worten, Koeffizienten $c_1^{123}$, $c_2^{123}$, $c_3^{123}$ in allen Datenblöcken 102 — 106 müssen geändert werden. Dasselbe gilt, falls ein zusätzlicher Datenblock zu der Gruppe 100 hinzugefügt werden soll oder einer der Datenblöcke 102 — 106 aus der Gruppe 126 entfernt werden soll.

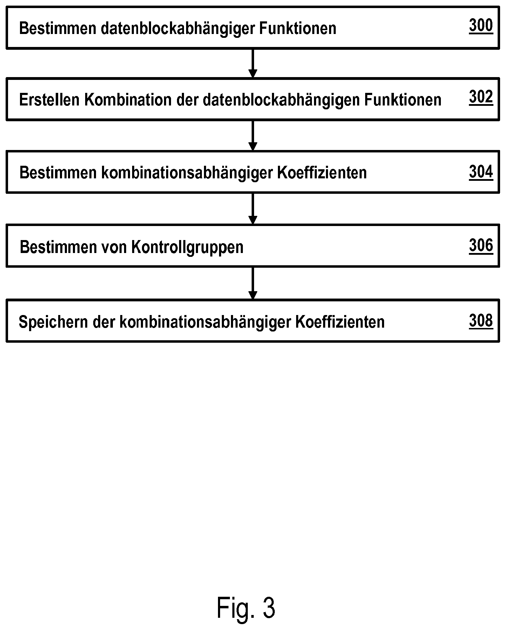

Figur 3 zeigt ein exemplarisches Verfahren zum gegenseitigen Verknüpfen der Datenblöcke einer Gruppe von Datenblöcken einer Datenblockstruktur. In Schritt 300 wird für jeden der Datenblöcke der Gruppe jeweils eine Funktion bestimmt, welche vom Inhalt der in dem Datenblock gespeicherten Daten abhängt. In Schritt 302 wird eine Kombination der entsprechenden Funktionen, welche den Datenblöcken der Gruppe zugeordnet sind, erstellt. In Schritt 304 wird für jede der Funktionen jeweils ein kombinationsabhängiger Koeffizient bestimmt, sodass die Kombination eine vordefinierte Bedingung erfüllt. Die Kombination kann beispielsweise eine Linearkombination der Funktionen umfassen. Ferner kann es sich bei der vordefinierten Bedingung beispielsweise um eine Extremwertbedingung handeln. In Schritt 306 wird für jeden der Datenblöcke jeweils eine den Datenblöcken zugeordnete Kontrollgruppe von Datenblöcken bestimmt. In Schritt 308 werden die Koeffizienten, welche für die Funktion des entsprechenden Datenblocks bestimmt wurden, in den Datenblöcken der Kontrollgruppe gespeichert. Dadurch wird über die zusätzlich in den Datenblöcken gespeicherten Koeffizienten eine kryptographische Abhängigkeit von allen in den Datenblöcken der Gruppe gespeicherten Daten implementiert. Ferner stellen die Datenblöcke der Kontrollgruppe Nachbarblöcke des Datenblocks dar, welchem die Kontrollgruppe zugeordnet ist. Die Anzahl der Verkettungen des Datenblocks, welchem die Kontrollgruppe zugeordnet ist, entspricht dabei der Anzahl der Datenblöcke, welche die Kontrollgruppe umfasst.

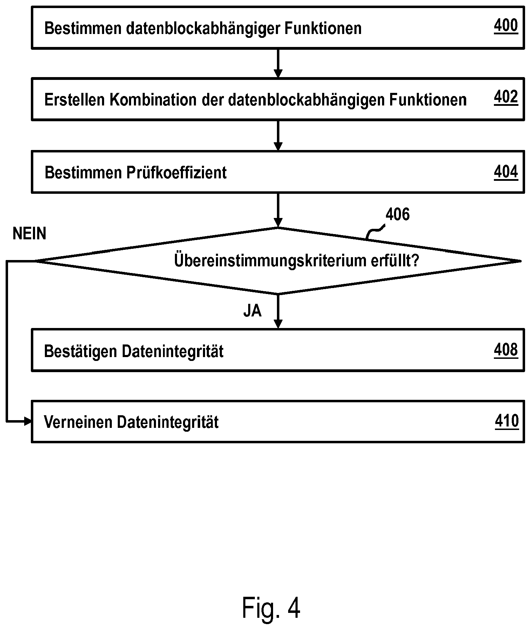

Figur 4 zeigt ein exemplarisches Verfahren zum Prüfen der Datenintegrität eines Datenblocks einer Gruppe von Datenblöcken. In Schritt 400 wird für jeden der Datenblöcke der Gruppe eine von den in dem jeweiligen Datenblock gespeicherten Daten abhängige Funktion bestimmt. In Schritt 402 wird eine Kombination der bestimmten Funktionen aller Datenblöcke der Gruppe erstellt. In Schritt 404 wird ein kombinationsabhängiger Koeffizient für die Funktion des zu prüfenden Datenblocks als Prüfkoeffizient bestimmt, sodass die Kombination der Funktionen eine vordefinierte Bedingung erfüllt. In Schritt 406 wird der Prüfkoeffizient mit den in den Datenblöcken der Kontrollgruppe des zu prüfenden Datenblocks für die Funktion des zu prüfenden Datenblocks gespeicherten Koeffizienten verglichen. Falls ein vordefiniertes Übereinstimmungskriterium zwischen dem Prüfkoeffizienten und den gespeicherten Koeffizienten erfüllt ist, wird die Datenintegrität in Schritt 408 bestätigt. Beispielsweise wird ein entsprechendes Bestätigungssignal erstellt. Falls das vordefinierte Übereinstimmungskriterium nicht erfüllt ist, wird die Datenintegrität in Schritt 410 verneint. Beispielsweise wird ein entsprechendes Warnsignal bzw. eine Fehlermeldung erstellt. Nach Ausführungsformen ist das Übereinstimmungskriterium erfüllt, wenn eine vordefinierte Mindestanzahl an gespeicherten Koeffizienten mit dem Prüfkoeffizienten übereinstimmt, beispielsweise zumindest ein gespeicherter Koeffizient. Nach weiteren Ausführungsformen ist das vordefinierte Übereinstimmungskriterium erfüllt, wenn alle gespeicherten Koeffizienten mit dem Prüfkoeffizienten übereinstimmen.

Nach Ausführungsformen wird die Datenintegrität einer Mehrzahl von Datenblocks der ersten Gruppe und/oder aller Datenblöcke der ersten Gruppe geprüft. Hierzu werden in Schritt 404 kombinationsabhängige Koeffizienten für die Funktionen der entsprechenden Mehrzahl zu prüfender Datenblöcke und/oder aller Datenblöcke der Gruppe bestimmt. Der Vergleich gemäß den Schritten 406- 410 wird in diesem Fall für alle Datenblöcke der Mehrzahl von Datenblöcke und/oder für alle Datenblöcke der Gruppe ausgeführt.

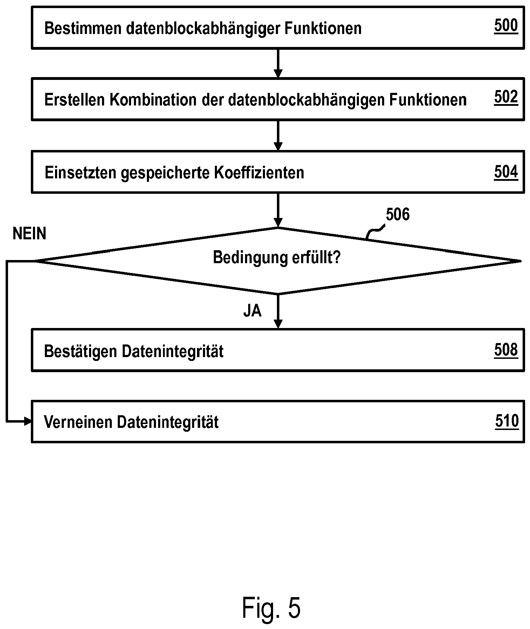

Figur 5 zeigt ein weiteres exemplarisches Verfahren zum Prüfen der Datenintegrität der Datenblöcke einer Gruppe von Datenblöcken. In Schritt 500 wird für jeden Datenblock der Gruppe eine Funktion bestimmt, welche von den in dem entsprechenden Datenblock gespeicherten Daten abhängig ist. In Schritt 502 wird eine Kombination der Funktionen erstellt, welche beispielsweise eine Linearkombination der Funktionen umfasst. In Schritt 504 werden die in den Kontrollgruppen der Gruppe gespeicherten Koeffizienten in die in Schritt 502 erstellte Kombination eingesetzt. In Schritt 506 wird geprüft, ob die erstellte Kombination der Datenblöcke mit den in den Kontrollgruppen der Gruppe gespeicherten Koeffizienten eine vordefinierte Bedingung erfüllt. Falls die gespeicherten Koeffizienten die vordefinierte Bedingung erfüllen, wird die Datenintegrität in Schritt 508 bestätigt. Falls die vordefinierte Bedingung nicht erfüllt ist, wird die Datenintegrität in Schritt 510 verneint.

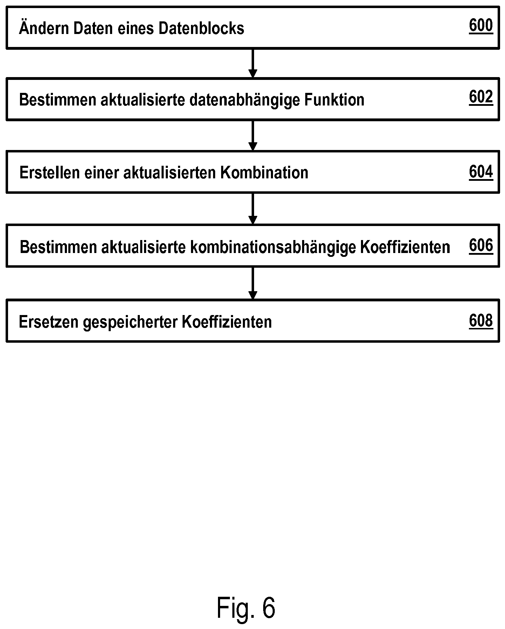

Figur 6 zeigt ein exemplarisches Verfahren zum Ändern von Daten eines Datenblocks einer Gruppe von Datenblöcken. Bei einer Änderung von Daten kann es sich beispielsweise um ein Hinzufügen von Daten, ein Ersetzen von Daten und/oder ein Löschen von Daten eines entsprechenden Datenblocks handeln. In Schritt 600 werden die Daten eines Datenblocks der Gruppe geändert. In Schritt 602 wird eine aktualisierte Funktion für die Daten des geänderten Datenblocks erstellt. In Schritt 604 wird eine aktualisierte Kombination aller Funktionen der Datenblöcke der Gruppe erstellt. Dabei umfasst die aktualisierte Kombination insbesondere die aktualisierte Funktion für den geänderten Datenblock. In Schritt 606 werden aktualisierte kombinationsabhängige Koeffizienten bestimmt, sodass die aktualisierte Kombination mit den entsprechenden aktualisierten kombinationsabhängigen Koeffizienten die vordefinierte Bedingung weiterhin erfüllt. In Schritt 608 werden schließlich die in den Kontrollgruppen gespeicherten Koeffizienten, welche für die vorhergehende Kombination bestimmt wurden, jeweils durch die aktualisierten Koeffizienten, welche für die aktualisierte Kombination bestimmt wurden, ersetzt.

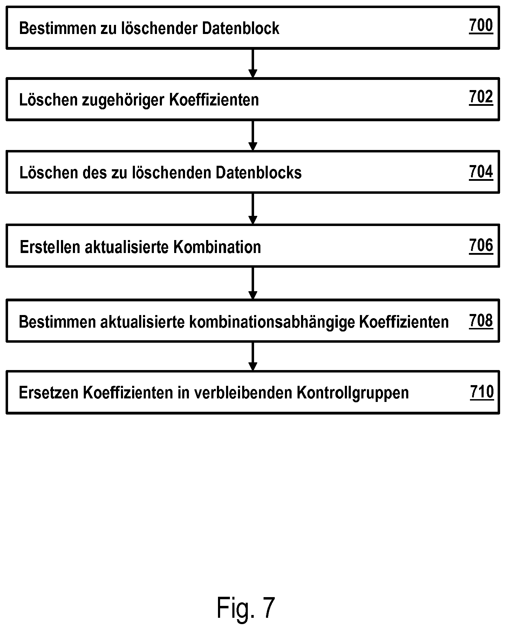

Figur 7 zeigt ein exemplarisches Verfahren zum Löschen eines Datenblocks einer Gruppe von Datenblöcken. In Schritt 700 wird der zu löschende Datenblock der Gruppe bestimmt. In Schritt 702 werden die Koeffizienten der Funktion des zu löschenden Datenblocks aus den Datenblöcken der Kontrollgruppe des zu löschenden Datenblocks gelöscht. Nach Ausführungsformen ist für die Löschung der Koeffizienten jeweils die Zustimmung des Eigentümers des entsprechenden Datenblocks, in welchem der zu löschende Koeffizient gespeichert ist, notwendig. In Schritt 704 erfolgt das Löschen des zu löschenden Datenblocks. Nach Ausführungsformen ist für das Löschen des Datenblocks das vorhergehende Löschen der Koeffizienten aus allen Datenblöcken der Kontrollgruppe des zu löschenden Datenblocks Voraussetzung. Somit wird zunächst eine Abstimmung durch die Eigentümer der Datenblöcke der entsprechenden Kontrollgruppe ausgeführt. Nur wenn alle Eigentümer der Datenblöcke der Kontrollgruppe zustimmen und mithin die Koeffizienten tatsächlich gelöscht werden, erfolgt ein Löschen des zu löschenden Datenblocks. Nach Ausführungsformen ist für das Löschen des Datenblocks die Zustimmung des Eigentümers notwendig bzw. besitzt allein der Eigentümer das Recht zur Löschung. Alternativ kann jeder oder eine begrenzte Gruppe von Berechtigten das Recht zur Löschung des Datenblocks besitzen unter der Voraussetzung, dass die jeweiligen Eigentümer der Datenblöcke der Kontrollgruppe der Löschung der Koeffizienten zustimmen. Nach Ausführungsformen besitzend die Eigentümer der Datenblöcke der Kontrollgruppe das entsprechende recht zur Löschung. In Schritt 706 wird eine aktualisierte Kombination aller Funktionen der verbleibenden Datenblöcke der Gruppe erstellt. In Schritt 708 werden aktualisierte, kombinationsabhängige Koeffizienten für die aktualisierte Kombination bestimmt, sodass diese weiterhin die vordefinierte Bedingung erfüllt. In Schritt 710 werden schließlich die Koeffizienten in den verbleibenden Datenblöcken der Kontrollgruppen durch die aktualisierten Koeffizienten ersetzt. Nach alternativen Ausführungsformen kann das Löschen der Koeffizienten gemäß Schritt 702 auch zu einem späteren Zeitpunkt erfolgen, z.B. nach einem der Schritte 704-710.

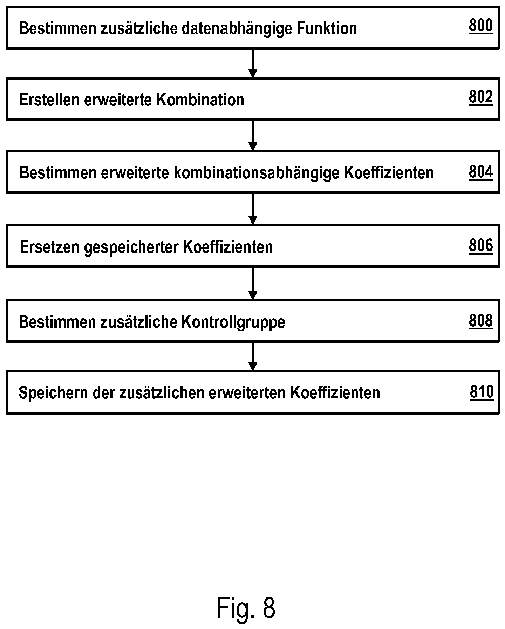

Figur 8 zeigt ein exemplarisches Verfahren zum Hinzufügen eines zusätzlichen Datenblocks zu einer Gruppe von Datenblöcken. In Schritt 800 wird eine zusätzliche Funktion bestimmt, welche von den Daten des zusätzlichen Datenblocks abhängig und diesem zugeordnet ist. In Schritt 802 wird eine erweiterte Kombination aller Funktion der um den zusätzlichen Datenblock erweiterten Gruppe erstellt. Insbesondere umfasst die erweitere Kombination die für den zusätzlichen Datenblock bestimmte zusätzliche Funktion. In Schritt 804 werden erweiterte kombinationsabhängige Koeffizienten für die erweiterte Kombination von Funktionen bestimmt. In Schritt 806 werden die in den Datenblöcken der Kontrollgruppen der ersten Gruppe gespeicherten Koeffizienten durch die erweiterten Koeffizienten ersetzt. In Schritt 808 wird eine Kontrollgruppe für den zusätzlichen Datenblock bestimmt. In Schritt 810 wird der für die zusätzliche Funktion des zusätzlichen Datenblocks bestimmte erweiterte Koeffizient in allen Datenblöcken der Kontrollgruppe des zusätzlichen Datenblocks gespeichert.

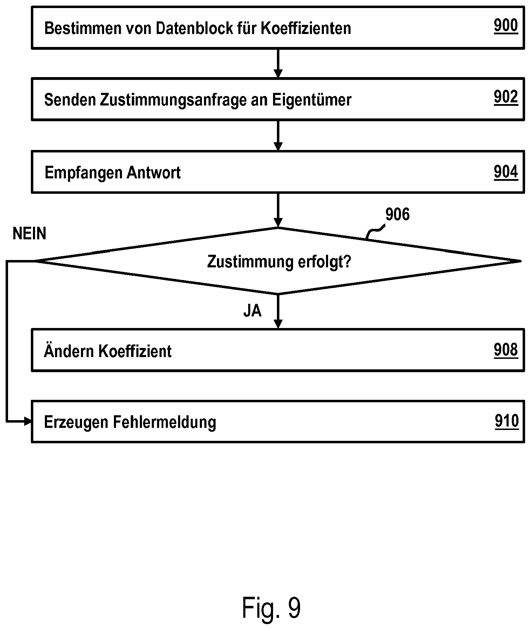

Figur 9 zeigt ein exemplarisches Verfahren zum Zustimmen von Eigentümern von Datenblöcken einer Kontrollgruppe zum Ändern von Koeffizienten in den entsprechenden Datenblöcken. In Schritt 900 wird ein Datenblock bestimmt, in welchem ein Koeffizient zu ändern ist. Dabei kann das Ändern des Koeffizienten ein Speichern, etwa in Form eines zusätzlichen Hinzufügens des Koeffizienten zu dem Datenblock oder eines Ersetzens eines bereits in dem Datenblock gespeicherten Koeffizienten umfassen. Ferner kann auch ein Löschen eines Koeffizienten des Datenblocks vorgesehen sein. In Schritt 902 wird eine Zustimmungsanfrage an den Eigentümer des entsprechenden Datenblocks gesendet. In Schritt 904 wird eine Antwort des Eigentümers empfangen. In schritt 906 wird geprüft, ob die Antwort eine Zustimmung des Eigentümers zu der Speicherung des Koeffizienten umfasst. Umfasst die Antwort des Eigentümers eine Zustimmung zu dem Speichern des Koeffizienten in dem Datenblock, wird der Koeffizient in Schritt 908 entsprechend geändert. Bei der Zustimmung kann es sich beispielsweise um den mit einem Signierschlüssel des Eigentümers signierten Koeffizienten handeln. In diesem Fall wird die Zustimmung des Eigentümers beispielsweise unter Verwendung eines Signaturprüfschlüssels vor der Speicherung geprüft. Zusätzlich oder alternativ kann der Koeffizient in signierter Form in dem Datenblock gespeichert werden. Umfasst die in Schritt 904 empfangene Antwort eine Ablehnung der Änderung durch den Eigentümer, so erfolgt keine Änderung. Ebenso kann eine Änderung blockiert werden, wenn keine Antwort des Eigentümers innerhalb eines vordefinierten Zeitfensters empfangen wird. Umfasst die Antwort des Eigentümers keine Zustimmung zu dem Ändern des Koeffizienten in dem Datenblock, wird in Schritt 910 eine Fehlermeldung versendet.

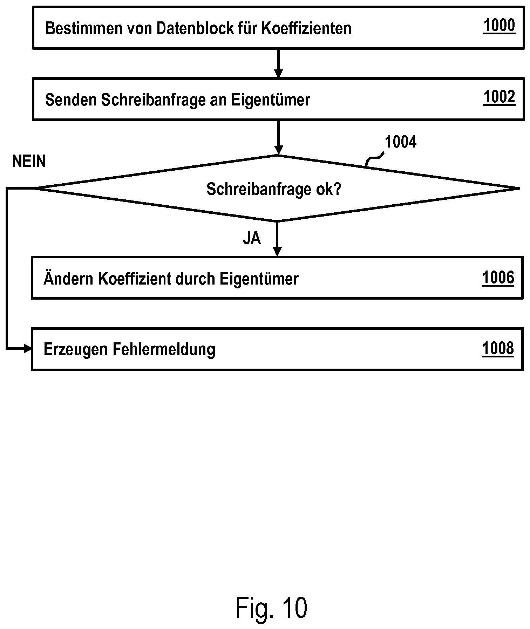

Figur 10 zeigt eine alternative Ausführungsform des Zustimmungsverfahrens gemäß Figur 9. Der Schritt 1000 entspricht dem Schritt 900 der Figur 9. Allerdings sind im vorliegenden Fall ausschließlich die Eigentümer der Datenblöcke zum Ändern von Koeffizienten in den entsprechenden Datenblöcken berechtigt. Mit anderen Worten allein die Eigentümer haben das Schreibrecht zum Ändern bzw. Schreiben der Koeffizienten in die Datenblöcke. Mithin wird in Schritt 1002 eine Schreibanfrage an den Eigentümer des in Schritt 1000 identifizierten Datenblocks zusammen mit dem zu schreibenden oder zu löschenden Koeffizienten gesendet. Der Eigentümer prüft in Schritt 1004 die Schreibanfrage und im Fall seiner Zustimmung erfolgt in Schritt 1006 ein Ändern des Koeffizienten durch den Eigentümer in den entsprechenden Datenblock. Beispielsweise umfasst der in den Datenblock geschriebene Koeffizient eine Signatur des Eigentümers des Datenblocks, sodass die Authentizität des entsprechenden Koeffizienten bzw. der Zustimmung des Eigentümers zusätzlich durch die Signatur belegt wird. Falls der Eigentümer der Änderung nicht zustimmt, wird in Schritt 1008 eine Fehlermeldung versendet.

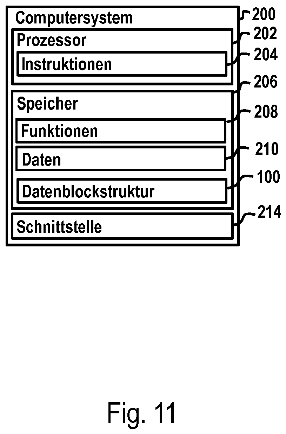

Figur 11 zeigt ein schematisches Blockdiagramm einer Ausführungsform eines exemplarischen Datenspeichersystems 200 in Form eines Computersystems zum manipulationssicheren Speichern von Daten 210 in einem elektronischen Speicher 206 unter Verwendung einer Datenblockstruktur 100. Das Computersystem 200 umfasst einen Prozessor 202, welcher dazu konfiguriert ist, Programminstruktionen 204 auszuführen. Durch Ausführung der Programminstruktionen 204 steuert der Prozessor 202 das Computersystem 200 so, dass es eine der zuvor beschriebenen Ausführungsformen des Verfahrens zum manipulationssicheren Speichern von Daten ausführt.

Das Computersystem 200 umfasst ferner einen Speicher 206, in welchem Funktionen 208 zum Erstellen von datenblockabhängigen Funktionen, zum Kombinieren der erstellten Funktionen und zum Bestimmen von kombinationsabhängigen Koeffizient zur kryptographischen Sicherung der in der Datenblockstruktur 100 zu speichernden Daten 210 gespeichert sind. Beispielsweise umfassen die Funktionen 208 eine Funktionenschar, aus welcher die datenblockabhängigen Funktionen durch Einsetzten von datenblockabhängigen Prüfwerten als Parameter bestimmt werden. Der Speicher 206 kann beispielsweise zudem Daten 210 umfassen, welche unter Verwendung der Datenblockstruktur 100 gegen Manipulationen geschützt bzw. manipulationssicher gespeichert werden sollen. Beispielsweise führt das Computersystem 200 eines der Verfahren gemäß Figuren 3 bis 10 aus und erzeugt einen zusätzlichen Datenblock für die Datenblockstruktur 100, ändert die Daten eines Datenblocks der Datenblockstruktur 100 oder löscht einen Datenblock der Datenblockstruktur 100. Hierzu wird beispielsweise ein Prüfwert der zu speichernden Daten 210 berechnet und als Parameter in eine Funktion einer Funktionenschar eingesetzt, sodass eine datenabhängige Funktion für die entsprechenden Daten bzw. für den die entsprechenden Daten 210 speichernden Datenblock entsteht. Für die bidirektionale Verknüpfung des zusätzlichen Datenblocks mit den bestehenden Datenblöcken der Datenstruktur 100 bzw. zum Aktualisieren der Datenstruktur 100 nach einer Änderung von gespeicherten Daten bzw. einem Löschen eines Datenblocks werden datenabhängige Prüfwerte, datenabhängige Funktionen und Koeffizienten von Kombinationen der Funktionen unter Verwendung der Programminstruktionen 204 und der Funktionen 208 berechnet.

Schließlich umfasst das Computersystem 200 eine Kommunikationsschnittstelle 214. Bei dieser Kommunikationsschnittstelle 214 kann es sich beispielsweise um eine Netzwerkschnittstelle zur Kommunikation über ein Netzwerk oder um eine Schnittelle zur Kommunikation mit einem Wechseldatenträger handeln. Über die Kommunikationsschnittstelle 214 können beispielsweise die Daten 210 und/oder die Datenblockstruktur 100 bereitgestellt werden. Ferner kann es sich bei der Kommunikationsschnittstelle 214 um eine Nutzerschnittstelle zur Eingabe von Befehlen durch einen Nutzer und/oder zur Ausgabe von Ergebnissen handeln.

Über die Kommunikationsschnittstelle 214 werden beispielsweise die zu speichernden Daten 210 empfangen. Ferner werden ein oder mehrere resultierende Datenblöcke und/oder die vollständige Datenblockstruktur 100 versendet.

Nach Ausführungsformen können die Programminstruktionen 204 beispielsweise ein Datenbankmanagementsystem umfassen, welches in dem Speicher 206 gespeicherte Datenblockstrukturen, wie etwa Datenblockstruktur 100, verwaltet.

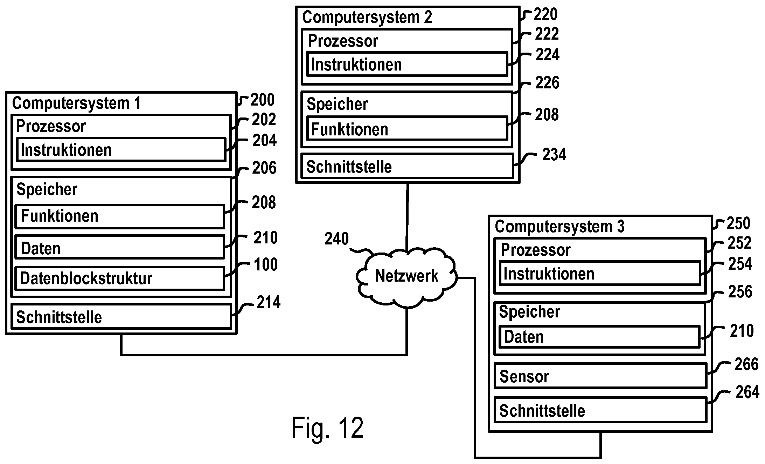

Figur 12 zeigt das exemplarische Datenspeichersystem 200 aus Figur 11, welches als ein Telekommunikationssystem konfiguriert ist, das mittels der Kommunikationsschnittstelle 214 über das Netzwerk 240 mit anderen Computersystemen, wie etwa den Computersystemen 220, 250, kommunizieren kann. Beispielsweise werden die Daten 210 von dem Computersystem 250 über das Netzwerk 240 bereitgestellt.

Das Computersystem 250 umfasst beispielsweise einen Speicher 256 zum Speichern der Daten 210, welche durch das Computersystem 200 gegen Manipulationen gesichert werden sollen. Nach Ausführungsformen handelt es sich bei den Daten 210 um Daten, welche kennzeichnend für ein digital codiertes Dokument sind. Beispielsweise handelt es sich bei den Daten 210 um einen Hashwert des Inhalts eines digital codierten Dokuments. Nach weiteren Ausführungsformen handelt es sich bei den Daten 210 um Transaktionsdaten einer von dem Computersystem 250 veranlassten, protokollierten und/oder ausgeführten Transaktion. Nach weiteren Ausführungsformen handelt es bei den Daten 210 um Sensordaten, welche mittels eines Sensors 266 des Computersystems 250 erfasst wurden. Ferner umfasst das Computersystem 250 einen Prozessor 252, welcher dazu konfiguriert ist, Programminstruktionen 254 auszuführen. Nach Ausführungsformen ist das Computersystems 250 ebenfalls als ein Telekommunikationssystem konfiguriert sein, welches mittels der Kommunikationsschnittstelle 264 über das Netzwerk 240 mit dem Computersystemen 200 kommunizieren kann. Ein Ausführen der Programminstruktionen 254 durch den Prozessor 252 veranlasst das Computersystems 250 beispielsweise die Daten 210 an das Computersystem 200 zu senden. Das Übersenden der Daten 210 über das Netzwerk 240 kann dabei beispielsweise in Antwort auf eine Anfrage durch das Computersystem 200 oder auf eigene Initiative durch das Computersystem 250 veranlasst erfolgen.

Die Figur 12 zeigt zudem das Computersystem 220, welche beispielsweise ebenfalls als ein Telekommunikationssystem konfiguriert ist und mittels der Kommunikationsschnittstelle 264 über das Netzwerk 240 mit dem Computersystemen 200 kommunizieren kann. Das Computersystem 220 umfasst beispielsweise einen Prozessor 222 mit Programminstruktionen 224. Der Prozessor 222 ist dazu konfiguriert die Programminstruktionen 224 auszuführen. Beispielsweise ist das Computersystemen 200 einem Eigentümer eines Datenblocks der Datenblockstruktur 100 zugeordnet, in welchem ein kombinationsabhängiger Koeffizient gespeichert werden soll. Auf Anfrage über das Netzwerk 240 hin, stimmt das Computersystem 250 der Speicherung zu. Die Zustimmung wird beispielsweise durch Signieren des Koeffizienten mit einem dem Eigentümer zugeordneten privaten Schlüssel. Der privaten Schlüssel ist beispielsweise in einem geschützten Speicherbereich des Speichers 256 gespeichert.

Unter einem "geschützten Speicherbereich" wird hier ein Bereich des elektronischen Speichers 256 verstanden, auf den ein Zugriff, das heißt ein Lesezugriff oder ein Schreibzugriff, nur über den Prozessor 252 des Computersystems 250 möglich ist. Nach Ausführungsformen ist der Zugriff von dem mit dem Speicher 256 gekoppelten Prozessor 252 nur dann möglich, wenn eine hierzu erforderliche Bedingung erfüllt ist. Hierbei kann es sich zum Beispiel um eine kryptographische Bedingung, insbesondere eine erfolgreiche Authentisierung und/oder eine erfolgreiche Berechtigungsprüfung, handeln.

Ferner kann ein Ausführen der Programminstruktionen 224 durch den Prozessor 222 das Computersystems 220 dazu veranlassen, die um die Daten 210 erweiterte Datenblockstruktur 100 über das Netzwerk von dem Computersystem 200 anzufragen. In Antwort auf eine entsprechende Anfrage empfängt das Computersystems 220 beispielsweise ein oder mehrere Datenblöcke der Datenblockstruktur 100 und/oder die vollständige Datenblockstruktur 100. Nach Ausführungsformen kann das Computersystems 220 die Datenblockstruktur 100 in der Datenblockstruktur 100 gespeicherte Daten auslesen. Die Integrität der ausgelesenen Daten kann das Computersystems 220 beispielsweise unter Verwendung der in dem Speicher 226 gespeicherten Funktionen 208 prüfen. Mit den Funktionen 208 können die kombinationsabhängigen Koeffizienten, welche die Datenblöcke der Datenblockstruktur 100 miteinander verketten, nachgerechnet und auf Konsistenz bzw. Integrität geprüft werden. Bei den ausgelesenen Daten handelt es sich beispielsweise um Daten zum Belegen der Authentizität eines digital codierten Dokuments. Das entsprechende Dokument wird dem Computersystem 220 beispielsweise von dem Computersystem 250 über das Netzwerk 240 zur Verfügung gestellt. Handelt es sich bei den ausgelesenen Daten beispielsweise um einen Hashwert der in dem Dokument gespeicherten Daten 210, so kann anhand dieser Daten 210 die Authentizität des bereitgestellten Dokuments geprüft werden. Beispielsweise wird für das Dokument ein Hashwert durch das Computersystem 220 berechnet, welcher als Parameter für eine Funktion der Funktionenschar 208 verwendet wird.

Die durch das Computersystem 220 empfangene Datenblockstruktur 100 kann insbesondere auch für Prüfungen im Offline-Modus genutzt werden, d.h. wenn das Netzwerk 240 temporär nicht zur Verfügung steht. So können Daten, welche mithilfe der Datenblockstruktur 100 auf ihre Authentizität zu überprüfen sind, beispielsweise durch das Computersystem 220 direkt empfangen oder eingelesen werden, ohne Netzwerk 240. Diese Daten können dann unter Verwendung der Datenblockstruktur 100 auf ihre Authentizität überprüft werden.

Bezugszeichenliste

| 100 | Datenblockstruktur |
|-----|--------------------|
| 102 | Datenblock |
| 104 | Datenblock |
| 106 | Datenblock |
| 108 | Datenblock |

| | |
|---|---|
| 110 | Datenblock |
| 120 | Gruppe |
| 122 | Gruppe |
| 124 | Gruppe |
| 126 | Gruppe |
| 200 | Computersystem |
| 202 | Prozessor |
| 204 | Programminstruktionen |
| 206 | Speicher |
| 208 | Funktionen |
| 210 | Daten |
| 214 | Kommunikationsschnittstelle |
| 220 | Computersystem |
| 222 | Prozessor |
| 224 | Programminstruktionen |
| 226 | Speicher |
| 234 | Kommunikationsschnittstelle |
| 240 | Netzwerk |
| 250 | Computersystem |
| 252 | Prozessor |
| 254 | Programminstruktionen |
| 256 | Speicher |
| 264 | Kommunikationsschnittstelle |
| 266 | Sensor |
| $B_1, ..., B_N$ | Datenblock |
| $D_1, ..., D_N$ | Daten |
| $\xi_1, ..., \xi_N$ | datenabhängige Funktion |
| $c_1, ..., c_N$ | Koeffizient |
| $\Psi$ | Zustandsfunktion |

**Patentansprüche**

1. Verfahren zum manipulationssicheren Speichern von Daten ($D_1, ..., D_N$) in einem elektronischen Speicher (206) unter Verwendung einer Datenblockstruktur (100), welche eine Mehrzahl von Datenblöcken (102, ..., 110) umfasst, wobei jedem der Datenblöcke (102, ..., 110) eine Funktion ($\xi_1, ..., \xi_N$) zugeordnet ist, welche von den in dem entsprechenden Datenblock (102, ..., 110) gespeicherten Daten ($D_1, ..., D_N$) abhängig ist, wobei das Verfahren zum gegenseitigen Verknüpfen aller Datenblöcke (102, ..., 110) einer ersten Gruppe (120, ..., 126) von Datenblöcken (102, ..., 110), sodass jeder Datenblock (102, ..., 110) der ersten Gruppe (120, ..., 126) von allen anderen Datenblöcken (102, ..., 110) der ersten Gruppe (120, ..., 126) abhängig ist, umfasst:

   • für die erste Gruppe (120, ..., 126) von Datenblöcken (102, ..., 110):

   o Bestimmen der Funktionen ($\xi_1, ..., \xi_N$), welche den Datenblöcken (102, ..., 110) der ersten Gruppe (120, ..., 126) zugeordnet sind,
   o Erstellen einer ersten Kombination ($\Psi$) aller Funktionen ($\xi_1, ..., \xi_N$), welche den Datenblöcken (102, ..., 110) der ersten Gruppe (120, ..., 126) zugeordnet sind,
   o Bestimmen eines kombinationsabhängigen Koeffizienten ($c_1, ..., c_N$) für jede Funktion ($\xi_1, ..., \xi_N$) der ersten Kombination ($\Psi$), sodass die erste Kombination ($\Psi$) eine erste vordefinierte Bedingung erfüllt,

   • für jeden Datenblock (102, ..., 110) der ersten Gruppe (120, ..., 126):

   o Bestimmen einer dem entsprechenden Datenblock (102, ..., 110) zugeordneten Kontrollgruppe von Datenblöcken (102, ..., 110) der ersten Gruppe (120, ..., 126),
   o Speichern des Koeffizienten ($c_1, ..., c_N$), welcher für die Funktion ($\xi_1, ..., \xi_N$) des entsprechenden Datenblocks (102, ..., 110) bestimmt wurde, in allen Datenblöcken (102, ..., 110) der Kontrollgruppe.

2. Verfahren nach Anspruch 1, wobei die Kontrollgruppen jeweils alle Datenblöcke (102, ..., 110) der ersten Gruppe (120, ..., 126) umfassen bis auf den Datenblock (102, ..., 110), welchem sie zugeordnet sind, und/oder

> wobei die Kontrollgruppen, welche den Datenblöcken (102, ..., 110) einer ersten der Kontrollgruppen zugeordnet sind, jeweils den Datenblock umfassen, welchem die erste Kontrollgruppe zugeordnet ist,
> wobei vorzugsweise im Falle jeder Kontrollgruppe jeweils eine bidirektionale Verknüpfung zwischen dem Datenblock (102, ..., 110), welchem die entsprechende Kontrollgruppe zugeordnet ist, und jedem von der Kontrollgruppe umfassten Datenblock (102, ..., 110) implementiert wird.

3. Verfahren nach einem der vorangehenden Ansprüche, wobei die erste Gruppe (120, ..., 126) drei oder mehr Datenblöcke (102, ..., 110) umfasst und/oder

> wobei zumindest eine der Kontrollgruppen drei oder mehr Datenblöcke (102, ..., 110) umfasst und/oder
> wobei die Kombination ($\Psi$) unter Verwendung einer Verbindungsfunktion zum Verbinden aller den Datenblöcken (102, ..., 110) der ersten Gruppe (120, ..., 126) zugeordneten Funktionen ($\xi_1$, ..., $\xi_N$) erstellt wird und/oder
> wobei die erste vordefinierten Bedingung eine Extremwertbedingung umfasst. wobei die Anzahl der Datenblöcke (102, ..., 110), welche die erste Gruppe (120, ..., 126) umfasst, abhängig ist von einem Sicherheitsniveau zumindest eines Datenblocks (102, ..., 110) der ersten Gruppe (120, ..., 126).

4. Verfahren nach einem der vorangehenden Ansprüche, wobei eine Zuordnung der Datenblöcke (102, ..., 110) zu der ersten Gruppe (120, ..., 126) unter Verwendung eines ersten Zuordnungskriteriums erfolgt, wobei vorzugsweise das erste Zuordnungskriterium eine Zuordnung der Inhalte der entsprechenden Datenblöcke (102, ..., 110) zu einer gemeinsamen Inhaltskategorie, eine Zuordnung der Inhalte der entsprechenden Datenblöcke (102, ..., 110) zu einem gemeinsamen Sicherheitsniveau, eine Zuordnung der Eigentümer der entsprechenden Datenblöcke (102, ..., 110) zu einem gemeinsamen Eigentümergruppe, eine Zuordnung der Inhalte der entsprechenden Datenblöcke (102, ..., 110) zu einem Abhängigkeitsverhältnis und/oder eine Zuordnung der Eigentümer der entsprechenden Datenblöcke (102, ..., 110) zu einem Abhängigkeitsverhältnis umfasst.

5. Verfahren nach einem der vorangehenden Ansprüche, wobei die Anzahl der Datenblöcke (102, ..., 110), welche die Kontrollgruppen jeweils umfassen, abhängig ist von einem Sicherheitsniveau des Datenblocks (102, ..., 110), welchem die entspreche Kontrollgruppe zugeordnet ist, und/oder

> wobei die Bestimmung der Datenblöcke (102, ..., 110), welche die Kontrollgruppen jeweils umfassen, unter Verwendung eines zweiten Zuordnungskriteriums erfolgt,
> wobei vorzugsweise das zweite Zuordnungskriterium eine Zuordnung der Inhalte der entsprechenden Datenblöcke (102, ..., 110) zu einer gemeinsamen Inhaltskategorie, eine Zuordnung der Inhalte der entsprechenden Datenblöcke (102, ..., 110) zu einem gemeinsamen Sicherheitsniveau, eine Zuordnung der Eigentümer der entsprechenden Datenblöcke (102, ..., 110) zu einem gemeinsamen Eigentümergruppe, eine Zuordnung der Inhalte der entsprechenden Datenblöcke (102, ..., 110) zu einem Abhängigkeitsverhältnis und/oder eine Zuordnung der Eigentümer der entsprechenden Datenblöcke (102, ..., 110) zu einem Abhängigkeitsverhältnis umfasst.

6. Verfahren nach einem der vorangehenden Ansprüche, wobei jedem Datenblock (102, ..., 110) zumindest ein Eigentümer zugeordnet ist und wobei das Speichern der Koeffizienten ($c_1$, ..., $c_N$) in den Datenblöcken (102, ..., 110) jeweils eine Zustimmung des zumindest einen Eigentümers des entsprechenden Datenblocks (102, ..., 110) voraussetzt,

> wobei vorzugsweise die Zustimmungen jeweils eine Signatur des entsprechenden Koeffizienten ($c_1$, ..., $c_N$) mit einem privaten Signaturschlüssel des Eigentümers des Datenblocks (102, ..., 110) umfasst, zu welchem der Koeffizient ($c_1$, ..., $c_N$) hinzugefügt werden soll, und/oder
> wobei vorzugsweise die Eigentümer der Datenblöcke (102, ..., 110) jeweils ein ausschließliches Schreibrecht zum Hinzufügen von Daten ($D_1$, ..., $D_N$) zu den jeweiligen Datenblöcken (102, ..., 110) besitzen.

7. Verfahren nach einem der vorangehenden Ansprüche, wobei das Verfahren zum Prüfen der Datenintegrität eines der Datenblocks (102, ..., 110) der ersten Gruppe (120, ..., 126) von Datenblöcken (102, ..., 110) ferner umfasst:

> o Bestimmen der Funktionen ($\xi_1$, ..., $\xi_N$), welche den Datenblöcken (102, ..., 110) der ersten Gruppe (120, ..., 126) zugeordnet sind,
> o Erstellen der ersten Kombination ($\Psi$) aller Funktionen ($\xi_1$, ..., $\xi_N$), welche den Datenblöcken (102, ..., 110) der ersten Gruppe (120, ..., 126) zugeordnet sind,

○ Bestimmen des kombinationsabhängigen Koeffizienten ($c_1$, ..., $c_N$) für die Funktion ($\xi_1$, ..., $\xi_N$) des zu prüfenden Datenblocks (102, ..., 110) als Prüfkoeffizient, sodass die erste Kombination ($\Psi$) die erste vordefinierte Bedingung erfüllt,

○ Vergleichen des Prüfkoeffizienten mit den in den Datenblöcken (102, ..., 110) der Kontrollgruppe des zu prüfenden Datenblocks (102, ..., 110) für die Funktion ($\xi_1$, ..., $\xi_N$) des entsprechenden Datenblocks (102, ..., 110) gespeicherten Koeffizienten ($c_1$, ..., $c_N$),

○ falls ein vordefiniertes Übereinstimmungskriterium zwischen dem Prüfkoeffizienten und den gespeicherten Koeffizienten ($c_1$, ..., $c_N$) erfüllt ist, Bestätigen der Datenintegrität des zu prüfenden Datenblocks (102, ..., 110).

8.  Verfahren nach Anspruch 7, wobei das vordefinierte Übereinstimmungskriterium erfüllt ist, falls eine Identität zwischen dem Prüfkoeffizienten und zumindest einem der gespeicherten Koeffizienten ($c_1$, ..., $c_N$) besteht,

wobei vorzugsweise das vordefinierte Übereinstimmungskriterium erfüllt ist, falls die Identität zwischen dem Prüfkoeffizienten und allen gespeicherten Koeffizienten ($c_1$, ..., $c_N$) besteht, und/oder

wobei die Datenintegrität aller Datenblöcke (102, ..., 110) der ersten Gruppe (120, ..., 126) geprüft wird.

9.  Verfahren nach einem der Ansprüche 1 bis 6, wobei das Verfahren zum Prüfen der Datenintegrität der Datenblöcke (102, ..., 110) der ersten Gruppe (120, ..., 126) von Datenblöcken (102, ..., 110) ferner umfasst:

○ Bestimmen der Funktionen ($\xi_1$, ..., $\xi_N$), welche den Datenblöcken (102, ..., 110) der ersten Gruppe zugeordnet sind,

○ Erstellen der ersten Kombination ($\Psi$) aller Funktionen ($\xi_1$, ..., $\xi_N$), welche den Datenblöcken (102, ..., 110) der ersten Gruppe (120, ..., 126) zugeordnet sind,

○ Prüfen, ob die erstellte erste Kombination ($\Psi$) mit den in den Datenblöcken (102, ..., 110) der Kontrollgruppen der ersten Gruppe (120, ..., 126) gespeicherten Koeffizienten ($c_1$, ..., $c_N$) die erste vordefinierte Bedingung erfüllt,

○ falls die erste vordefinierte Bedingung erfüllt ist, Bestätigen der Datenintegrität der Datenblöcke (102, ..., 110) der ersten Gruppe (120, ..., 126).

10. Verfahren nach einem der Ansprüche 7 bis 9, wobei die Prüfung der Datenintegrität vor einem Auslesen von Daten ($D_1$, ..., $D_N$) aus ein oder mehreren Datenblöcken (102, ..., 110) der ersten Gruppe (120, ..., 126) zumindest für die Datenblöcke (102, ..., 110) ausgeführt wird, aus welchen Daten ($D_1$, ..., $D_N$) ausgelesen werden.

11. Verfahren nach einem der vorangehenden Ansprüche, wobei das Verfahren ferner umfasst:

○ Ändern der Daten ($D_1$, ..., $D_N$) eines Datenblocks (102, ..., 110) der ersten Gruppe (120, ..., 126),

○ Bestimmen einer aktualisierten Funktion ($\xi_1$, ..., $\xi_N$), welche dem geänderten Datenblock (102, ..., 110) zugeordnet und von den geänderten Daten ($D_1$, ..., $D_N$) des geänderten Datenblocks (102, ..., 110) abhängig ist,

○ Erstellen einer aktualisierten Kombination ($\Psi$) aller Funktionen ($\xi_1$, ..., $\xi_N$), welche den Datenblöcken (102, ..., 110) der ersten Gruppe (120, ..., 126) zugeordnet sind, wobei die aktualisierte Kombination ($\Psi$) für den geänderten Datenblock (102, ..., 110) die aktualisierte Funktion ($\xi_1$, ..., $\xi_N$) umfasst,

○ Bestimmen eines aktualisierten kombinationsabhängigen Koeffizienten ($c_1$, ..., $c_N$) für jede Funktion ($\xi_1$, ..., $\xi_N$) der aktualisierten Kombination ($\Psi$), sodass die aktualisierte Kombination ($\Psi$) die erste vordefinierte Bedingung erfüllt,

○ Ersetzen der in den Datenblöcken (102, ..., 110) der Kontrollgruppen der ersten Gruppe (120, ..., 126) gespeicherten Koeffizienten ($c_1$, ..., $c_N$), welche für die erste Kombination ($\Psi$) bestimmt wurden, jeweils durch einen aktualisierten Koeffizienten ($c_1$, ..., $c_N$), welcher für die aktualisierte Kombination ($\Psi$) bestimmt wurde, und/oder

wobei das Verfahren ferner umfasst:

○ Bestimmen eines zu löschenden Datenblocks (102, ..., 110) der ersten Gruppe (120, ..., 126),

○ Löschen der Koeffizienten ($c_1$, ..., $c_N$) der Funktion ($\xi_1$, ..., $\xi_N$) des zu löschenden Datenblocks (102, ..., 110) in den Datenblöcken der Kontrollgruppen des zu löschenden Datenblocks (102, ..., 110),

○ Löschen des zu löschenden Datenblocks (102, ..., 110),

○ Erstellen einer aktualisierten Kombination ($\Psi$) aller Funktionen ($\xi_1$, ..., $\xi_N$), welche den verbleibenden Datenblöcken (102, ..., 110) der ersten Gruppe (120, ..., 126) zugeordnet sind,

○ Bestimmen eines aktualisierten kombinationsabhängigen Koeffizienten ($c_1$, ..., $c_N$) für jede Funktion ($\xi_1$, ..., $\xi_N$) der aktualisierten Kombination ($\Psi$), sodass die aktualisierte Kombination ($\Psi$) die erste vordefinierte Bedingung erfüllt,

o Ersetzen der in den verbleibenden Datenblöcken (102, ..., 110) der Kontrollgruppen der ersten Gruppe (120, ..., 126) gespeicherten Koeffizienten ($c_1$, ..., $c_N$), welche für die erste Kombination ($\Psi$) bestimmt wurden, jeweils durch einen aktualisierten Koeffizienten ($c_1$, ..., $c_N$), welcher für die aktualisierte Kombination ($\Psi$) bestimmt wurde, und/oder

wobei das Verfahren ferner umfasst:

o Hinzufügen eines zusätzlichen Datenblocks (102, ..., 110) zu der ersten Gruppe (120, ..., 126) von Datenblöcken (102, ..., 110),

o Bestimmen einer zusätzlichen Funktion ($\xi_1$, ..., $\xi_N$), welche dem zusätzlichen Datenblock (102, ..., 110) zugeordnet und von den Daten ($D_1$, ..., $D_N$) des zusätzlichen Datenblocks (102, ..., 110) abhängig ist,

o Erstellen einer erweiterten Kombination ($\Psi$) aller Funktionen ($\xi_1$, ..., $\xi_N$), welche den Datenblöcken (102, ..., 110) der ersten Gruppe (120, ..., 126) zugeordnet sind, aus der ersten Kombination ($\Psi$) und der zusätzlichen Funktion ($\xi_1$, ..., $\xi_N$),

o Bestimmen eines erweiterten kombinationsabhängigen Koeffizienten ($c_1$, ..., $c_N$) für jede Funktion ($\xi_1$, ..., $\xi_N$) der erweiterten Kombination ($\Psi$), sodass die erweiterte Kombination ($\Psi$) die erste vordefinierte Bedingung erfüllt,

o Ersetzen der in den Datenblöcken (102, ..., 110) der Kontrollgruppen der ersten Gruppe (120, ..., 126) gespeicherten Koeffizienten ($c_1$, ..., $c_N$), welche für die erste Kombination ($\Psi$) bestimmt wurden, jeweils durch einen erweiterten Koeffizienten ($c_1$, ..., $c_N$), welcher für die erweiterte Kombination ($\Psi$) bestimmt wurde,

o Bestimmen einer zusätzlichen Kontrollgruppe von Datenblöcken (102, ..., 110) der ersten Gruppe (120, ..., 126) für den zusätzlichen Datenblock (102, ..., 110),

o Speichern des für die zusätzliche Funktion ($\xi_1$, ..., $\xi_N$) des zusätzlichen Datenblocks (102, ..., 110) bestimmten erweiterten Koeffizienten ($c_1$, ..., $c_N$) in allen Datenblöcken (102, ..., 110) der zusätzlichen Kontrollgruppe.

**12.** Verfahren nach einem der vorangehenden Ansprüche, wobei das Verfahren zum gegenseitigen Verknüpfen aller Datenblöcke (102, ..., 110) einer zweiten Gruppe (120, ..., 126) von Datenblöcken (102, ..., 110), sodass jeder Datenblock (102, ..., 110) der zweiten Gruppe (120, ..., 126) von allen anderen Datenblöcken (102, ..., 110) der zweiten Gruppe (120, ..., 126) abhängig ist, ferner umfasst:

• für die zweite Gruppe (120, ..., 126) von Datenblöcken (102, ..., 110):

o Bestimmen der Funktionen ($\xi_1$, ..., $\xi_N$), welche den Datenblöcken (102, ..., 110) der zweiten Gruppe (120, ..., 126) zugeordnet sind,

o Erstellen einer zweiten Kombination ($\Psi$) aller Funktionen ($\xi_1$, ..., $\xi_N$), welche den Datenblöcken (102, ..., 110) der zweiten Gruppe (120, ..., 126) zugeordnet sind,

o Bestimmen eines kombinationsabhängigen Koeffizienten ($c_1$, ..., $c_N$) für jede Funktion ($\xi_1$, ..., $\xi_N$) der zweiten Kombination ($\Psi$), sodass die zweite Kombination ($\Psi$) eine erste vordefinierte Bedingung erfüllt,

• für jeden Datenblock (102, ..., 110) der zweiten Gruppe (120, ..., 126):

o Bestimmen einer dem entsprechenden Datenblock (102, ..., 110) zugeordneten Kontrollgruppe von Datenblöcken (102, ..., 110) der zweiten Gruppe (120, ..., 126),

o Speichern des Koeffizienten ($c_1$, ..., $c_N$), welcher für die Funktion ($\xi_1$, ..., $\xi_N$) des entsprechenden Datenblocks (102, ..., 110) bestimmt wurde, in allen Datenblöcken (102, ..., 110) der Kontrollgruppe,

wobei vorzugsweise die zweite Gruppe (120, ..., 126) von Datenblöcken (102, ..., 110) einen Teil der Datenblöcke (102, ..., 110) der ersten Gruppe (120, ..., 126) von Datenblöcken (102, ..., 110) umfasst, und/oder

wobei vorzugsweise die zweite Gruppe (120, ..., 126) von Datenblöcken (102, ..., 110) alle Datenblöcke (102, ..., 110) der ersten Gruppe (120, ..., 126) von Datenblöcken (102, ..., 110) umfasst.

**13.** Verfahren nach einem der vorangehenden Ansprüchen, wobei für drei oder mehr Gruppen (120, ..., 126) von Datenblöcken (102, ..., 110) die Datenblöcke (102, ..., 110) der jeweiligen Gruppe (120, ..., 126) so gegenseitig verknüpft werden, dass jeder Datenblock (102, ..., 110) der entsprechenden Gruppe (120, ..., 126) von allen anderen Datenblöcken (102, ..., 110) der entsprechenden Gruppe (120, ..., 126) abhängig ist, wobei die einzelnen Gruppen (120, ..., 126) der Reihe nach jeweils zumindest einen Datenblock (102, ..., 110) der Vorgängergruppe in der Reihe umfasst und die letzte Gruppe (120, ..., 126) der Reihe die Vorgängergruppe der ersten Gruppe (120, ..., 126) der Reihe ist, sodass die Datenblöcke (102, ..., 110) jeder der drei oder mehr Gruppen (120, ..., 126) von den Datenblöcken (102, ..., 110) aller anderen Gruppen (120, ..., 126) abhängig sind, und/oder

wobei für vier oder mehr Gruppen (120, ..., 126) von Datenblöcken (102, ..., 110) die Datenblöcke (102, ..., 110) der jeweiligen Gruppe (120, ..., 126) so gegenseitig verknüpft werden, dass jeder Datenblock (102, ..., 110) der entsprechenden Gruppe (120, ..., 126) von allen anderen Datenblöcken (102, ..., 110) der entsprechenden Gruppe (120, ..., 126) abhängig ist, wobei eine der vier oder mehr Gruppen (120, ..., 126) zumindest einen Datenblock (102, ..., 110) aller weiteren der vier oder mehr Gruppen (120, ..., 126) umfasst, sodass die Datenblöcke (102, ..., 110) jeder der vier oder mehr Gruppen (120, ..., 126) von den Datenblöcken (102, ..., 110) aller anderen Gruppen (120, ..., 126) abhängig sind.

14. Elektronisches Datenspeichersystem (200) zum manipulationssicheren Speichern von Daten ($D_1$, ..., $D_N$) in einem elektronischen Speicher (206) des Datenspeichersystem (200) unter Verwendung einer Datenblockstruktur (100), welche eine Mehrzahl von Datenblöcken (102, ..., 110) umfasst, wobei jedem der Datenblöcke (102, ..., 110) eine Funktion ($\xi_1$, ..., $\xi_N$) zugeordnet ist, welche von den in dem entsprechenden Datenblock (102, ..., 110) gespeicherten Daten ($D_1$, ..., $D_N$) abhängig ist, wobei das Datenspeichersystem (200) einen Prozessor (202) umfasst und in dem elektronischen Speicher (206) maschinenlesbaren Instruktionen (204) gespeichert sind, wobei ein Ausführen der maschinenlesbaren Instruktionen (204) durch den Prozessor (202) das Datenspeichersystem (200) dazu veranlasst, ein Verfahren zum gegenseitigen Verknüpfen aller Datenblöcke (102, ..., 110) einer Gruppe (120, ..., 126) von Datenblöcken (102, ..., 110) auszuführen, sodass jeder Datenblock (102, ..., 110) der Gruppe (120, ..., 126) von allen anderen Datenblöcken (102, ..., 110) der Gruppe (120, ..., 126) abhängig ist, welches umfasst:

   • für die Gruppe (120, ..., 126) von Datenblöcken (102, ..., 110):

      o Bestimmen der Funktionen ($\xi_1$, ..., $\xi_N$), welche den Datenblöcken (102, ..., 110) der Gruppe (120, ..., 126) zugeordnet sind,
      o Erstellen einer Kombination ($\Psi$) aller Funktionen ($\xi_1$, ..., $\xi_N$), welche den Datenblöcken (102, ..., 110) der Gruppe (120, ..., 126) zugeordnet sind,
      o Bestimmen eines kombinationsabhängigen Koeffizienten ($c_1$, ..., $c_N$) für jede Funktion ($\xi_1$, ..., $\xi_N$) der Kombination ($\Psi$), sodass die Kombination ($\Psi$) eine vordefinierte Bedingung erfüllt,

   • für jeden Datenblock (102, ..., 110) der Gruppe (120, ..., 126):

      o Bestimmen einer dem entsprechenden Datenblock (102, ..., 110) zugeordneten Kontrollgruppe von Datenblöcken (102, ..., 110) der Gruppe (120, ..., 126),
      o Speichern des Koeffizienten ($c_1$, ..., $c_N$), welcher für die Funktion ($\xi_1$, ..., $\xi_N$) des entsprechenden Datenblocks (102, ..., 110) bestimmt wurde, in allen Datenblöcken (102, ..., 110) der Kontrollgruppe.

15. Telekommunikationssystem, welches ein elektronisches Datenspeichersystem (200) nach Anspruch 14 und eine Kommunikationsschnittstelle (214) zum Kommunizieren über ein Netzwerk (240) umfasst, wobei zumindest einer der Datenblöcke (102, ..., 110) der ersten Gruppe (120, ..., 126) ein zusätzlich zu der ersten Gruppe (120, ..., 126) hinzugefügter Datenblock (102, ..., 110) mit in der Datenblockstruktur (100) zu speichernden Daten ($D_1$, ..., $D_N$) ist, wobei das Datenspeichersystem (200) dazu konfiguriert ist, das Verfahrens zum gegenseitigen Verknüpfen der Datenblöcken (102, ..., 110) auf ein Empfangen der zu speichernden Daten ($D_1$, ..., $D_N$) mittels der Kommunikationsschnittstelle (204) über das Netzwerk (240) auszuführen,
wobei in dem elektronischen Speicher (206) des Telekommunikationssystems vorzugsweise ferner maschinenlesbaren Instruktionen (204) gespeichert sind, deren Ausführung durch den Prozessor (202) das Datenspeichersystem (200) dazu veranlasst, ein Verfahren auszuführen, welches umfasst:

   • Empfangen einer Anfrage nach zumindest einem Teil eines Datenblocks (102, ..., 110) der Gruppe (120, ..., 126) von Datenblöcken (102, ..., 110) mittels der Kommunikationsschnittstelle (204) über das Netzwerk (240) von einem anfragenden Telekommunikationssystem,
   • Prüfen der Datenintegrität des angefragten Datenblocks (102, ..., 110), wobei die Integritätsprüfung umfasst:

      o Bestimmen der Funktionen ($\xi_1$, ..., $\xi_N$), welche den Datenblöcken (102, ..., 110) der Gruppe (120, ..., 126) zugeordnet sind,
      o Erstellen der ersten Kombination ($\Psi$) aller Funktionen ($\xi_1$, ..., $\xi_N$), welche den Datenblöcken (102, ..., 110) der Gruppe (120, ..., 126) zugeordnet sind
      o Bestimmen des kombinationsabhängigen Koeffizienten ($c_1$, ..., $c_N$) für die Funktion ($\xi_1$, ..., $\xi_N$) des zu prüfenden Datenblocks (102, ..., 110) als Prüfkoeffizient, sodass die Kombination ($\Psi$) die vordefinierte Bedingung erfüllt,
      o Vergleichen des Prüfkoeffizienten mit den in den Datenblöcken (102, ..., 110) der Kontrollgruppe des zu prüfenden Datenblocks (102, ..., 110) für die Funktion ($\xi_1$, ..., $\xi_N$) des entsprechenden Datenblocks (102, ..., 110) gespeicherten Koeffizienten ($c_1$, ..., $c_N$),

o falls ein vordefiniertes Übereinstimmungskriterium zwischen dem Prüfkoeffizienten und den gespeicherten Koeffizienten ($c_1$, ..., $c_N$) erfüllt ist, Bestätigen der Datenintegrität des zu prüfenden Datenblocks (102, ..., 110),

• auf die Bestätigung der Datenintegrität hin, Versenden des angefragten Teils der Datenblocks (102, ..., 110) sowie einer Bestätigungsnachricht zum Bestätigen der Datenintegrität des angefragten Datenblocks (102, ..., 110) mittels der Kommunikationsschnittstelle (204) über das Netzwerk (240) an das anfragende Telekommunikationssystem in Antwort auf die empfangene Anfrage.

## Claims

1. A method for storing data ($D_1$, ..., $D_N$) in a tamper-proof manner in an electronic memory (206), using a data block structure (100) comprising a plurality of data blocks (102, ..., 110), wherein each of the data blocks (102, ..., 110) is assigned a function ($\xi_1$, ..., $\xi_N$) that is dependent on the data ($D_1$, ..., $D_N$) stored in the corresponding data block (102, ..., 110),

   the method for mutually concatenating all data blocks (102, ..., 110) of a first group (120, ..., 126) of data blocks (102, ..., 110) so that each data block (102, ..., 110) of the first group (120, ..., 126) is dependent on all other data blocks (102, ..., 110) of the first group (120, ..., 126), comprising:

   • for the first group (120, ..., 126) of data blocks (102, ..., 110):

      o determining the functions ($\xi_1$, ..., $\xi_N$) assigned to the data blocks (102, ..., 110) of the first group (120., ..., 126);
      o creating a first combination ($\psi$) of all functions ($\xi_1$, ..., $\xi_N$) assigned to the data blocks (102, ..., 110) of the first group (120, ..., 126); and
      o determining a combination-dependent coefficient ($c_1$, ..., $c_N$) for each function ($\xi_1$, ..., $\xi_N$) of the first combination ($\psi$) so that the first combination ($\psi$) meets a first predefined condition;

   • for each data block (102, ..., 110) of the first group (120, ..., 126):

      o determining a control group of data blocks (102, ..., 110) of the first group (120, ..., 126) assigned to the corresponding data block (102, ..., 110); and
      o storing the coefficient ($c_1$, ..., $c_N$) that was determined for the function ($\xi_1$, ..., $\xi_N$) of the corresponding data block (102, ..., 110) in all data blocks (102, ..., 110) of the control group.

2. The method according to claim 1, wherein each of the control groups comprises all data blocks (102, ..., 110) of the first group (120, ..., 126), except for the data block (102, ..., 110) to which they are assigned, and/or

   wherein the control groups that are assigned to the data blocks (102, ..., 110) of a first of the control groups in each case include the data block to which the first control group is assigned,
   a respective bidirectional link between the data block (102, ..., 110) to which the corresponding control group is assigned and each data block (102, ..., 110) comprised by the control group preferably being implemented in the case of each control group.

3. A method according to any one of the preceding claims, wherein the first group (120, ..., 126) includes three or more data blocks (102, ..., 110) and/or

   wherein at least one of the control groups includes three or more data blocks (102, ... 110) and/or
   wherein the combination ($\psi$) is created using a connection function for connecting all functions ($\xi_1$, ..., $\xi_N$) assigned to the data blocks (102, ..., 110) of the first group (120, ..., 126) and/or
   wherein the first predefined condition encompasses an extreme value condition, and
   wherein the number of the data blocks (102, ..., 110) comprising the first group (120, ..., 126) is dependent on a security level of at least one data block (102, ..., 110) of the first group (120, ..., 126).

4. A method according to any one of the preceding claims, wherein the data blocks (102, ..., 110) are assigned to the first group (120, ..., 126) using a first assignment criterion,

the first assignment criterion preferably encompassing an assignment of the content of the corresponding data blocks (102, ..., 110) to a shared content category, an assignment of the content of the corresponding data blocks (102, ..., 110) to a shared security level, an assignment of the owners of the corresponding data blocks (102, ..., 110) to a shared owner group, an assignment of the content of the corresponding data blocks (102, ..., 110) to a dependency relationship and/or an assignment of the owners of the corresponding data blocks (102, ..., 110) to a dependency relationship.

5. A method according to any one of the preceding claims, wherein the number of the data blocks (102, ..., 110) comprising the control groups is dependent on a security level of the data block (102, ..., 110) to which the corresponding control group is assigned, and/or

wherein the data blocks (102, ..., 110) that comprise the respective control groups are determined using a second assignment criterion,
the second assignment criterion preferably encompassing an assignment of the content of the corresponding data blocks (102, ..., 110) to a shared content category, an assignment of the content of the corresponding data blocks (102, ..., 110) to a shared security level, an assignment of the owners of the corresponding data blocks (102, ..., 110) to a shared owner group, an assignment of the content of the corresponding data blocks (102, ..., 110) to a dependency relationship and/or an assignment of the owners of the corresponding data blocks (102, ..., 110) to a dependency relationship.

6. A method according to any one of the preceding claims, wherein at least one owner is assigned to each data block (102, ..., 110), and storing the coefficients ($c_1$, ..., $c_N$) in the data blocks (102, ..., 110) in each case requires a consent of the at least one owner of the corresponding data block (102, ..., 110),

the consents in each case including a signature of the corresponding coefficient ($c_1$, ..., $c_N$) with a private signature key of the owner of the data block (102, ..., 110) to which the coefficient ($c_1$, ..., $c_N$) is to be added, and/or wherein the owners of the data blocks (102, ..., 110) in each case preferably have an exclusive write permission for adding data ($D_1$, ..., $D_N$) to the particular data blocks (102, ..., 110).

7. A method according to any one of the preceding claims, wherein the method for checking the data integrity of one of the data blocks (102, ..., 110) of the first group (120, ..., 126) of data blocks (102, ..., 110) furthermore comprises:

○ determining the functions ($\xi_1$, ..., $\xi_N$) assigned to the data blocks (102, ..., 110) of the first group (120., ..., 126);
○ creating the first combination ($\psi$) of all functions ($\xi_1$, ..., $\xi_N$) assigned to the data blocks (102, ..., 110) of the first group (120, ..., 126);
○ determining the combination-dependent coefficient ($c_1$, ..., $c_N$) for the function ($\xi_1$, ..., $\xi_N$) of the data block (102, ..., 110) to be checked as a check coefficient so that the first combination ($\psi$) meets a first predefined condition;
○ comparing the check coefficient to the coefficients ($c_1$, ..., $c_N$) stored in the data blocks (102, ..., 110) of the control group of the data block (102, ..., 110) to be checked for the function ($\xi_1$, ..., $\xi_N$) of the corresponding data block (102, ..., 110); and
○ confirming the data integrity of the data block (102, ..., 110) to be checked when a predefined agreement criterion between the check coefficient and the stored coefficients ($c_1$, ..., $c_N$) is met.

8. The method according to claim 7, wherein the predefined agreement criterion is met when there is identity between the check coefficient and at least one of the stored coefficients ($c_1$, ..., $c_N$),

wherein the predefined agreement criterion is preferably met when there is identity between the check coefficient and all stored coefficients ($c_1$, ..., $c_N$), and/or
wherein the data integrity of all blocks (102, ..., 110) of the first group (120, ..., 126) is checked.

9. A method according to any one of claims 1 to 6, wherein the method for checking the data integrity of the data blocks (102, ..., 110) of the first group (120, ..., 126) of data blocks (102, ..., 110) furthermore comprises:

○ determining the functions ($\xi_1$, ..., $\xi_N$) assigned to the data blocks (102, ..., 110) of the first group;
○ creating the first combination ($\psi$) of all functions ($\xi_1$, ..., $\xi_N$) assigned to the data blocks (102, ..., 110) of the first group (120, ..., 126);
○ checking whether the created first combination ($\psi$) with the coefficients ($c_1$, ..., $c_N$) stored in the data blocks (102, ..., 110) of the control groups of the first group (120, ..., 126) meets the first predefined condition; and
∘ confirming the data integrity of the data blocks (102, ..., 110) of the first group (120, ..., 126) when the first predefined condition is met.

10. A method according to any one of claims 7 to 9, wherein the data integrity is checked prior to data ($D_1$, ..., $D_N$) being read out from one or more data blocks (102, ..., 110) of the first group (120, ..., 126), at least for the data blocks (102, ..., 110) from which data ($D_1$, ..., $D_N$) is being read out.

11. A method according to any one of the preceding claims, the method further comprising:

∘ altering the data ($D_1$, ..., $D_N$) of a data block (102, ..., 110) of the first group (120, ..., 126);
∘ determining an updated function ($\xi_1$, ..., $\xi_N$), which is assigned to the changed data block (102, ..., 110) and dependent on the changed data ($D_1$, ..., $D_N$) of the changed data block (102, ..., 110);
∘ creating an updated combination ($\psi$) of all functions ($\xi_1$, ..., $\xi_N$) assigned to the data blocks (102, ..., 110) of the first group (120, ..., 126), the updated combination ($\psi$) including the updated function ($\xi_1$, ..., $\xi_N$) for the changed data block (102, ..., 110);
∘ determining an updated combination-dependent coefficient ($c_1$, ..., $c_N$) for each function ($\xi_1$, ..., $\xi_N$) of the updated combination ($\psi$) so that the updated combination ($\psi$) meets the first predefined condition; and
∘ replacing the coefficients ($c_1$, ..., $c_N$) stored in the data blocks (102, ..., 110) of the control groups of the first group (120, ..., 126), which were determined for the first combination ($\psi$), with an updated coefficient ($c_1$, ..., $c_N$) which was determined for the updated combination ($\psi$), and/or
wherein the method further comprises:
∘ determining a data block (102, ..., 110) of the first group (120, ..., 126) to be deleted;
∘ deleting the coefficients ($c_1$, ..., $c_N$) of the function ($\xi_1$, ..., $\xi_N$) of the data block (102, ..., 110) to be deleted in the data blocks of the control groups of the data block (102, ..., 110) to be deleted;
∘ deleting the data block (102, ..., 110) to be deleted;
∘ creating an updated combination ($\psi$) of all functions ($\xi_1$, ..., $\xi_N$) assigned to the remaining data blocks (102, ..., 110) of the first group (120, ..., 126);
∘ determining an updated combination-dependent coefficient ($c_1$, ..., $c_N$) for each function ($\xi_1$, ..., $\xi_N$) of the updated combination ($\psi$) so that the updated combination ($\psi$) meets the first predefined condition; and
∘ replacing the coefficients ($c_1$, ..., $c_N$) stored in the remaining data blocks (102, ..., 110) of the control groups of the first group (120, ..., 126), which were determined for the first combination ($\psi$), with an updated coefficient ($c_1$, ..., $c_N$) which was determined for the updated combination ($\psi$), and/or
wherein the method further comprises:
∘ adding an additional data block (102, ..., 110) to the first group (120, ..., 126) of data blocks (102, ..., 110);
∘ determining an additional function ($\xi_1$, ..., $\xi_N$) which is assigned to the additional data block (102, ..., 110)) and dependent on the data ($D_1$, ..., $D_N$) of the additional data block (102, ..., 110);
∘ creating an expanded combination ($\psi$) of all functions ($\xi_1$, ..., $\xi_N$) assigned to the data blocks (102, ..., 110) of the first group (120, ..., 126) from the first combination ($\psi$) and the additional function ($\xi_1$, ..., $\xi_N$);
∘ determining an expanded combination-dependent coefficient ($c_1$, ..., $c_N$) for each function ($\xi_1$, ..., $\xi_N$) of the expanded combination ($\psi$) so that the expanded combination ($\psi$) meets the first predefined condition;
∘ replacing the coefficients ($c_1$, ..., $c_N$) stored in the data blocks (102, ..., 110) of the control groups of the first group (120, ..., 126), which were determined for the first combination ($\psi$), with an expanded coefficient ($c_1$, ..., $c_N$) which was determined for the expanded combination ($\psi$),
∘ determining an additional control group of data blocks (102, ..., 110) of the first group (120, ..., 126) for the additional data block (102, ..., 110); and
∘ storing the expanded coefficient ($c_1$, ..., $c_N$) determined for the additional function ($\xi_1$, ..., $\xi_N$) of the additional data block (102, ..., 110) in all data blocks (102, ..., 110) of the additional control group.

12. A method according to any one of the preceding claims, wherein the method for mutually linking all data blocks (102, ..., 110) of a second group (120, ..., 126) of data blocks (102, ..., 110) so that each data block (102, ..., 110) of the second group (120, ..., 126) is dependent on all other data blocks (102, ..., 110) of the second group (120, ..., 126) furthermore comprises:

• for the second group (120, ..., 126) of data blocks (102, ..., 110):

∘ determining the functions ($\xi_1$, ..., $\xi_N$) assigned to the data blocks (102, ..., 110) of the second group (120, ..., 126);

○ creating a second combination ($\psi$) of all functions ($\xi_1$, ..., $\xi_N$) assigned to the data blocks (102, ..., 110) of the second group (120, ..., 126); and
○ determining a combination-dependent coefficient ($c_1$, ..., $c_N$) for each function ($\xi_1$, ..., $\xi_N$) of the second combination ($\psi$) so that the second combination ($\psi$) meets a first predefined condition;

• for each data block (102, ..., 110) of the second group (120, ..., 126):

○ determining a control group of data blocks (102, ..., 110) of the second group (120, ..., 126) assigned to the corresponding data block (102, ..., 110); and
○ storing the coefficient ($c_1$, ..., $c_N$) that was determined for the function ($\xi_1$, ..., $\xi_N$) of the corresponding data block (102, ..., 110) in all data blocks (102, ..., 110) of the control group,

wherein the second group (120, ..., 126) of data blocks (102, ..., 110) comprises some of the data blocks (102, ..., 110) of the first group (120, ..., 126) of data blocks (102, ..., 110), and/or
wherein the second group (120, ..., 126) of data blocks (102, ..., 110) comprises all the data blocks (102, ..., 110) of the first group (120, ..., 126) of data blocks (102, ..., 110).

13. A method according to any one of the preceding claims, wherein, for three or more groups (120, ..., 126) of data blocks (102, ..., 110), the data blocks (102, ..., 110) of the respective group (120, ..., 126) are mutually concatenated in such a way that each data block (102, ..., 110) of the corresponding group (120, ..., 126) is dependent on all other data blocks (102, ..., 110) of the corresponding group (120, ..., 126), the individual groups (120, ..., 126) in succession comprising at least one data block (102, ..., 110) of the predecessor group in the sequence, and the last group (120, ..., 126) of the sequence being the predecessor group of the first group (120, ..., 126) of the sequence, so that the data blocks (102, ..., 110) of each of the three or more groups (120, ..., 126) are dependent on the data blocks (102, ..., 110) of all other groups (120, ..., 126), and/or
wherein, for four or more groups (120, ..., 126) of data blocks (102, ..., 110), the data blocks (102, ..., 110) of the respective group (120, ..., 126) are mutually concatenated in such a way that each data block (102, ..., 110) of the corresponding group (120, ..., 126) is dependent on all other data blocks (102, ..., 110) of the corresponding group (120, ..., 126), one of the four or more groups (120, ..., 126) comprising at least one data block (102, ..., 110) of all further of the four or more groups (120, ..., 126), so that the data blocks (102, ..., 110) of each of the four or more groups (120, ..., 126) are dependent on the data blocks (102, ..., 110) of all other groups (120, ..., 126).

14. An electronic data storage system (200) for storing data ($D_1$, ..., $D_N$) in a tamper-proof manner in an electronic memory (206) of the data storage system (200), using a data block structure (100) comprising a plurality of data blocks (102, ..., 110), each of the data blocks (102, ..., 110) being assigned a function ($\xi_1$, ..., $\xi_N$) that is dependent on the data ($D_1$, ..., $D_N$) stored in the corresponding data block (102, ..., 110), the data storage system (200) comprising a processor (202), and machine-readable instructions (204) being stored in the electronic memory (206), an execution of the machine-readable instructions (204) by the processor (202) prompting the data storage system (200) to carry out a method for mutually concatenating all data blocks (102, ..., 110) of a group (120, ..., 126) of data blocks (102, ..., 110), so that each data block (102, ..., 110) of the group (120, ..., 126) is dependent on all other data blocks (102, ..., 110) of the group (120, ..., 126), comprising:

• for the group (120, ..., 126) of data blocks (102, ..., 110):

○ determining the functions ($\xi_1$, ..., $\xi_N$) assigned to the data blocks (102, ..., 110) of the group (120, ..., 126);
○ creating a combination ($\psi$) of all functions ($\xi_1$, ..., $\xi_N$) assigned to the data blocks (102, ..., 110) of the group (120, ..., 126);
○ determining a combination-dependent coefficient ($c_1$, ..., $c_N$) for each function ($\xi_1$, ..., $\xi_N$) of the combination ($\psi$) so that the combination ($\psi$) meets a predefined condition;

• for each data block (102, ..., 110) of the group (120, ..., 126):

○ determining a control group of data blocks (102, ..., 110) of the group (120, ..., 126) assigned to the corresponding data block (102, ..., 110); and
○ storing the coefficient ($c_1$, ..., $c_N$) that was determined for the function ($\xi_1$, ..., $\xi_N$) of the corresponding data block (102, ..., 110) in all data blocks (102, ..., 110) of the control group.

15. A telecommunications system, comprising an electronic data storage system (200) according to claim 14 and a communication interface (214) for communicating via a network (240), at least one of the data blocks (102, ..., 110) of the first group (120, ..., 126) being a data block (102, ..., 110) that is added to the first group (120, ..., 126) and includes the data ($D_1$, ..., $D_N$) to be stored in the data block structure (100), the data storage system (200) being configured to carry out the method for mutually concatenating the data blocks (102, ..., 110) in response to receiving the data ($D_1$, ..., $D_N$) to be stored by way of the communication interface (204) via the network (240), machine-readable instructions (204) preferably furthermore being stored in the electronic memory (206) of the telecommunications system, the execution of which by the processor (202) prompts the data storage system (200) to carry out a method comprising:

- receiving a request for at least a portion of a data block (102, ..., 110) of the group (120, ..., 126) of data blocks (102, ..., 110) from a requesting telecommunications system by way of the communication interface (204) via the network (240);
- checking the data integrity of the requested data block (102, ..., 110), the integrity check comprising:

  ○ determining the functions ($\xi_1$, ..., $\xi_N$) assigned to the data blocks (102, ..., 110) of the group (120., ..., 126);
  ○ creating the first combination ($\psi$) of all functions ($\xi_1$, ..., $\xi_N$) assigned to the data blocks (102, ..., 110) of the group (120, ..., 126);
  ○ determining the combination-dependent coefficient ($c_1$, ..., $c_N$) for the function ($\xi_1$, ..., $\xi_N$) of the data block (102, ..., 110) to be checked as a check coefficient so that the combination ($\psi$) meets the predefined condition;
  ○ comparing the check coefficient to the coefficients ($c_1$, ..., $c_N$) stored in the data blocks (102, ..., 110) of the control group of the data block (102, ..., 110) to be checked for the function ($\xi_1$, ..., $\xi_N$) of the corresponding data block (102, ..., 110); and
  ○ confirming the data integrity of the data block (102, ..., 110) to be checked when a predefined agreement criterion between the check coefficient and the stored coefficients ($c_1$, ..., $c_N$) is met; and

- upon confirmation of the data integrity, transmitting the requested portion of the data block (102, ..., 110) and a confirmation message for confirming the data integrity of the requested data block (102, ..., 110) by way of the communication interface (204) via the network (240) to the requesting telecommunications system, in response to the received request.

## Revendications

1. Procédé d'enregistrement de données ($D_1$, ..., $D_N$) sécurisé contre les manipulations dans une mémoire électronique (206) moyennant l'emploi d'une structure de chaîne de blocs (100), laquelle comprend une multiplicité de blocs de données (102, ..., 110), dans lequel une fonction ($\xi_1$, ..., $\xi_N$) est associée à chacun des blocs de données (102, ..., 110), laquelle est dépendante des données ($D_1$, ..., $D_N$) stockées dans le bloc de données (102, ..., 110) correspondant,

où le procédé, pour la combinaison réciproque de tous les blocs de données (102, ..., 110) d'un premier groupe (120, ..., 126) de blocs de données (102, ..., 110), de sorte que chaque bloc de données (102, ..., 110) du premier groupe (120, ..., 126) soit dépendant de tous les autres blocs de données (102, ..., 110) du premier groupe (120, ..., 126), comprend :

- pour le premier groupe (120, ..., 126) de blocs de données (102, ..., 110) :

  ○ la détermination des fonctions ($\xi_1$, ..., $\xi_N$), lesquelles sont associées aux blocs de données (102, ..., 110) du premier groupe (120, ..., 126),
  ○ l'établissement d'une première combinaison ($\psi$) de toutes les fonctions ($\xi_1$, ..., $\xi_N$), lesquelles sont associées aux blocs de données (102, ..., 110) du premier groupe (120, ..., 126),
  ○ la détermination d'un coefficient dépendant de la combinaison ($c_1$, ..., $c_N$) pour chaque fonction ($\xi_1$, ..., $\xi_N$) de la première combinaison ($\psi$) de sorte que la première combinaison ($\psi$) remplisse une première condition prédéfinie,

- pour chaque bloc de données (102, ..., 110) du premier groupe (120, ..., 126) :

  ○ la détermination d'un groupe de commande de blocs de données (102, ..., 110) du premier groupe (120, ..., 126) associé au bloc de données (102, ..., 110) correspondant,

∘ l'enregistrement du coefficient ($c_1$, ..., $c_N$), lequel a été déterminé pour la fonction ($\xi_1$, ..., $\xi_N$) du bloc de données (102, ..., 110), dans tous les blocs de données (102, ..., 110) du groupe de commande.

2. Procédé selon la revendication 1, dans lequel les groupes de commande comprennent respectivement tous les blocs de données (102, ..., 110) du premier groupe (120, ..., 126) sauf le bloc de données (102, ..., 110) auquel ils sont associés, et/ou

dans lequel les groupes de commande, lesquels sont associés aux blocs de données (102, ..., 110) d'un premier groupe de commande, comprennent respectivement le bloc de données, lequel est associé au premier groupe de commande,
dans lequel, de préférence, dans le cas où à chaque groupe de commande est respectivement mise en œuvre une combinaison bidirectionnelle entre le bloc de données (102, ..., 110), auquel est associé le groupe de commande correspondant, et chacun des blocs de données (102, ..., 110) compris par le groupe de commande.

3. Procédé selon l'une des revendications précédentes, dans lequel le premier groupe (120, ..., 126) comprend trois ou plus de blocs de données (102, ..., 110), et/ou

dans lequel au moins un des groupes de commande comprend trois ou plus de blocs de données (102, ..., 110), et/ou
dans lequel la combinaison ($\psi$) est établie moyennant l'emploi d'une fonction de combinaison permettant de relier toutes les fonctions ($\xi_1$, ..., $\xi_N$) associées à tous les blocs de données (102, ..., 110) du premier groupe (120, ..., 126), et/ou
dans lequel la première condition prédéfinie comprend une condition de valeur extrême,
dans lequel le nombre de blocs de données (102, ..., 110), lesquels sont compris par le premier groupe (120, ..., 126), dépend d'un niveau de sécurité d'au moins un bloc de données (102, ..., 110) du premier groupe (120, ..., 126).

4. Procédé selon l'une des revendications précédentes, dans lequel une association des blocs de données (102, ..., 110) avec le premier groupe (120, ..., 126) a lieu moyennant l'emploi d'un premier critère d'association,
dans lequel, de préférence, le premier critère d'association comprend une association des contenus des blocs de données (102, ..., 110) correspondants dans une catégorie de contenu commune, une association des contenus des blocs de données (102, ..., 110) correspondants dans un niveau de sécurité commun, une association des propriétaires des blocs de données (102, ..., 110) correspondants dans un groupe de propriétaires commun, une association des contenus des blocs de données (102, ..., 110) correspondants dans une relation de dépendance et/ou une association des propriétaires des blocs de données (102, ..., 110) dans une relation de dépendance.

5. Procédé selon l'une des revendications précédentes, dans lequel le nombre de blocs de données (102, ..., 110) lesquels comprennent les groupes de commande, dépend d'un niveau de sécurité du bloc de données (102, ..., 110), auquel est associé le groupe de commande correspondant, et/ou

dans lequel la détermination des blocs de données (102, ..., 110), lesquels comprennent respectivement les groupes de commande, a lieu moyennant l'emploi d'un deuxième critère d'association,
dans lequel, de préférence le deuxième critère d'association comprend une association des contenus des blocs de données (102, ..., 110) correspondants dans une catégorie de contenu commune, une association des contenus des blocs de données (102, ..., 110) correspondants dans un niveau de sécurité commun, une association des propriétaires des blocs de données (102, ..., 110) correspondants dans un groupe de propriétaires commun, une association des contenus des blocs de données (102, ..., 110) correspondants dans une relation de dépendance et/ou une association des propriétaires des blocs de données (102, ..., 110) correspondants dans une relation de dépendance.

6. Procédé selon l'une des revendications précédentes, dans lequel au moins un propriétaire est associé à chaque bloc de données (102, ..., 110) et dans lequel l'enregistrement des coefficients ($c_1$, ..., $c_N$) dans les blocs de données (102, ..., 110) est respectivement conditionné à une autorisation de l'au moins un propriétaire du bloc de données (102, ..., 110) correspondant,

dans lequel, de préférence, les autorisations comprennent respectivement une signature du coefficient ($c_1$, ..., $c_N$) correspondant avec une clé de signature privée du propriétaire du bloc de données (102, ..., 110), auquel doit être ajouté le coefficient ($c_1$, ..., $c_N$), et/ou

dans lequel, de préférence, les propriétaires des blocs de données (102, ..., 110) possèdent respectivement une autorisation d'écriture exclusive pour l'ajout de données ($D_1$, ..., $D_N$) aux blocs de données (102, ..., 110) respectifs.

7. Procédé selon l'une des revendications précédentes, où le procédé, pour la vérification de l'intégrité des données d'un des blocs de données (102, ..., 110) du premier groupe (120, ..., 126) de blocs de données (102, ..., 110), comprend en outre :

  ∘ la détermination des fonctions ($\xi_1$, ..., $\xi_N$), lesquelles sont associées aux blocs de données (102, ..., 110) du premier groupe (120, ..., 126),
  ∘ l'établissement de la première combinaison ($\psi$) de toutes les fonctions ($\xi_1$, ..., $\xi_N$), lesquelles sont associées aux blocs de données (102, ...110) du premier groupe (120, ..., 126),
  ∘ la détermination du coefficient dépendant de la combinaison ($c_1$, ..., $c_N$) pour la fonction ($\xi_1$, ..., $\xi_N$) du bloc de données (102, ..., 110) à vérifier en tant que coefficient de vérification de sorte que la première combinaison ($\psi$) remplisse la première condition prédéfinie,
  ∘ la comparaison du coefficient de vérification avec les coefficients ($c_1$, ..., $c_N$) stockés dans les blocs de données (102, ..., 110) du groupe de commande du bloc de données (102, ..., 110) à vérifier pour la fonction ($\xi_1$, ..., $\xi_N$) du bloc de données (102, ..., 110) correspondant,
  ∘ dans le cas où un critère de concordance prédéfini entre le coefficient de vérification et les coefficients ($c_1$, ..., $c_N$) stockés est vérifié, la confirmation de l'intégrité des données du bloc de données (102, ..., 110) à vérifier.

8. Procédé selon la revendication 7, dans lequel le critère de concordance prédéfini est rempli dans le cas où il y a une identité entre le coefficient de vérification et au moins un des coefficients ($c_1$, ..., $c_N$) enregistrés,

  dans lequel, de préférence, le critère de concordance prédéfini est rempli dans le cas où il y a l'identité entre le coefficient de vérification et tous les coefficients ($c_1$, ..., $c_N$) stockés, et/ou
  dans lequel l'intégrité des données de tous les blocs de données (102, ..., 110) du premier groupe (120, ..., 126) est vérifiée.

9. Procédé selon l'une des revendications 1 à 6, où le procédé, pour la vérification de l'intégrité des données des blocs de données (102, ..., 110) du premier groupe (120, ..., 126) de blocs de données (102, ..., 110), comprend en outre :

  ∘ la détermination des fonctions ($\xi_1$, ..., $\xi_N$), lesquelles sont associées aux blocs de données (102, ..., 110) du premier groupe,
  ∘ l'établissement de la première combinaison ($\psi$) de toutes les fonctions ($\xi_1$, ..., $\xi_N$), lesquelles sont associées aux blocs de données (102, ..., 110) du premier groupe (120, ..., 126),
  ∘ la vérification si la première combinaison ($\psi$) établie avec les coefficients ($c_1$, ..., $c_N$) enregistrés dans les blocs de données (102, ..., 110) des groupes de commande du premier groupe (120, ..., 126) remplit la condition prédéfinie,
  ∘ dans le cas où la première condition prédéfinie est remplie, la confirmation de l'intégrité de donnée des blocs de données (102, ..., 110) du premier groupe (120, ..., 126).

10. Procédé selon l'une des revendications 7 à 9, dans lequel la vérification de l'intégrité des données est effectuée avant une lecture des données ($D_1$, ..., $D_N$) à partir d'un ou de plusieurs blocs de données (102, ..., 110) du premier groupe (120, ..., 126) au moins pour les blocs de données (102, ..., 110) à partir desquels des données ($D_1$, ..., $D_N$) sont lues.

11. Procédé selon l'une des revendications précédentes, où le procédé comprend en outre :

  la modification des données ($D_1$, ..., $D_N$) d'un bloc de données (102, ..., 110) du premier groupe (120, ..., 126),
  ∘ la détermination d'une fonction ($\xi_1$, ..., $\xi_N$) mise à jour, laquelle est associée au bloc de données (102, ..., 110) modifié et dépend des données ($D_1$, ..., $D_N$) modifiées du bloc de données (102, ..., 110) modifié,
  ∘ l'établissement d'une combinaison ($\psi$) mise à jour de toutes les fonctions ($\xi_1$, ..., $\xi_N$), lesquelles sont associées aux blocs de données (102, ...110) du premier groupe (120, ..., 126), où la combinaison ($\psi$) mise à jour comprend la fonction ($\xi_1$, ..., $\xi_N$) mise à jour pour le bloc de données (102, ..., 110) modifié,
  ∘ la détermination d'un coefficient dépendant de la combinaison ($c_1$, ..., $c_N$) mis à jour pour chaque fonction ($\xi_1$, ..., $\xi_N$) de la combinaison ($\psi$) mise à jour de sorte que la combinaison ($\psi$) mise à jour remplisse la première condition prédéfinie,

∘ le remplacement des coefficients ($c_1$, ..., $c_N$) stockés dans les blocs de données (102, ..., 110) des groupes de commande du premier groupe (120, ..., 126), lesquels ont été déterminés pour la première combinaison ($\psi$) respectivement par un coefficient ($c_1$, ..., $c_N$) actualisé, lequel a été déterminé pour la combinaison ($\psi$) mise à jour, et/ou

où le procédé comprend en outre :

∘ la détermination d'un bloc de données (102, ..., 110) à effacer du premier groupe (120, ..., 126),
∘ l'effacement des coefficients ($c_1$, ..., $c_N$) de la fonction ($\xi_1$, ..., $\xi_N$) du bloc de données (102, ..., 110) à effacer dans les blocs de données des groupes de commande du bloc de données (102, ..., 110) à effacer,
∘ l'effacement du bloc de données (102, ..., 110) à effacer,
∘ l'établissement de la combinaison ($\psi$) mise à jour de toutes les fonctions ($\xi_1$, ..., $\xi_N$), lesquelles sont associées aux blocs de données (102, ..., 110) restants du premier groupe (120, ..., 126),
∘ la détermination d'un coefficient ($c_1$, ..., $c_N$) dépendant de la combinaison mis à jour pour chaque fonction ($\xi_1$, ..., $\xi_N$) de la combinaison ($\psi$) mise à jour de sorte que la combinaison ($\psi$) mise à jour remplisse la première condition prédéfinie,
∘ le remplacement des coefficients ($c_1$, ..., $c_N$) stockés dans les blocs de données (102, ..., 110) restants des groupes de commande du premier groupe (120, ..., 126), lesquels ont été déterminés pour la première combinaison ($\psi$), respectivement par des coefficients ($c_1$, ..., $c_N$) mis à jour, lesquels ont été déterminés pour la combinaison ($\psi$) mise à jour, et/ou

où le procédé comprend en outre :

∘ l'ajout d'un bloc de données (102, ..., 110) supplémentaire au premier groupe (120, ..., 126) de blocs de données (102, ..., 110),
∘ la détermination d'une fonction ($\xi_1$, ..., $\xi_N$) supplémentaire, laquelle est associée au bloc de données (102, ..., 110) supplémentaire et dépend des données ($D_1$, ..., $D_N$) du bloc de données (102, ..., 110) supplémentaire,
∘ l'établissement d'une combinaison ($\psi$) élargie de toutes les fonctions ($\xi_1$, ..., $\xi_N$), lesquelles sont associées aux blocs de données (102, ..., 110) du premier groupe (120, ..., 126), à partir de la première combinaison ($\psi$) et de la fonction ($\xi_1$, ..., $\xi_N$) supplémentaire,
∘ la détermination d'un coefficient dépendant de la combinaison ($c_1$, ..., $c_N$) élargi pour chaque fonction ($\xi_1$, ..., $\xi_N$) de la combinaison ($\psi$) élargie de sorte que la combinaison ($\psi$) élargie remplisse la première condition prédéfinie,
∘ le remplacement des coefficients ($c_1$, ..., $c_N$) stockés dans les blocs de données (102, ..., 110) des groupes de commande du premier groupe (120, ..., 126), lesquels ont été déterminés pour la première combinaison ($\psi$) respectivement par un coefficient ($c_1$, ..., $c_N$) élargi, lequel a été déterminé pour la combinaison ($\psi$) élargie,
∘ la détermination d'un groupe de commande supplémentaire de blocs de données (102, ..., 110) du premier groupe (120, ..., 126) pour le bloc de données (102, ..., 110) supplémentaire,
∘ l'enregistrement du coefficient ($c_1$, ..., $c_N$) élargi déterminé pour la fonction ($\xi_1$, ..., $\xi_N$) supplémentaire du bloc de données (102, ..., 110) supplémentaire dans tous les blocs de données (102, ..., 110) du groupe de commande supplémentaire.

12. Procédé selon l'une des revendications précédentes, où le procédé, pour la combinaison réciproque de tous les blocs de données (102, ..., 110) d'un deuxième groupe (120, ..., 126) de blocs de données (102, ..., 110) de sorte que chaque bloc de données (102, ..., 110) du deuxième groupe (120, ..., 126) dépende de tous les autres blocs de données (102, ..., 110) du deuxième groupe (120, ..., 126), comprend en outre :

• pour le deuxième groupe (120, ..., 126) de blocs de données (102, ..., 110) :

∘ la détermination des fonctions ($\xi_1$, ..., $\xi_N$), lesquelles sont associées aux blocs de données (102, ..., 110) du deuxième groupe (120, ..., 126),
∘ l'établissement d'une deuxième combinaison ($\psi$) de toutes les fonctions ($\xi_1$, ..., $\xi_N$), lesquelles sont associées aux blocs de données (102, ... 110) du deuxième groupe (120, ..., 126),
∘ la détermination d'un coefficient dépendant de la combinaison ($c_1$, ..., $c_N$) pour chaque fonction ($\xi_1$, ..., $\xi_N$) de la deuxième combinaison ($\psi$) de sorte que la deuxième combinaison ($\psi$) remplisse une première condition prédéfinie,

• pour chaque bloc de données (102, ..., 110) du deuxième groupe (120, ..., 126) :

∘ la détermination d'un groupe de commande de blocs de données (102, ..., 110) du deuxième groupe (120, ..., 126) associé au bloc de données (102, ..., 110) correspondant,
∘ l'enregistrement du coefficient ($c_1$, ..., $c_N$), lequel a été déterminé pour la fonction ($\xi_1$, ..., $\xi_N$) du bloc de données (102, ..., 110) correspondant dans tous les blocs de données (102, ..., 110) du groupe de commande,

dans lequel, de préférence, le deuxième groupe (120, ..., 126) de blocs de données (102, ..., 110) comprend une partie des blocs de données (102, ..., 110) du premier groupe (120, ..., 126) de blocs de données (102, ..., 110), et/ou

dans lequel, de préférence, le deuxième groupe (120, ..., 126) de blocs de données (102, ..., 110) comprend tous les blocs de données (102, ..., 110) du premier groupe (120, ..., 126) de blocs de données (102, ..., 110).

**13.** Procédé selon l'une des revendications précédentes, dans lequel, pour trois ou plus de groupes (120, ..., 126) de blocs de données (102, ..., 110), les blocs de données (102, ..., 110) du groupe (120, ..., 126) respectif sont combinés de manière réciproque de telle façon que chaque bloc de données (102, ..., 110) du groupe (120, ..., 126) correspondant dépende de tous les autres blocs de données (102, ..., 110) du groupe (120, ..., 126) respectif, où les groupes (120, ..., 126) individuels de la rangée comprennent respectivement au moins un bloc de données (102, ..., 110) du groupe précédent dans la rangée et le dernier groupe (120, ..., 126) de la rangée est le groupe précédent du premier groupe (120, ..., 126) de la rangée, de sorte que les blocs de données (102, ..., 110) de chacun des trois ou plus de groupes (120, ..., 126) dépendent des blocs de données (102, ..., 110) de tous les autres groupes (120, ..., 126), et/ou
dans lequel, pour quatre ou plus de groupes (120, ..., 126) de blocs de données (102, ..., 110), les blocs de données (102, ..., 110) du groupe (120, ..., 126) respectif sont combinés de manière réciproque de telle façon que chaque bloc de données (102, ..., 110) du groupe (120, ..., 126) correspondant dépende de tous les autres blocs de données (102, ..., 110) du groupe (120, ..., 126) respectif, où un des quatre ou plus de groupes (120, ..., 126) comprend au moins un bloc de données (102, ..., 110) de tous les autres parmi les quatre ou plus de groupes (120, ..., 126), de sorte que les blocs de données (102, ..., 110) de chacun des quatre ou plus de groupes (120, ..., 126) dépendent des blocs de données (102, ..., 110) de tous les autres groupes (120, ..., 126).

**14.** Système d'enregistrement de données (200) électronique permettant l'enregistrement de données ($D_1$, ..., $D_N$) sécurisé contre les manipulations dans une mémoire électronique (206) du système d'enregistrement de données (200) électronique moyennant l'emploi d'une structure de chaîne de blocs (100), laquelle comprend une multiplicité de blocs de données (102, ..., 110), dans lequel une fonction ($\xi_1$, ..., $\xi_N$) est associée à chacun des blocs de données (102, ..., 110), laquelle est dépendante des données ($D_1$, ..., $D_N$), stockées dans le bloc de données (102, ..., 110) correspondant, où le système d'enregistrement de données (200) comprend un processeur (202) et où des instructions (204) lisibles par machine sont enregistrées dans la mémoire électronique (206), où une exécution des instructions (204) lisibles par machine par le processeur (202) fait en sorte que le système d'enregistrement de données (200) exécute un procédé permettant la combinaison réciproque de tous les blocs de données (102, ..., 110) d'un groupe (120, ..., 126) de blocs de données (102, ..., 110), de sorte que chaque bloc de données (102, ..., 110) du groupe (120, ..., 126) est dépendant de tous les autres blocs de données (102, ..., 110) du groupe (120, ..., 126), lequel comprend :

• pour le groupe (120, ..., 126) de blocs de données (102, ..., 110) :

∘ la détermination des fonctions ($\xi_1$, ..., $\xi_N$), lesquelles sont associées aux blocs de données (102, ..., 110) du groupe (120, ..., 126),
∘ l'établissement d'une combinaison ($\psi$) de toutes les fonctions ($\xi_1$, ..., $\xi_N$), lesquelles sont associées aux blocs de données (102, ...110) du groupe (120, ..., 126),
∘ la détermination d'un coefficient dépendant de la combinaison ($c_1$, ..., $c_N$) pour chaque fonction ($\xi_1$, ..., $\xi_N$) de la combinaison ($\psi$) de sorte que la combinaison ($\psi$) remplisse une condition prédéfinie,

• pour chaque bloc de données (102, ..., 110) du groupe (120, ..., 126) :

∘ la détermination d'un groupe de commande de blocs de données (102, ..., 110) du groupe (120, ..., 126) associé au bloc de données (102, ..., 110) correspondant,
∘ l'enregistrement du coefficient ($c_1$, ..., $c_N$), lequel a été déterminé pour la fonction ($\xi_1$, ..., $\xi_N$) du bloc de données (102, ..., 110) correspondant, dans tous les blocs de données (102, ..., 110) du groupe de commande.

**15.** Système de télécommunications, lequel comprend un système d'enregistrement de données (200) électronique selon la revendication 14 et une interface de communication (214) pour communiquer par le biais d'un réseau (240), dans lequel au moins un des blocs de données (102, ..., 110) du premier groupe (120, ..., 126) est un bloc de données (102, ..., 110) ajouté en supplément au premier groupe (120, ..., 126) avec des données ($D_1$, ..., $D_N$) à enregistrer dans la structure de blocs de données (100), dans lequel le système d'enregistrement de données (200) est conçu pour exécuter le procédé de combinaison réciproque des blocs de données (102, ..., 110) suite à une réception des données ($D_1$, ..., $D_N$) à enregistrer au moyen de l'interface de communication (204) par le biais du réseau (240),

dans lequel, de préférence, des instructions (204) lisibles par machine sont en outre enregistrées dans la mémoire électronique (206) du système de communication, dont l'exécution par le processeur (202) fait en sorte que le système d'enregistrement de données exécute un procédé, lequel comprend.

- la réception d'une demande d'au moins une partie d'un bloc de données (102, ..., 110) du groupe (120, ..., 126) de blocs de données (102, ..., 110) au moyen de l'interface de communication (204) par le biais du réseau (240) par un système de télécommunication demandeur,
- la vérification de l'intégrité des données du bloc de données (102, ..., 110) demandé, où la vérification de l'intégrité comprend :

  ◦ la détermination des fonctions ($\xi_1$, ..., $\xi_N$), lesquelles sont associées aux blocs de données (102, ..., 110) du groupe (120, ..., 126),
  ◦ l'établissement de la première combinaison ($\psi$) de toutes les fonctions ($\xi_1$, ..., $\xi_N$), lesquelles sont associées aux blocs de données (102, ..., 110) du groupe (120, ..., 126),
  ◦ la détermination du coefficient dépendant de la combinaison ($c_1$, ..., $c_N$) pour chaque fonction ($\xi_1$, ..., $\xi_N$) du bloc de données (102, ..., 110) à vérifier en tant que coefficient de vérification de sorte que la combinaison ($\psi$) remplisse la condition prédéfinie,
  ◦ la comparaison du coefficient de vérification avec les coefficients ($c_1$, ..., $c_N$) stockés dans les blocs de données (102, ..., 110) du groupe de commande du bloc de données (102, ..., 110) à vérifier pour la fonction ($\xi_1$, ..., $\xi_N$) du bloc de données (102, ..., 110) correspondant,
  ◦ dans le cas où un critère de concordance prédéfini entre le coefficient de vérification et les coefficients ($c_1$, ..., $c_N$) stockés est vérifié, la confirmation de l'intégrité des données du bloc de données (102, ..., 110) à vérifier,

- suite à la confirmation de l'intégrité des données, l'envoi de la partie demandée des blocs de données (102, ..., 110) ainsi que d'un message de confirmation pour confirmer l'intégrité des données du bloc de données (102, ..., 110) demandé au moyen de l'interface de communication (204) par le biais du réseau (240) au système de télécommunication demandeur en réponse à la demande reçue.

Fig. 1A

Fig. 1B

Fig. 1C

Fig. 1D

Fig. 2

| Bestimmen datenblockabhängiger Funktionen | 300 |
| --- | --- |

↓

| Erstellen Kombination der datenblockabhängigen Funktionen | 302 |
| --- | --- |

↓

| Bestimmen kombinationsabhängiger Koeffizienten | 304 |
| --- | --- |

↓

| Bestimmen von Kontrollgruppen | 306 |
| --- | --- |

↓

| Speichern der kombinationsabhängiger Koeffizienten | 308 |
| --- | --- |

Fig. 3

| Bestimmen datenblockabhängiger Funktionen | 400 |

↓

| Erstellen Kombination der datenblockabhängigen Funktionen | 402 |

↓

| Bestimmen Prüfkoeffizient | 404 |

NEIN

Übereinstimmungskriterium erfüllt? 406

JA

| Bestätigen Datenintegrität | 408 |

| Verneinen Datenintegrität | 410 |

Fig. 4

| Bestimmen datenblockabhängiger Funktionen | 500 |

↓

| Erstellen Kombination der datenblockabhängigen Funktionen | 502 |

↓

| Einsetzten gespeicherte Koeffizienten | 504 |

↓

506

NEIN

Bedingung erfüllt?

JA ↓

| Bestätigen Datenintegrität | 508 |

| Verneinen Datenintegrität | 510 |

Fig. 5

| | |
|---|---|
| Ändern Daten eines Datenblocks | <u>600</u> |

| | |
|---|---|
| Bestimmen aktualisierte datenabhängige Funktion | <u>602</u> |

| | |
|---|---|
| Erstellen einer aktualisierten Kombination | <u>604</u> |

| | |
|---|---|
| Bestimmen aktualisierte kombinationsabhängige Koeffizienten | <u>606</u> |

| | |
|---|---|
| Ersetzen gespeicherter Koeffizienten | <u>608</u> |

Fig. 6

| Bestimmen zu löschender Datenblock | 700 |

↓

| Löschen zugehöriger Koeffizienten | 702 |

↓

| Löschen des zu löschenden Datenblocks | 704 |

↓

| Erstellen aktualisierte Kombination | 706 |

↓

| Bestimmen aktualisierte kombinationsabhängige Koeffizienten | 708 |

↓

| Ersetzen Koeffizienten in verbleibenden Kontrollgruppen | 710 |

Fig. 7

| | |
|---|---|
| Bestimmen zusätzliche datenabhängige Funktion | <u>800</u> |

| | |
|---|---|
| Erstellen erweiterte Kombination | <u>802</u> |

| | |
|---|---|
| Bestimmen erweiterte kombinationsabhängige Koeffizienten | <u>804</u> |

| | |
|---|---|
| Ersetzen gespeicherter Koeffizienten | <u>806</u> |

| | |
|---|---|
| Bestimmen zusätzliche Kontrollgruppe | <u>808</u> |

| | |
|---|---|
| Speichern der zusätzlichen erweiterten Koeffizienten | <u>810</u> |

Fig. 8

```
┌─────────────────────────────────────────────────────────┐
│ Bestimmen von Datenblock für Koeffizienten          900  │
└─────────────────────────────────────────────────────────┘
                            │
                            ▼
┌─────────────────────────────────────────────────────────┐
│ Senden Zustimmungsanfrage an Eigentümer             902  │
└─────────────────────────────────────────────────────────┘
                            │
                            ▼
┌─────────────────────────────────────────────────────────┐
│ Empfangen Antwort                                   904  │
└─────────────────────────────────────────────────────────┘
                            │
                                                  906
          NEIN              ▼
              ◇─────────────────────────────────◇
               ╲      Zustimmung erfolgt?      ╱
                ◇───────────────────────────◇
              │             │
              │            JA │
              │             ▼
              │  ┌─────────────────────────────────────┐
              │  │ Ändern Koeffizient             908  │
              │  └─────────────────────────────────────┘
              │
              │  ┌─────────────────────────────────────┐
              └─▶│ Erzeugen Fehlermeldung         910  │
                 └─────────────────────────────────────┘
```

Fig. 9

| Bestimmen von Datenblock für Koeffizienten | 1000 |

| Senden Schreibanfrage an Eigentümer | 1002 |

1004

NEIN

Schreibanfrage ok?

JA

| Ändern Koeffizient durch Eigentümer | 1006 |

| Erzeugen Fehlermeldung | 1008 |

Fig. 10

| Computersystem | 200 |
| Prozessor | 202 |
| Instruktionen | 204 |
| | 206 |
| Speicher | 208 |
| Funktionen | |
| Daten | 210 |
| Datenblockstruktur | 100 |
| Schnittstelle | 214 |

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Mastering Bitcoin. The Blockchain. 161

- *Bitcoin: Peer-to-Peer Electronic Cash System, https://bitcoin.org/bitcoin.pdf*